# EUROPÄISCHE PATENTSCHRIFT

(11) **EP 1 532 210 B1**
(45) Veröffentlichungstag und Bekanntmachung des Hinweises auf die Patenterteilung: **22.11.2006**
(21) Anmeldenummer: 03797212.2
(22) Anmeldetag: 25.07.2003
(51) Int. Cl.: C09B 57/08

(54) **RYLENFARBSTOFFE**
RYLENE DYES
COLORANTS A BASE DE RYLENE

(30) Priorität: 20.08.2002 DE 10238994
(43) Veröffentlichungstag der Anmeldung: 25.05.2005
(73) Patentinhaber: BASF Aktiengesellschaft, 67056 Ludwigshafen (DE); Max-Planck-Gesellschaft zur Förderung der Wissenschaften e.V., 80539 München (DE)
(72) Erfinder: KRIEGER, Matthias, 79539 Lörrach (DE); BÖHM, Arno, 68305 Mannheim (DE); SIGGEL, Lorenz, 69121 Heidelberg (DE); BECKER, Stefan, 68167 Mannheim (DE); MÜLLEN, Klaus, 50939 Köln (DE); KOHL, Christopher, 55127 Mainz (DE)
(86) Internationale Anmeldenummer: PCT/EP2003/008191
(87) Internationale Veröffentlichungsnummer: WO 2004/026965

(56) Entgegenhaltungen:
- EP-A- 0 999 239
- WO-A-01/16109
- WO-A-02/068538
- DE-A- 2 212 370
- KOHL, C. ET AL.: "Bis(rylenedicarboximid)-a,d-1,5-diaminoan thraquinones as unique infrared absorbing dyes" CHEMICAL COMMUNICATIONS, 2002, Seiten 2778-2779, XP002256670

## Beschreibung

Die vorliegende Erfindung betrifft neue Rylenfarbstoffe der allgemeinen Formel I 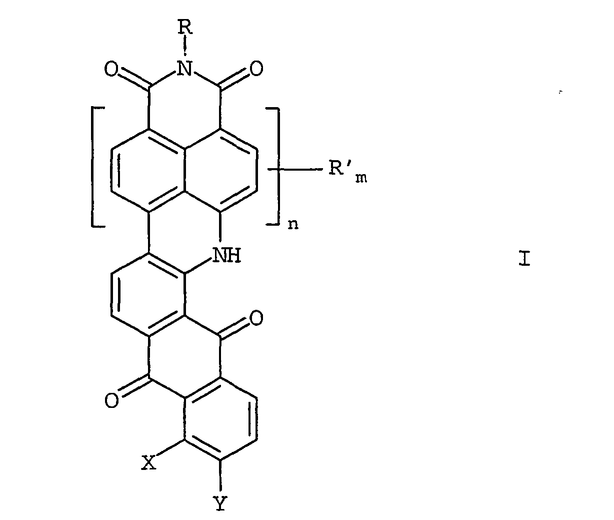 in der die Variablen folgende Bedeutung haben:
- R: Wasserstoff;
C₁-C₃₀-Alkyl, dessen Kohlenstoffkette durch eine oder mehrere Gruppierungen -O-, -S-, -NR¹-, -CO- und/oder -SO₂- unterbrochen sein kann und das durch Carboxy, Sulfo, Hydroxy, Cyano, C₁-C₆-Alkoxy und/oder einen über ein Stickstoffatom gebundenen, 5- bis 7-gliedrigen heterocyclischen Rest, der weitere Heteroatome enthalten und aromatisch sein kann, ein- oder mehrfach substituiert sein kann;
C₅-C₈-Cycloalkyl, dessen Kohlenstoffgerüst durch eine oder mehrere Gruppierungen -O-, -S- und/oder -NR¹- unterbrochen sein kann und das durch C₁-C₆-Alkyl ein- oder mehrfach substituiert sein kann;
Aryl oder Hetaryl, das jeweils durch C₁-C₁₈-Alkyl, C₁-C₆-Alkoxy, Halogen, Hydroxy, Cyano, Carboxy, -CONHR², -NHCOR² und/oder Aryl- oder Hetarylazo, das jeweils durch C₁-C₁₀-Alkyl, C₁-C₆-Alkoxy, Halogen, Hydroxy, Cyano und/oder Carboxy substituiert sein kann, ein- oder mehrfach substituiert sein kann;
- R': Brom; Cyano; -NR³₂;
Aryloxy, Arylthio, Hetaryloxy oder Hetarylthio, das jeweils ein- oder mehrfach durch C₁-C₁₂-Alkyl, C₁-C₁₂-Alkoxy, Cyano, -CONHR² und/oder -NHCOR² substituiert sein kann;
C₃-C₁₈-Alk-1-inyl, dessen Kohlenstoffkette durch eine oder mehrere Gruppierungen -O-, -S-, -NR¹-, -CO- und/oder -SO₂- unterbrochen sein kann und das durch -COOR¹, -SO₃R¹, Hydroxy, Cyano, C₁-C₆-Alkoxy, C₅-C₈-Cycloalkyl, Aryl und/oder einen über ein Stickstoffatom gebundenen, 5- bis 7-gliedrigen heterocyclischen Rest, der weitere Heteroatome enthalten und aromatisch sein kann, ein- oder mehrfach substituiert sein kann;
- R¹: Wasserstoff oder C₁-C₆-Alkyl;
- R²: Wasserstoff; C₁-C₁₈-Alkyl; Aryl oder Hetaryl, das jeweils durch C₁-C₈-Alkyl, C₁-C₆-Alkoxy, Halogen, Hydroxy und/oder Cyano substituiert sein kann;
- R³: Wasserstoff; C₁-C₁₈-Alkyl; Aryl oder Hetaryl, das jeweils durch C₁-C₈-Alkyl, C₁-C₆-Alkoxy, Halogen, Hydroxy und/oder Cyano substituiert sein kann; beide Reste R³ zu einem das Stickstoffatom enthaltenden und über dieses gebundenen 5- bis 7-gliedrigen, heterocyclischen Rest verbunden;
- X,: Ybeide Wasserstoff oder unter Ausbildung eines Sechsrings miteinander verbunden zu einem Rest der Formel Ia 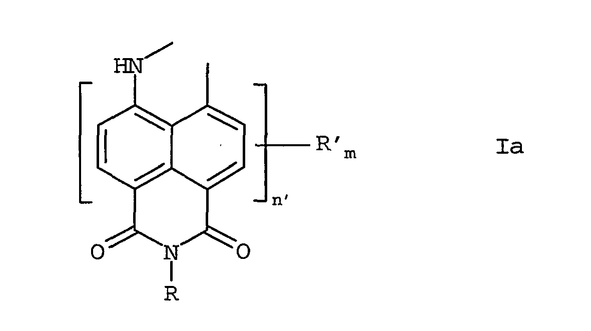 wobei X der Gruppe -NH- und Y der weiteren freien chemischen Bindung entspricht;
- n: 2, 3, 4 oder zusätzlich 1, wenn X und Y einen Rest der Formel Ia bedeuten;
- n': 1 bis 4;
- m: 0 bis 6,
sowie die Herstellung der Rylenfarbstoffe I und ihre Verwendung zur Einfärbung von hochmolekularen organischen und anorganischen Materialien, insbesondere von Kunststoffen, Lacken und Druckfarben, als Dispergierhilfsmittel, Pigmentadditive für organische Pigmente und Zwischenprodukte für die Herstellung von Pigmentadditiven, zur Herstellung farbiger oder im nahinfraroten Bereich des elektromagnetischen Spektrums absorbierender wäßriger Polymerisatdispersionen und als Photoleiter in der Elektrophotographie.

Aminoanthrachinon-verknüpfte Rylen-Küpenfarbstoffe sind seit langem bekannt. In den DRP 607 341 und US-A-2 069 663 sind Rylen-Küpenfarbstoffe auf der Basis von Naphthalindicarbonsäureimiden beschrieben, die Baumwolle aus roter bzw. rotvioletter Küpe blaugrün färben und ausgehend von 4-Bromnaphthalindicarbonsäureanhydrid durch anschließende Imidierung des anhydridischen Kupplungsprodukts mit 1-Aminoanthrachinon hergestellt werden. Aminoanthrachinon-verknüpfte Rylenfarbstoffe der höheren Homologen des Naphthalins sowie verdoppelte aminonanthrachinon-verknüpfte Rylen-Küpenfarbstoffe sind jedoch nicht bekannt und können auch aufgrund der mit zunehmender Rylenlänge abnehmenden Löslichkeit der Rylendicarbonsäureanhydride nicht nach den für Naphthalindicarbonsäureanhydrid beschriebenen Herstellungsmethoden erhalten werden.

Der Erfindung lag die Aufgabe zugrunde, Rylenfarbstoffe bereitzustellen, die im langwelligen, d.h. im roten und infraroten, Bereich des elektromagnetischen Spektrums absorbieren.

Demgemäß wurden die Rylenfarbstoffe der eingangs definierten Formel I gefunden.

Bevorzugte Rylenfarbstoffe sind dem Unteranspruch zu entnehmen.

Weiterhin wurde ein Verfahren zur Herstellung der Rylenfarbstoffe der Formel I' 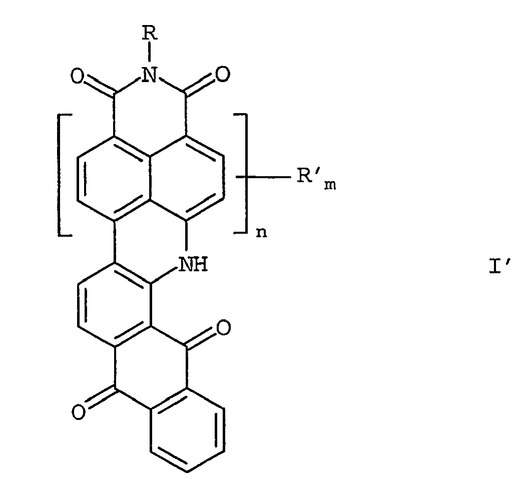 in der die Variablen die folgende Bedeutung haben:
- R: Wasserstoff;
C₁-C₃₀-Alkyl, dessen Kohlenstoffkette durch eine oder mehrere Gruppierungen -O-, -S-, -NR¹-, -CO- und/oder -SO₂- unterbrochen sein kann und das durch Carboxy, Sulfo, Hydroxy, Cyano, C₁-C₆-Alkoxy und/oder einen über ein Stickstoffatom gebundenen, 5- bis 7-gliedrigen heterocyclischen Rest, der weitere Heteroatome enthalten und aromatisch sein kann, ein- oder mehrfach substituiert sein kann;
C₅-C₈-Cycloalkyl, dessen Kohlenstoffgerüst durch eine oder mehrere Gruppierungen -O-, -S- und/oder -NR¹- unterbrochen sein kann und das durch C₁-C₆-Alkyl ein- oder mehrfach substituiert sein kann;
Aryl oder Hetaryl, das jeweils durch C₁-C₁₈-Alkyl, C₁-C₆-Alkoxy, Halogen, Hydroxy, Cyano, Carboxy, -CONHR², -NHCOR² und/oder Aryl- oder Hetarylazo, das jeweils durch C₁-C₁₀-Alkyl, C₁-C₆-Alkoxy, Halogen, Hydroxy, Cyano oder Carboxy substituiert sein kann, ein- oder mehrfach substituiert sein kann;
- R': Brom; Cyano; -NR³₂;
Aryloxy, Arylthio, Hetaryloxy oder Hetarylthio, das jeweils ein- oder mehrfach durch C₁-C₁₂-Alkyl, C₁-C₁₂-Alkoxy, Cyano, -CONHR² und/oder -NHCOR² substituiert sein kann; C₃-C₁₈-Alk-1-inyl, dessen Kohlenstoffkette durch eine oder mehrere Gruppierungen -O-, -S-, -NR¹-, -CO- und/oder -SO₂- unterbrochen sein kann und das durch -COOR¹, -SO₃R¹, Hydroxy, Cyano, C₁-C₆-Alkoxy, C₅-C₈-Cycloalkyl, Aryl und/oder einen über ein Stickstoffatom gebundenen, 5- bis 7-gliedrigen heterocyclischen Rest, der weitere Heteroatome enthalten und aromatisch sein kann, ein- oder mehrfach substituiert sein kann;
- R¹: Wasserstoff oder C₁-C₆-Alkyl;
- R²: Wasserstoff; C₁-C₁₈-Alkyl; Aryl oder Hetaryl, das jeweils durch C₁-C₈-Alkyl, C₁-C₆-Alkoxy, Halogen, Hydroxy oder Cyano substituiert sein kann;
- R³: Wasserstoff; C₁-C₁₈-Alkyl; Aryl oder Hetaryl, das jeweils durch C₁-C₈-Alkyl, C₁-C₆-Alkoxy, Halogen, Hydroxy und/oder Cyano substituiert sein kann; beide Reste R³ zu einem das Stickstoffatom enthaltenden und über dieses gebundenen 5- bis 7-gliedrigen, heterocyclischen Rest verbunden;
- n: 2, 3 oder 4;
- m: 0 bis 6,
gefunden, welches dadurch gekennzeichnet ist, daß man
a) ein in peri-Position monobromiertes Rylenderivat der allgemeinen Formel II' 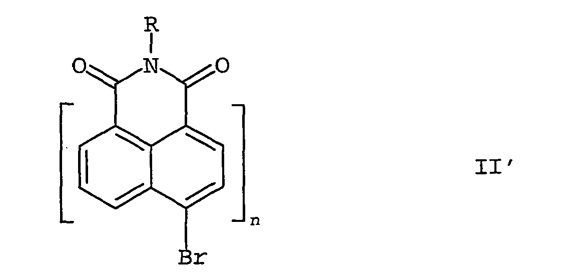 in Gegenwart eines aprotischen organischen Lösungsmittels, eines Übergangsmetallkatalysatorsystems und einer Base in einer Kreuzkupplungsreaktion mit 1-Aminoanthrachinon umsetzt,
b) das in Schritt a) gebildete Rylenanthramin der allgemeinen Formel III' 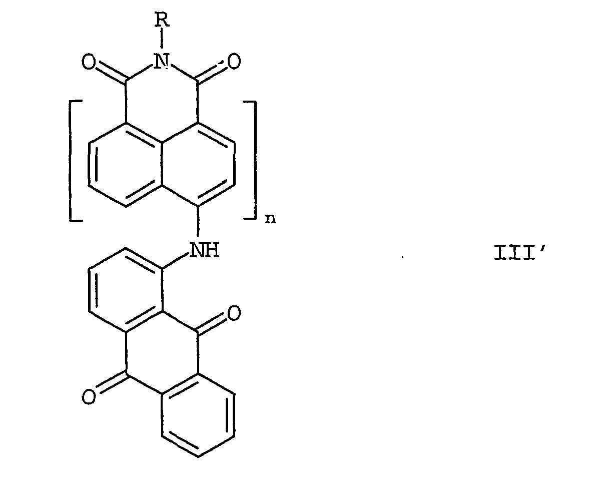 in Gegenwart eines polaren organischen Lösungsmittels und einer Base zum im Rylenkern unsubstituierten Rylenfarbstoff der Formel I', in der m gleich 0 ist, cyclisiert sowie
c) gewünschtenfalls den in Schritt b) erhaltenen im Rylenkern unsubstituierten Rylenfarbstoff I' durch Umsetzung mit elementarem Brom in den im Rylenkern bromierten Rylenfarbstoff der Formel I', in der R' Brom bedeutet und m ungleich 0 ist, überführt und
d) gewünschtenfalls den in Schritt c) erhaltenen im Rylenkern bromierten Rylenfarbstoff I'
   d1) durch Umsetzung mit einer Verbindung der allgemeinen Formel IV 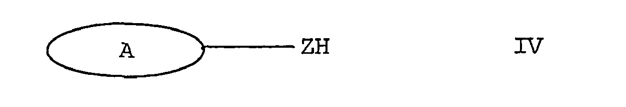 in der Z Sauerstoff oder Schwefel und der Ring A einen Aryl- oder Hetarylrest, der jeweils ein- oder mehrfach durch C₁-C₁₂-Alkyl, C₁-C₁₂-Alkoxy, Cyano, -CONHR² und/oder -NHCOR² substituiert sein kann, bedeuten,
      in Gegenwart eines inerten stickstoffbasischen organischen Lösungsmittels und einer Base in den im Rylenkern substituierten Rylenfarbstoff der Formel I', in der R' Aryloxy, Arylthio, Hetaryloxy oder Hetarylthio, das jeweils ein- oder mehrfach durch C₁-C₁₂-Alkyl, C₁-C₁₂-Alkoxy, Cyano, -CONHR² und/oder -NHCOR² substituiert sein kann, bedeutet und m ungleich 0 ist,
   d2) durch Umsetzung mit Kupfer(I)cyanid in Gegenwart eines dipolar-aprotischen organischen Lösungsmittels in den im Rylenkern substituierten Rylenfarbstoff der Formel I', in der R' Cyano bedeutet und m ungleich 0 ist,
   d3) durch Umsetzung mit einem Alkin der allgemeinen Formel V 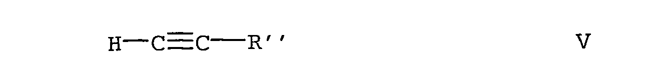 in der R'' einen C₁-C₁₆-Alkylrest, der durch eine oder mehrere Gruppierungen -O-, -S-, -NR¹-, -CO- und/oder -SO₂- unterbrochen sein kann kann und durch -COOR¹-, -SO₃R¹, Hydroxy, Cyano, C₁-C₆-Alkoxy, C₅-C₈-Cycloalkyl, Aryl und/oder einen über ein Stickstoffatom gebundenen, 5- bis 7-gliedrigen heterocyclischen Rest, der weitere Heteroatome enthalten und aromatisch sein kann, ein- oder mehrfach substituiert sein kann, bedeutet,
      in Gegenwart eines aprotischen organischen Lösungsmittels, eines Palladiumkomplexes als Katalysator, eines Kupfersalzes als Cokatalysator und einer Base in den im Rylenkern substitutierten Rylenfarbstoff der Formel I', in der R' -C≡C-R'' bedeutet und m ungleich 0 ist, oder
   d4) durch Umsetzung mit Ammoniak oder einem Amin der allgemeinen Formel VI 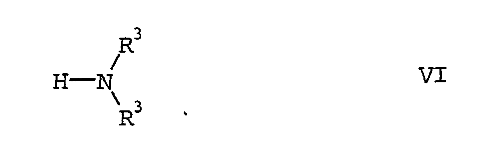 in Gegenwart eines dipolar-aprotischen organischen Lösungsmittels in den im Rylenkern substituierten Rylenfarbstoff der Formel I', in der R' -NR³₂ bedeutet und m ungleich 0 ist, überführt.

Außerdem wurde ein Verfahren zur Herstellung von symmetrischen Rylenfarbstoffen der allgemeinen Formel I'' 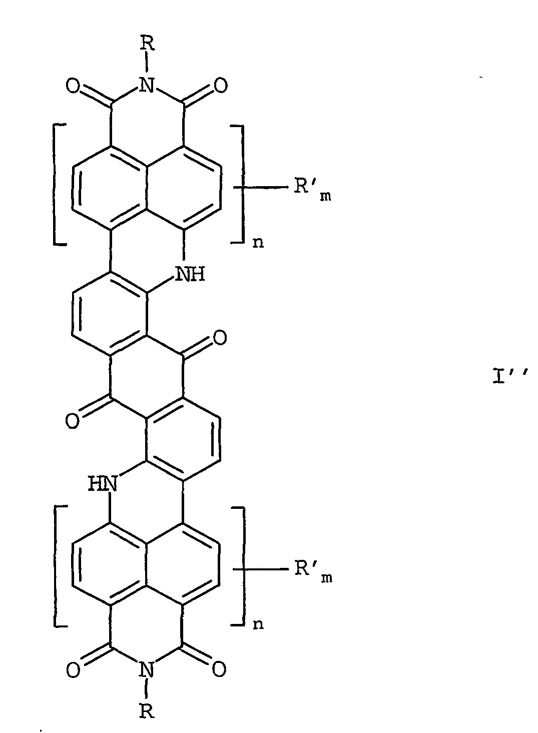 in der die Variablen R, R', R¹, R², R³ und m die für die Formel I' genannte Bedeutung haben und n gleich 1, 2, 3 oder 4 ist, gefunden, welches dadurch gekennzeichnet ist, daß man
a) ein in peri-Position monobromiertes Rylenderivat der allgemeinen Formel II' 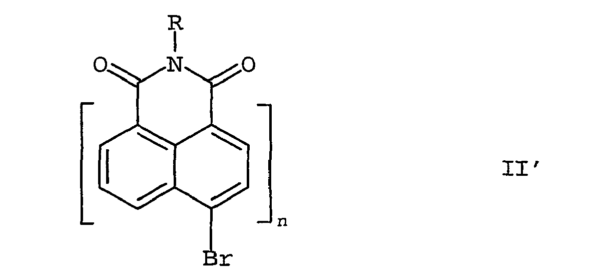 in Gegenwart eines aprotischen organischen Lösungsmittels, eines Übergangsmetallkatalysatorsystems und einer Base in einer zweifachen Kreuzkupplungsreaktion mit 1,5-Diaminoanthrachinon umsetzt,
b) das in Schritt a) gebildete Rylenanthramin der allgemeinen Formel III'' 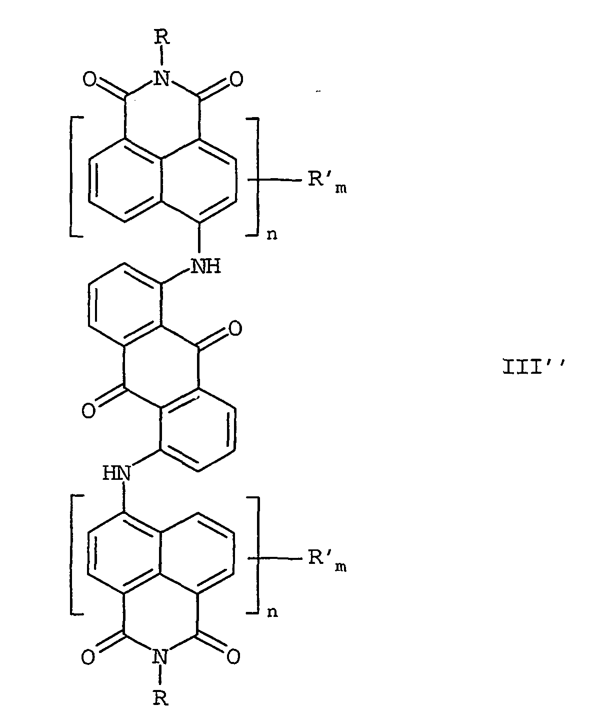 in Gegenwart eines polaren organischen Lösungsmittels und einer Base zu dem Rylenfarbstoff der Formel I'', in der m gleich 0 ist, cyclisiert sowie
c) gewünschtenfalls den in Schritt b) erhaltenen im Rylenkern unsubstituierten Rylenfarbstoff I' durch Umsetzung mit elementarem Brom in den im Rylenkern bromierten Rylenfarbstoff der Formel I'', in der R' Brom bedeutet und m ungleich 0 ist, überführt und
d) gewünschtenfalls den in Schritt c) erhaltenen im Rylenkern bromierten Rylenfarbstoff I''
   d1) durch Umsetzung mit einer Verbindung der allgemeinen Formel IV 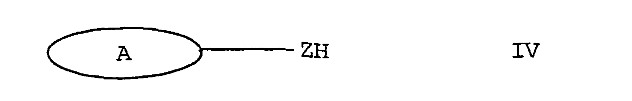 in der Z Sauerstoff oder Schwefel und der Ring A einen Aryl- oder Hetarylrest, der jeweils ein- oder mehrfach durch C₁-C₁₂-Alkyl, C₁-C₁₂-Alkoxy, Cyano, -CONHR² und/oder -NHCOR² substituiert sein kann, bedeuten,
      in Gegenwart eines inerten stickstoffbasischen organischen Lösungsmittels und einer Base in den im Rylenkern substituierten Rylenfarbstoff der Formel I'', in der R' Aryloxy, Arylthio, Hetaryloxy oder Hetarylthio, das jeweils ein- oder mehrfach durch C₁-C₁₂-Alkyl, C₁-C₁₂-Alkoxy, Cyano, -CONHR² und/oder -NHCOR² substituiert sein kann, bedeutet und m ungleich 0 ist,
   d2) durch Umsetzung mit Kupfer(I)cyanid in Gegenwart eines dipolar-aprotischen organischen Lösungsmittels in den im Rylenkern substituierten Rylenfarbstoff der Formel I'', in der R' Cyano bedeutet und m ungleich 0 ist,
   d3) durch Umsetzung mit einem Alkin der allgemeinen Formel V 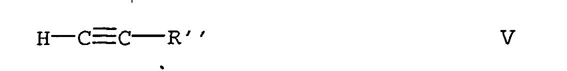 in der R'' einen C₁-C₁₆-Alkylrest, der durch eine oder mehrere Gruppierungen -O-, -S-, -NR¹-, -CO- und/oder -SO₂- unterbrochen sein kann kann und durch -COOR¹, -SO₃R¹, Hydroxy, Cyano, C₁-C₆-Alkoxy, C₅-C₈-Cycloalkyl, Aryl und/oder einen über ein Stickstoffatom gebundenen, 5- bis 7-gliedrigen heterocyclischen Rest, der weitere Heteroatome enthalten und aromatisch sein kann, ein- oder mehrfach substituiert sein kann, bedeutet,
      in Gegenwart eines aprotischen organischen Lösungsmittels, eines Palladiumkomplexes als Katalysator, eines Kupfersalzes als Cokatalysator und einer Base in den im Rylenkern substitutierten Rylenfarbstoff der Formel I'', in der R' -C=C-R'' bedeutet und m ungleich 0 ist, oder
   d4) durch Umsetzung mit Ammoniak oder einem Amin der allgemeinen Formel VI 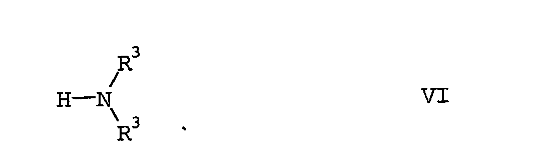 in Gegenwart eines dipolar-aprotischen organischen Lösungsmittels in den im Rylenkern substituierten Rylenfarbstoff der Formel I'', in der R' -NR³₂ bedeutet und m ungleich 0 ist, überführt.

Weiterhin wurde ein Verfahren zur Herstellung von asymmetrischen Rylenfarbstoffen der allgemeinen Formel I''' 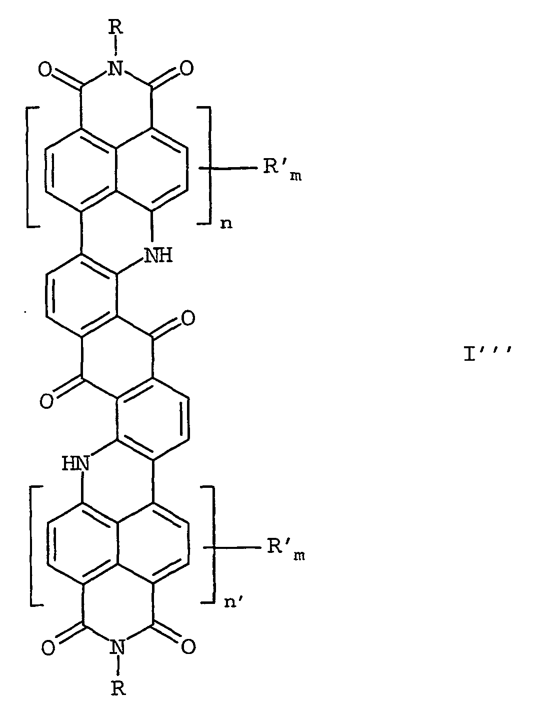 in der die Variablen R, R', R¹, R², R³ und m die für die Formel I' genannte Bedeutung haben sowie n und n' gleich 1, 2, 3 oder 4 sind, wobei n ≠ n' ist, gefunden, welches dadurch gekennzeichnet ist, daß man
a1) ein in peri-Position monobromiertes Rylenderivat der allgemeinen Formel II' 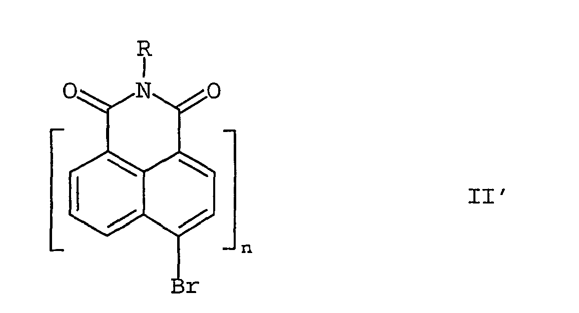 in Gegenwart eines aprotischen organischen Lösungsmittels, eines Übergangsmetallkatalysatorsystems und einer Base in einer ersten Kreuzkupplungsreaktion zunächst mit überschüssigem 1,5-Diaminoanthrachinon umsetzt,
a2) das in Schritt a) gebildete Amino-Rylenanthramin der allgemeinen Formel IIIa 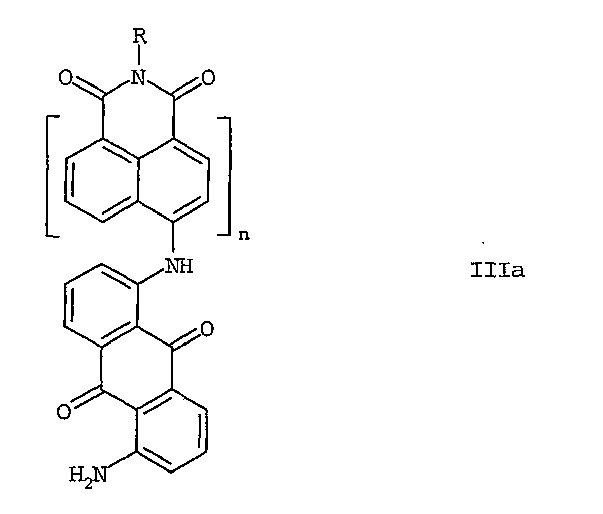 in Gegenwart eines aprotischen organischen Lösungsmittels, eines Übergangsmetallkatalysatorsystems und einer Base in einer zweiten Kreuzkupplungsreaktion mit einem in peri-Position monobromierten Rylenderivat der allgemeinen Formel II'' 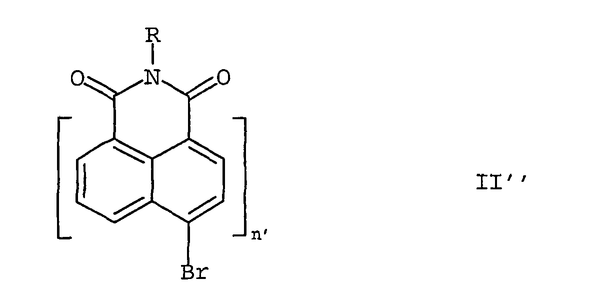 umsetzt,
b) das in Schritt a) gebildete Rylenanthramin der allgemeinen Formel III''' 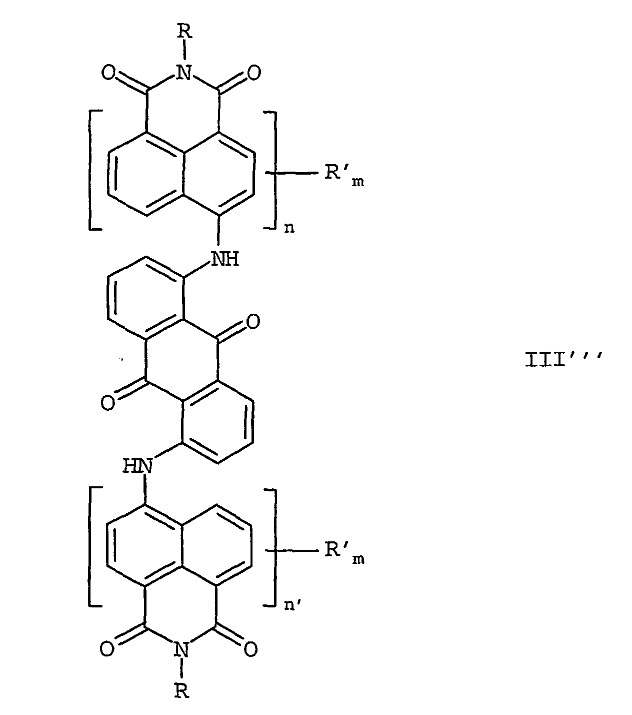 in Gegenwart eines polaren organischen Lösungsmittels und einer Base zum im Rylenkern unsubstituierten Rylenfarbstoff der Formel I''', in der m gleich 0 ist, cyclisiert sowie
c) gewünschtenfalls den in Schritt b) erhaltenen im Rylenkern unsubstituierten Rylenfarbstoff I''' durch Umsetzung mit elementarem Brom in den im Rylenkern bromierten Rylenfarbstoff der Formel I''', in der R' Brom bedeutet und m ungleich 0 ist, überführt und
d) gewünschtenfalls den in Schritt c) erhaltenen im Rylenkern bromierten Rylenfarbstoff I'''
   d1) durch Umsetzung mit einer Verbindung der allgemeinen Formel IV 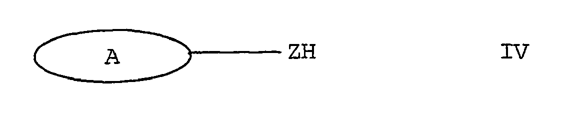 in der Z Sauerstoff oder Schwefel und der Ring A einen Aryl- oder Hetarylrest, der jeweils ein- oder mehrfach durch C₁-C₁₂-Alkyl, C₁-C₁₂-Alkoxy, Cyano, -CONHR² und/oder -NHCOR² substituiert sein kann, bedeuten,
      in Gegenwart eines inerten stickstoffbasischen organischen Lösungsmittels und einer Base in den im Rylenkern substituierten Rylenfarbstoff der Formel I''', in der R' Aryloxy, Arylthio, Hetaryloxy oder Hetarylthio, das jeweils ein- oder mehrfach durch C₁-C₁₂-Alkyl, C₁-C₁₂-Alkoxy, Cyano, -CONHR² und/oder -NHCOR² substituiert sein kann, bedeutet und m ungleich 0 ist,
   d2) durch Umsetzung mit Kupfer(I)cyanid in Gegenwart eines dipolar-aprotischen organischen Lösungsmittels in den im Rylenkern substituierten Rylenfarbstoff der Formel I''', in der R' Cyano bedeutet und m ungleich 0 ist,
   d3)durch Umsetzung mit einem Alkin der allgemeinen Formel V 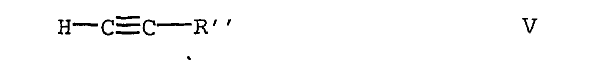 in der R'' einen C₁-C₁₆-Alkylrest, der durch eine oder mehrere Gruppierungen -O-, -S-, -NR¹-, -CO- und/oder -SO₂- unterbrochen sein kann kann und durch -COOR¹, -SO₃R¹, Hydroxy, Cyano, C₁-C₆-Alkoxy, C₅-C₈-Cycloalkyl, Aryl und/oder einen über ein Stickstoffatom gebundenen, 5- bis 7-gliedrigen heterocyclischen Rest, der weitere Heteroatome enthalten und aromatisch sein kann, ein- oder mehrfach substituiert sein kann, bedeutet,
      in Gegenwart eines aprotischen organischen Lösungsmittels, eines Palladiumkomplexes als Katalysator, eines Kupfersalzes als Cokatalysator und einer Base in den im Rylenkern substitutierten Rylenfarbstoff der Formel I''', in der R' -C≡C-R'' bedeutet und m ungleich 0 ist, oder
   d4) durch Umsetzung mit Ammoniak oder einem Amin der allgemeinen Formel VI 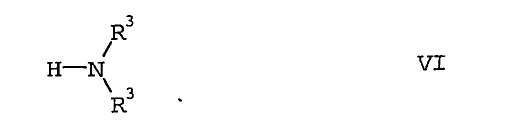 in Gegenwart eines dipolar-aprotischen organischen Lösungsmittels in den im Rylenkern substituierten Rylenfarbstoff der Formel I''', in der R' -NR³₂ bedeutet und m ungleich 0 ist, überführt.

Nicht zuletzt wurden auch die eingangs genannten Anwendungszwecke für die Rylenfarbstoffe I gefunden.

Alle in den Formeln I bis V auftretenden Alkylgruppen können geradkettig oder verzweigt sein. Wenn die Alkylgruppen substituiert sind, tragen sie in der Regel 1 oder 2 Substituenten.

Als Beispiele für geeignete Reste R, R¹, R², R³, R' und R'' (bzw. für deren Substituenten) seien im einzelnen genannt:
Methyl, Ethyl, Propyl, Isopropyl, Butyl, Isobutyl, tert.-Butyl, Pentyl, Isopentyl, Neopentyl, tert.-Pentyl, Hexyl, 2-Methylpentyl, Heptyl, 1-Ethylpentyl, Octyl, 2-Ethylhexyl, Isooctyl, Nonyl, Isononyl, Decyl, Isodecyl, Undecyl, Dodecyl, Tridecyl, Isotridecyl, Tetradecyl, Pentadecyl, Hexadecyl, Heptadecyl, Octadecyl, Nonadecyl und Eicosyl (die obigen Bezeichnungen Isooctyl, Isononyl, Isodecyl und Isotridecyl sind Trivialbezeichnungen und stammen von den nach der Oxosynthese erhaltenen Alkoholen); 2-Methoxyethyl, 2-Ethoxyethyl, 2-Propoxyethyl, 2-Isopropoxyethyl, 2-Butoxyethyl, 2- und 3-Methoxypropyl, 2- und 3-Ethoxypropyl, 2-und 3-Propoxypropyl, 2- und 3-Butoxypropyl, 2- und 4-Methoxybutyl, 2- und 4-Ethoxybutyl, 2- und 4-Propoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 2- und 4-Butoxybutyl, 4,8-Dioxadecyl, 3,6,9-Trioxadecyl, 3,6,9-Trioxaundecyl, 3,6,9-Trioxadodecyl, 3,6,9,12-Tetraoxatridecyl und 3,6,9,12-Tetraoxatetradecyl;
2-Methylthioethyl, 2-Ethylthioethyl, 2-Propylthioethyl, 2-Isopropylthioethyl, 2-Butylthioethyl, 2- und 3-Methylthiopropyl, 2-und 3-Ethylthiopropyl, 2- und 3-Propylthiopropyl, 2- und 3-Butylthiopropyl, 2- und 4-Methylthiobutyl, 2- und 4-Ethylthiobutyl, 2-und 4-Propylthiobutyl, 3,6-Dithiaheptyl, 3,6-Dithiaoctyl, 4,8-Dithianonyl, 3,7-Dithiaoctyl, 3,7-Dithianonyl, 2- und 4-Butylthiobutyl, 4,8-Dithiadecyl, 3,6,9-Trithiadecyl, 3,6,9-Trithiaundecyl, 3,6,9-Trithiadodecyl, 3,6,9,12-Tetrathiatridecyl und 3,6,9,12-Tetrathiatetradecyl;
2-Monomethyl- und 2-Monoethylaminoethyl, 2-Dimethylaminoethyl, 2-und 3- Dimethylaminopropyl, 3-Monoisopropylaminopropyl, 2- und 4-Monopropylaminobutyl, 2- und 4-Dimethylaminobutyl, 6-Methyl-3,6-diazaheptyl, 3,6-Dimethyl-3,6-diazaheptyl, 3,6-Diazaoctyl, 3,6-Dimethyl-3,6-diazaoctyl, 9-Methyl-3,6,9-triazadecyl, 3,6,9-Trimethyl-3,6,9-triazadecyl, 3,6,9-Triazaundecyl, 3,6,9-Trimethyl-3,6,9-triazaundecyl, 12-Methyl-3,6,9,12-tetraazatridecyl und 3,6,9,12-Tetramethyl-3,6,9,12-tetraazatridecyl;
Propan-2-on-1-yl, Butan-3-on-1-yl, Butan-3-on-2-yl und 2-Ethylpentan-3-on-1-yl;
2-Methylsulfonylethyl, 2-Ethylsulfonylethyl, 2-Propylsulfonylethyl, 2-Isopropylsulfonylethyl, 2-Butylsulfonylethyl, 2- und 3-Methylsulfonylpropyl, 2- und 3-Ethylsulfonylpropyl, 2- und 3-Propylsulfonylpropyl, 2- und 3-Butylsulfonylpropyl, 2- und 4-Methylsulfonylbutyl, 2- und 4-Ethylsulfonylbutyl, 2- und 4-Propylsulfonylbutyl und 4-Butylsulfonylbutyl;
Carboxymethyl, 2-Carboxyethyl, 3-Carboxypropyl, 4-Carboxybutyl, 5-Carboxypentyl, 6-Carboxyhexyl, 8-Carboxyoctyl, 10-Carboxydecyl, 12-Carboxydodecyl und 14-Carboxytetradecyl;
Sulfomethyl, 2-Sulfoethyl, 3-Sulfopropyl, 4-Sulfobutyl, 5-Sulfopentyl, 6-Sulfohexyl, 8-Sulfooctyl, 10-Sulfodecyl, 12-Sulfododecyl und 14-Sulfotetradecyl;
2-Hydroxethyl, 3-Hydroxypropyl, 1-Hydroxyprop-2-yl, 2- und 4-Hydroxybutyl, 1-Hydroxybut-2-yl und 8-Hydroxy-4-oxaoctyl;
Cyanomethyl, 2-Cyanoethyl, 3-Cyanopropyl, 2-Methyl-3-ethyl-3-cyanopropyl, 7-Cyano-7-ethylheptyl und 4,7-Dimethyl-7-cyanoheptyl;
Methoxy, Ethoxy, Propoxy, Isopropoxy, Butoxy, Isobutoxy, sec.-Butoxy, tert.-Butoxy, Pentoxy, Isopentoxy, Neopentoxy, tert.-Pentoxy und Hexoxy;
Carbamoyl, Methylaminocarbonyl, Ethylaminocarbonyl, Propylaminocarbonyl, Butylaminocarbonyl, Pentylaminocarbonyl, Hexylaminocarbonyl, Heptylaminocarbonyl, Octylaminocarbonyl, Nonylaminocarbonyl, Decylaminocarbonyl und Phenylaminocarbonyl;
Formylamino, Acetylamino, Propionylamino und Benzoylamino;
Chlor, Brom und Iod;
Amino, Dimethylamino, Diethylamino, Dipropylamino, Dibutylamino, Dipentylamino, Dihexylamino, Diheptylamino, Dioctylamino, Dinonylamino, Didecylamino, N-Piperidinyl und N-Pyrrolidinyl;
Phenylazo, 2-Napthylazo, 2-Pyridylazo und 2-Pyrimidylazo;
Phenyl, 2-Naphthyl, 2- und 3-Pyrryl, 2-, 3- und 4-Pyridyl, 2-, 4-und 5-Pyrimidyl, 3-, 4- und 5-Pyrazolyl, 2-, 4- und 5-Imidazolyl, 2-, 4- und 5-Thiazolyl, 3-(1,2,4-Triazyl), 2-(1,3,5-Triazyl), 6-Chinaldyl, 3-, 5-, 6- und 8-Chinolinyl, 2-Benzoxazolyl, 2-Benzothiazolyl, 5-Benzothiadiazolyl, 2- und 5-Benzimidazolyl und 1-und 5- Isochinolyl;
2-, 3- und 4-Methylphenyl, 2,4-, 2,5-, 3,5- und 2,6-Dimethylphenyl, 2,4,6-Trimethylphenyl, 2-, 3- und 4-Ethylphenyl, 2,4-, 2,5-, 3,5- und 2,6-Diethylphenyl, 2,4,6-Triethylphenyl, 2-, 3-und 4-Propylphenyl, 2,4-, 2,5-, 3,5- und 2,6-Dipropylphenyl, 2,4,6-Tripropylphenyl, 2-, 3- und 4-Isopropylphenyl, 2,4-, 2,5-, 3,5- und 2,6-Diisopropylphenyl, 2,4,6-Triisopropylphenyl, 2-, 3-und 4-Butylphenyl, 2,4-, 2,5-, 3,5- und 2,6-Dibutylphenyl, 2,4,6-Tributylphenyl, 2-, 3- und 4-Isobutylphenyl, 2,4-, 2,5-, 3,5- und 2,6-Diisobutylphenyl, 2,4,6-Triisobutylphenyl, 2-, 3-und 4-sec.-Butylphenyl, 2,4-, 2,5-, 3,5- und 2,6-Di-sec.-butylphenyl und 2,4,6-Tri-sec.-butylphenyl, 2-, 3- und 4-tert.-Butylphenyl, 2,4-, 2,5-, 3,5- und 2,6-Di-tert.-butylphenyl, 2,4,6-Tri-tert.-butylphenyl; 2-, 3- und 4-Methoxyphenyl, 2,4-, 2,5-, 3,5-und 2,6-Dimethoxyphenyl, 2,4,6-Trimethoxyphenyl, 2-, 3- und 4-Ethoxyphenyl, 2,4-, 2,5-, 3,5- und 2,6-Diethoxyphenyl, 2,4,6-Triethoxyphenyl, 2-, 3- und 4-Propoxyphenyl, 2,4-, 2,5-, 3,5- und 2,6-Dipropoxyphenyl, 2-, 3- und 4-Isopropoxyphenyl, 2,4-, 2,5-, 3,5- und 2,6-Diisopropoxyphenyl und 2-, 3- und 4-Butoxyphenyl; 2-, 3- und 4-Chlorphenyl, und 2,4-, 2,5-, 3,5-und 2,6-Dichlorphenyl; 2-, 3- und 4-Hydroxyphenyl und 2,4-, 2,5-, 3,5- und 2,6-Dihydroxyphenyl; 2-, 3- und 4-Cyanophenyl; 3- und 4-Carboxyphenyl; 3- und 4-Carboxamidophenyl, 3- und 4-N-Methylcarboxamidophenyl und 3- und 4-N-Ethylcarboxamidophenyl; 3- und 4-Acetylaminophenyl, 3- und 4-Propionylaminophenyl und 3- und 4-Butyrylaminophenyl; 3- und 4-N-Phenylaminophenyl, 3- und 4-N-(o-Tolyl)aminophenyl, 3- und 4-N-(m-Tolyl)aminophenyl und 3-und 4-N-(p-Tolyl)aminophenyl; 3- und 4-(2-Pyridyl)aminophenyl, 3-und 4-(3-Pyridyl)aminophenyl, 3- und 4-(4-Pyridyl)aminophenyl, 3-und 4-(2-Pyrimidyl)aminophenyl und 4-(4-Pyrimidyl)aminophenyl;
4-Phenylazophenyl, 4-(1-Naphthylazo)phenyl, 4-(2-Naphthylazo)phenyl, 4-(4-Naphthylazo)phenyl, 4-(2-Pyridylazo)phenyl, 4-(3-Pyridylazo)phenyl, 4-(4-Pyridylazo)phenyl, 4-(2-Pyrimidylazo)phenyl, 4-(4-Pyrimidylazo)phenyl und 4-(5-Pyrimidylazo)phenyl;
Cyclopentyl, 2- und 3-Methylcyclopentyl, 2- und 3-Ethylcyclopentyl, Cyclohexyl, 2-, 3- und 4-Methylcyclohexyl, 2-, 3- und 4-Ethylcyclohexyl, 3- und 4-Propylcyclohexyl, 3- und 4-Isopropylcyclohexyl, 3- und 4-Butylcyclohexyl, 3- und 4-sec.-Butylcyclohexyl, 3- und 4-tert.-Butylcyclohexyl, Cycloheptyl, 2-, 3- und 4-Methylcycloheptyl, 2-, 3- und 4-Ethylcycloheptyl, 3- und 4-Propylcycloheptyl, 3- und 4-Isopropylcycloheptyl, 3- und 4-Butylcycloheptyl, 3- und 4-sec.-Butylcycloheptyl, 3- und 4-tert.-Butylcycloheptyl, Cyclooctyl, 2-, 3-, 4- und 5-Methylcyclooctyl, 2-, 3-, 4- und 5-Ethylcyclooctyl, 3-, 4- und 5-Propylcyclooctyl, 2-Dioxanyl, 4-Morpholinyl, 2- und 3-Tetrahydrofuryl, 1-, 2- und 3-Pyrrolidinyl und 1-, 2-, 3- und 4-Piperidyl;
Phenoxy, Phenylthio, 2-Naphthyloxy, 2-Naphthylthio, 2-, 3- und 4-Pyridyloxy, 2-, 3- und 4-Pyridylthio, 2-, 4- und 5-Pyrimidyloxy und 2-, 4- und 5-Pyrimidylthio.

Als Beispiele für besonders bevorzugte Reste R' seien Brom sowie p-tert.-Butylphenoxy, p-(1,1-Dimethylpropyl)phenoxy, p-(1,1-Dimethylbutyl)phenoxy, p-(1,1-Dimethylpentyl)phenoxy, p-(1,1,3,3-Tetramethylbutyl)phenoxy, p-(2-Cyclopentyl-1,1-dimethylethyl)phenoxy, p-(2-Cyclohexyl-1,1-dimethylethyl)phenoxy, p-(2-Cycloheptyl-1,1-dimethylethyl)phenoxy und p-(1,1-Dimethyl-2-(4-morpholinyl)ethyl)phenoxy genannt.

Die Herstellung der Rylenfarbstoffe I (I', I'' und I''') kann vorteilhaft nach den erfindungsgemäßen mehrstufigen Verfahren ausgehend von dem in peri-Position monobromierten Rylenderivat II' erfolgen.

Dieses wird zur Herstellung der Rylenfarbstoffe I' in Schritt a) in einer Kreuzkupplungsreaktion mit 1-Aminoanthrachinon zu dem Rylenanthramin III' bzw. zur Herstellung der symmetrischen Rylenfarbstoffe I'' mit 1,5-Diaminoanthrachinon zu dem Rylenanthramin III'' umgesetzt. Bei der Herstellung der asymmetrischen Rylenfarbstoffe III''' wird Schritt a) zweistufig durchgeführt, indem das monobromierte Rylenderivat II' zunächst mit überschüssigem 1,5-Diaminoanthrachinon zur Reaktion gebracht (Schritt a1)) wird und das dabei gebildete Amino-Rylenanthramin IIIa dann mit einem anderen monobromierten Rylenderivat II'' zum Rylenanthramin III''' umgesetzt wird (Schritt a2)).

Die Rylenanthramine III', III'' und III''' (im folgenden als Rylenanthramine III zusammengefaßt) werden anschließend in Schritt b) einer Cyclisierung zu den im Rylenkern unsubstituierten Rylenfarbstoffen I (m = 0) unterzogen.

Im Rylenkern bromierte Rylenfarbstoffe I (R' = Br, m ≠ 0) können in einem anschließenden Schritt c) durch Umsetzung mit elementarem Brom erhalten werden.

Aus den bromierten Rylenfarbstoffen I sind die weiteren im Rylenkern substituierten Rylenfarbstoffe I durch Bromaustausch gemäß Schritt d) zugänglich. So können (het)aryloxy- und (het)arylthiosubstituierte, cyanosubstituierte, durch Alkinylreste R' oder durch Aminoreste R' substituierte Rylenfarbstoffe I durch Umsetzung mit einem (het)aromatischen (Thio)Alkohol IV (Schritt d1)), Kupfer(I)cyanid (Schritt d2), einem 1-Alkin V (Schritt d3)) bzw. Ammoniak oder einem primären oder sekundären Amin VI (Schritt d4)) hergestellt werden.

Die in Schritt a) als Edukte eingesetzten in peri-Position monobromierten Naphthalin-1,8- bzw. Perylen-3,4-dicarbonsäureimide sind aus der WO-A-01/16109 bekannt. Die als Edukte eingesetzten in peri-Position monobromierten Terrylen- bzw. Quaterrylen-3,4-dicarbonsäureimide) sind aus der nicht vorveröffentlichten DE-A-101 08 156 bekannt und können nach dem dort beschriebenen, folgenden dreistufigen Verfahren hergestellt werden:
A) einseitige alkalische Verseifung eines asymmetrischen Rylentetracarbonsäurediimids der Formel VII 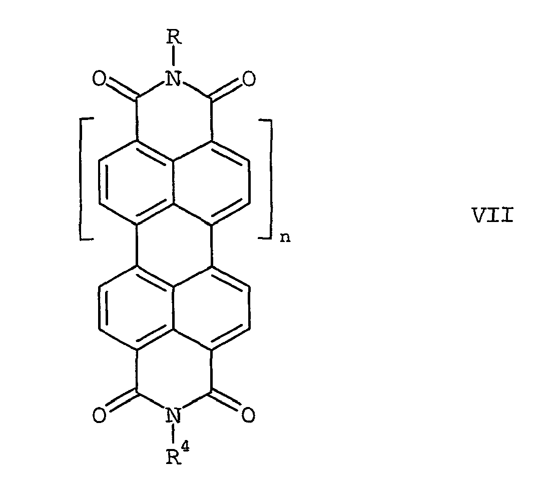 in der R⁴ C₅-C₈-Cycloalkyl, dessen Kohlenstoffgerüst durch eine oder mehrere Gruppierungen -O-, -S- und/oder -NR²- unterbrochen sein kann und das durch C₁-C₆-Alkyl ein- oder mehrfach substituiert sein kann, bedeutet und n gleich 2 oder 3 ist,
   in Gegenwart eines polaren organischen Lösungsmittels,
B)einseitige Decarboxylierung des in Schritt A) gebildeteten Rylentetracarbonsäuremonoimidmonoanhydrids der Formel VIII 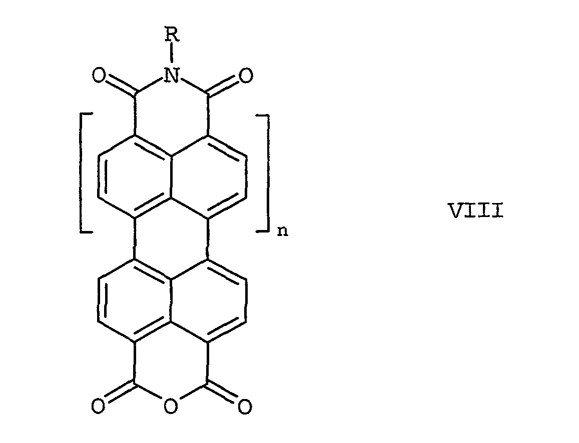 in Gegenwart einer tertiären stickstoffbasischen Verbindung und eines Übergangsmetallkatalysators und
C) Umsetzung des in peri-Position unsubstituierten Rylen-3,4-dicarbonsäureimids der Formel IX 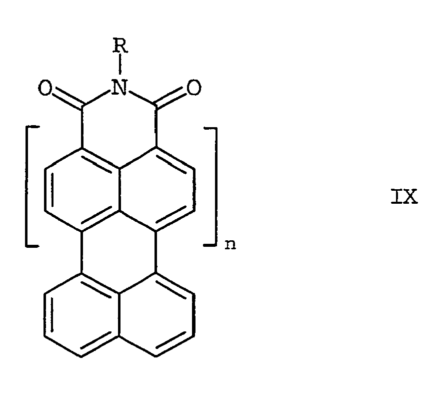 mit elementarem Brom.

Für Schritt A) dieses Verfahrens geeignete polare Lösungsmittel sind insbesondere verzweigte C₃-C₆-Alkohole, wie Isopropanol, tert.-Butanol und 2-Methyl-2-butanol.

Im allgemeinen kommen 40 bis 200 g Lösungsmittel je g VII zum Einsatz.

Als Basen eignen sich anorganische Basen, insbesondere Alkali- und Erdalkalimetallhydroxide, z.B. Natriumhydroxid und Kaliumhydroxid, die vorzugsweise in Form von wäßrigen Lösungen bzw. Suspensionen (in der Regel 50 bis 80 gew.-%ig) verwendet werden, und organische Basen, insbesondere Alkali- und Erdalkalimetallalkoholate, wobei Natrium- und Kaliumalkoholate, wie Natriummethanolat, Kaliummethanolat, Kaliumisopropanolat und Kalium-tert.-butanolat bevorzugt sind, die üblicherweise in wasserfreier Form eingesetzt werden.

In der Regel werden 5 bis 50 Äquivalente Base, bezogen auf VII, benötigt.

Die Reaktionstemperatur beträgt im allgemeinen 50 bis 120°C, vorzugsweise 60 bis 100°C.

Die Verseifung ist üblicherweise in 10 bis 40 h abgeschlossen.

In Schritt B) dieses Verfahrens werden die Rylentetracarbonsäuremonoimidmonoanhydride VIII in Gegenwart einer tertiären stickstoffbasischen Verbindung als Lösungsmittel und eines Übergangsmetallkatalysators einseitig decarboxyliert.

Geeignete Lösungsmittel sind insbesondere hochsiedende Stickstoffbasen, z.B. cyclische Amide, wie N-Methylpyrrolidon, und aromatische Heterocyclen, wie Chinolin, Isochinolin und Chinaldin.

Übliche Lösungsmittelmengen betragen 20 bis 150 g je g VII.

Als Katalysatoren eignen sich insbesondere die Übergangsmetalle Kupfer und Zink sowie besonders auch deren anorganische und organische Salze, die vorzugsweise in wasserfreier Form eingesetzt werden.

Beispiele für bevorzugte Salze sind Kupfer(I)oxid, Kupfer(II)oxid, Kupfer(I)chlorid, Kupfer(II)acetat, Zinkacetat und Zinkpropionat, wobei Kupfer(I)oxid und Zinkacetat besonders bevorzugt sind.

Selbstverständlich kann man auch Mischungen der genannten Katalysatoren verwenden.

In der Regel kommen 50 bis 90 mol-% Katalysator, bezogen auf VIII, zum Einsatz.

Die Reaktionstemperatur liegt im allgemeinen bei 100 bis 250°C, insbesondere 160 bis 200°C. Es empfiehlt sich, unter Verwendung einer Schutzgasatmosphäre (z.B. Stickstoff) zu arbeiten.

Üblicherweise ist die Decarboxylierung in 3 bis 20 h beendet.

Schritt C) dieses Verfahrens, die regioselektive Bromierung des Rylen-3,4-dicarbonsäureimids IX, wird vorzugsweise in einer aliphatischen Monocarbonsäure, insbesondere einer C₁-C₄-Carbonsäure, wie Ameisensäure, Essigsäure, Propionsäure, Buttersäure oder deren Mischungen, oder in einem halogenierten, aliphatischen oder aromatischen Lösungsmittel, wie Methylenchlorid, Chloroform oder Chlorbenzol, durchgeführt.

Üblicherweise werden 5 bis 30 g, vorzugsgweise 15 bis 25 g, Lösungsmittel je g zu bromierendes IX eingesetzt.

In der Regel ist die Anwesenheit eines Halogenierungskatalysators nicht erforderlich. Will man jedoch die Bromierungsreaktion beschleunigen (etwa um den Faktor 1,5 bis 2), so empfiehlt es sich, elementares Iod, bevorzugt in einer Menge von 1 bis 5 mol-%, bezogen auf IX, zuzusetzen.

Im allgemeinen liegt das Molverhältnis von Brom zu IX bei etwa 1 : 1 bis 5 : 1, vorzugsweise bei 3 : 1 bis 4 : 1.

Die Reaktionstemperatur beträgt in der Regel 0 bis 70°C, insbesondere 10 bis 40°C.

In Abhängigkeit von der Reaktivität des Substrats IX und der An- oder Abwesenheit von Iod ist die Bromierung üblicherweise in 2 bis 12 h beendet.

Schritt a) der erfindungsgemäßen Verfahren, die Kreuzkupplung der Rylenderivate II' mit 1-Aminoanthrachinon bzw. 1,5-Diaminoanthrachinon, wird in Gegenwart eines aprotischen organischen Lösungsmittels, eines Übergangsmetallkatalysatorsystems und einer Base vorgenommen.

Als aprotisches organisches Lösungsmittel sind dabei wasserfreie inerte aromatische Lösungsmittel, wie Benzol und seine Alkylierungsprodukte, z.B. Toluol und o-, m- und p-Xylol, sowie aliphatische und cycloaliphatische Ether, wie Dimethoxyethan, 1,4-Dioxan und Tetrahydrofuran, besonders geeignet.

Die Lösungsmittelmenge beträgt üblicherweise 60 bis 380 g, vorzugsweise 120 bis 150 g, je g II'.

Als Übergangsmetallkatalysator eignen sich insbesondere Palladiumverbindungen, wobei Palladium(0)- und Palladium(II)-Komplexe, wie Tris(dibenzylidenaceton)dipalladium(0), Dichloro[1,1'-bis(diphenylphosphino)ferrocen]palladium(II) und Dichloro(1,5-cyclooctadien)palladium(II), und Palladium(II)acetat als bevorzugte Beispiele zu nennen sind.

Üblicherweise wird der Übergangsmetallkatalysator in einer Menge von 0,4 bis 5 mol-%, vor allem 1 bis 3 mol-%, bezogen auf II', eingesetzt.

Vorzugsweise kommt zusätzlich ein Cokatalysator auf Phosphinbasis zum Einsatz. Bevorzugte Beispiele für diesen Cokatalysator sind zweizähnige Phosphinliganden, wie racemisches 2,2'-Bis(diphenylphosphino)-1,1'-binaphthyl, 1,1'-Bis(diphenylphosphino)ferrocen, 1,1'-Bis(di-o-tolylphosphino)ferrocen, 1,1'-Bis(di-p-methoxyphenylphosphino)ferrocen und 2,2'-Bis(di-o-tolylphosphino)diphenylether, und als einzähnige Phosphinliganden wirkende Phosphine, wie Tri-o-tolylphosphin, Tri-tert.-butylphosphin und Triphenylphosphin.

Geeignete Cokatalysatormengen betragen in der Regel 1 bis 10 mol-%, vorzugsweise 1 bis 5 mol-%, bezogen auf II'.

Als Base eignen sich besonders Alkalimetallamide, vor allem Alkalimetalldi(C₃-C₆-alkyl)amide, und Alkalimetallalkoholate, vor allem die Alkalimetallsalze sekundärer und tertiärer aliphatischer (C₃-C₆-)Alkohole. Bevorzugte Beispiele für diese Basen sind: Lithiumdiisopropylamid, Natriumdiisopropylamid und Kaliumdiisopropylamid sowie Lithiumisopropanolat, Natriumisopropanolat, Kaliumisopropanolat, Lithium-tert.-butanolat, Natrium-tert.-butanolat und Kalium-tert.-butanolat, wobei Natrium-tert.-butanolat und Kalium-tert.-butanolat besonders bevorzugt sind.

Im allgemeinen wird eine mindestens äquimolare Menge Base, bevorzugt 1,1 mol Base je mol II' eingesetzt.

Für die Herstellung der Rylenfarbstoffe I' kommen 1-Aminoanthrachinon und Rylenderivat II' in der Regel im Molverhältnis 0,8 : 1 bis 1 : 1 zum Einsatz. Für die Herstellung der symmetrischen Rylenfarbstoffe I'' ist im allgemeinen ein Molverhältnis von 1,5-Diaminoanthrachinon zu Rylenderivat II' von 0,4 : 1 bis 0,5 : 1 besonders geeignet.

Die Reaktionstemperatur liegt üblicherweise bei 50 bis 120°C, bevorzugt bei 70 bis 100°C.

Es empfiehlt sich, unter Schutzgasatmosphäre zu arbeiten.

Die Reaktionszeit beträgt in Abhängigkeit von der Reaktivität der Rylenderivate II' und der eingesetzten Katalysatormenge im allgemeinen 6 bis 40 h, insbesondere 18 bis 24 h.

Bei der Herstellung der asymmetrischen Rylenfarbstoffe I''' wird in den Teilschritten a1) und a2) jeweils analog zu Schritt a) vorgegangen. In Schritt a1) wird lediglich das Molverhältnis von 1,5-Diaminoanthrachinon zu Rylenderivat II' vorzugsweise auf 1 : 0,3 bis 1 : 0,8 eingestellt, analog zu Schritt a) beträgt das Molverhältnis von Amino-Rylenanthramin IIIa zu Rylenderivat II'' in Schritt a2) 0,8 : 1 bis 1 : 1.

Verfahrenstechnisch geht man in den Schritten a) zweckmäßigerweise wie folgt vor:

Man legt Lösungsmittel, Katalysator und Cokatalysator in einer Schutzgasatmosphäre vor, setzt unter Rühren nacheinander das Rylenderivat II' bzw. II'', 1-Aminoanthrachinon bzw. 1,5-Diaminoanthrachinon bzw. Amino-Rylenanthramin IIIa und Base zu und erhitzt 6 bis 24 h unter Schutzgas auf die gewünschte Reaktionstemperatur. Nach Abkühlen auf Raumtemperatur filtriert man die festen Bestandteile aus dem Reaktionsgemisch ab, wäscht mit einem polaren organischen Lösungsmittel, z.B. Ethanol, und anschließend mit Wasser. Gewünschtenfalls kann man das Filtergut zusätzlich noch in einer verdünnten Mineralsäure, z.B. in Schwefelsäure, aufrühren und abschließend mit Wasser neutral waschen.

Die Reinheit der so hergestellten Rylenanthramine III reicht im allgemeinen für die Weiterverarbeitung aus. Gegebenenfalls kann man das Rohprodukt durch Umfällen aus Chloroform, Methylenchlorid/Petrolether oder N-Methylpyrrolidon oder über Säulenchromatographie an Kieselgel mit einem Methylenchlorid/Tetrahydrofuran-Gemisch als Eluens weiter aufreinigen.

Schritt b) der erfindungsgemäßen Verfahren, die Cyclisierung der Rylenanthramine III zu den im Rylenkern unsusbstituierten Rylenfarbstoffen I, wird in Gegenwart eines polaren organischen Lösungsmittels und einer Base vorgenommen.

Hierfür geeignet sind insbesondere hochsiedende, sauerstoff- oder stickstoffhaltige Lösungsmittel, z.B. Ether, wie Diphenylether, Diethylenglykoldimethyl- und -diethylether, mehrwertige Alkohole, wie Diethylenglykol, Aminoalkohole, wie Aminoethanol, Carbonsäureamide, wie Dimethylformamid und Dimethylacetamid, N-Methylpyrrolidon und tertiäre Stickstoffbasen, wie 1,5-Diazabicyclo[4.3.0]non-3-en und 1,8-Diazabicyclo[5.4.0]undec-7-en.

Im allgemeinen kommen 10 bis 50 g, vorzugsweise 20 bis 30 g, Lösungsmittel je g III zum Einsatz.

Als Basen eignen sich anorganische Basen, insbesondere Alkali- und Erdalkalimetallhydroxide, wie Natriumhydroxid und Kaliumhydroxid, und Alkali- und Erdalkalimetallcarbonate, wie Natriumcarbonat, Kaliumcarbonat und Cäsiumcarbonat, sowie organische Basen, insbesondere Alkali- und Erdalkalimetallalkoholate, wobei Natrium- und Kaliumalkoholate, wie Natriummethanolat, Kaliummethanolat, Kaliumisopropanolat und Kalium-tert.-butanolat bevorzugt sind, und Alkalimetallamide, wie Lithiumdiisopropylamid, Natriumdiisopropylamid und Kaliumdiisopropylamid, die üblicherweise in wasserfreier Form eingesetzt werden.

In der Regel werden 3 bis 30, insbesondere 8 bis 10 Moläquivalente Base, bezogen auf III, eingesetzt.

Die Reaktionstemperatur beträgt üblicherweise 50 bis 180°C, vorzugsweise 90 bis 120°C.

Zweckmäßigerweise wird unter einer Schutzgasatmosphäre gearbeitet.

Die Reaktionsdauer liegt abhängig von der Reaktivität der Rylenanthramine III im allgemeinen bei 2 bis 80 h.

Verfahrenstechnisch geht man in Schritt b) zweckmäßigerweise wie folgt vor:

Man legt wasserfreies Lösungsmittel und Base in einer Schutzgasatmosphäre vor, erhitzt auf die gewünschte Reaktionstemperatur und gibt dann das Rylenanthramin III, gewünschtenfalls in Form einer Lösung oder Suspension in möglichst wenig weiterem Lösungsmittel zu. Nach einer Reaktionszeit von 2 bis 80 h kühlt man das Reaktionsgemisch auf 50-60°C ab, gibt eine dem Lösungsmittelvolumen äquivalente Menge an niedrigsiedendem Alkohol, z.B. Methanol oder Ethanol, zu und läßt die Mischung unter Rühren erkalten. Anschließend stellt man durch Zugabe einer Säure, z.B. 50 gew.-%iger Essigsäure, einen pH-Wert von 6 ein, filtriert das Reaktionsprodukt ab, wäscht mit heißem Wasser und trocknet im Vakuum bei etwa 100°C.

Gewünschtenfalls können die erhaltenen unsubstituierten Rylenfarbstoffe I durch Extraktion mit einem Lösungsmittel wie Tetrahydrofuran weiter aufgereinigt werden.

Sollen Rylenfarbstoffe I (I', I'' bzw. I''') hergestellt werden, die im Rylenkern bromiert sind, so werden die unsubstituierten Rylenfarbstoffe I gemäß Schritt c) der erfindungsgemäßen Verfahren mit elementarem Brom umgesetzt.

Als Lösungsmittel eignen sich insbesondere aliphatische Monocarbonsäuren, die vorzugsweise 1 bis 4 Kohlenstoffatome aufweisen, wie Ameisensäure, Essigsäure, Propionsäure und Buttersäure sowie deren Mischungen, und halogenierte aliphatische oder aromatische Kohlenwasserstoffe, wie Methylenchlorid, Chloroform und Chlorbenzol.

Üblicherweise kommen 50 bis 300 g, vorzugsweise 70 bis 100 g, Lösungsmittel je g zu bromierender Rylenfarbstoff I zum Einsatz.

Das Molverhältnis Brom zu Rylenfarbstoff I hängt von dem gewünschten Bromierungsgrad ab. Im allgemeinen werden je einzuführendes Bromatom 1,1 bis 3 mol je mol I eingesetzt.

In der Regel ist die Anwesenheit eines Halogenierungskatalysators nicht erforderlich. Will man jedoch die Bromierungsreaktion beschleunigen (etwa um den Faktor 1,5 bis 3), so empfiehlt es sich, elementares Iod, bevorzugt in einer Menge von 1 bis 5 mol-%, bezogen auf I, zuzusetzen.

Die Reaktionstemperatur beträgt im allgemeinen 0 bis 70°C, vorzugsweise 10 bis 40°C.

In Abhängigkeit von der Reaktivität des zu bromierenden Rylenfarbstoffs I und der An- oder Abwesenheit von Iod ist die Bromierung üblicherweise in 2 bis 24 h beendet.

Verfahrenstechnisch geht man in Schritt c) zweckmäßigerweise wie folgt vor:

Man legt Lösungsmittel und Rylenfarbstoff I vor, stellt die Mischung unter Rühren in 15 bis 30 min auf die gewünschte Reaktionstemperatur ein, setzt gegebenenfalls den Karalysator und anschließend in 5 bis 10 min die gewünschte Brommenge zu und rührt die Mischung unter Lichtausschluß 2 bis 24 h bei der Reaktionstemperatur. Nach Entfernen von überschüssigem Brom mit einem kräftigen Stickstoffstrom trägt man das Reaktionsgemisch in die etwa gleiche Menge eines aliphatischen Alkohols, wie Methanol, ein, rührt über Nacht, filtriert das ausgefallene Produkt ab, wäscht es vorzugsweise mit dem gleichen Alkohol und mit Wasser und trocknet es unter Vakuum bei etwa 120°C.

Üblicherweise werden die so hergestellten bromierten Rylenfarbstoffe I vor Folgeumsetzungen durch Säulenchromatographie an Kieselgel mit Chloroform als Eluens oder durch Extraktion mit einem Lösungsmittel, wie Ethanol, aufgereinigt.

Rylenfarbstoffe I, die im Rylenkern durch gegebenenfalls alkyl- oder alkoxysubstituiertes Aryloxy, Arylthio, Hetaryloxy oder Hetarylthio substituiert sind, können gemäß Schritt d1) der erfindungsgemäßen Verfahren durch Umsetzung der bromierten Rylenfarbstoffe I mit einem aromatischen oder heteroaromatischen Alkohol oder Thioalkohol IV in Gegenwart eines inerten stickstoffbasischen organischen Lösungsmittels und einer Base hergestellt werden.

Als inertes stickstoffbasisches Lösungsmittel eignen sich hierfür insbesondere polare Lösungsmittel, vor allem Stickstoffheterocyclen, wie Pyridin, Pyrimidin, Chinolin, Isochinolin, Chinaldin und vorzugsweise N-Methylpyrrolidon, sowie Carbonsäureamide, wie N,N-Dimethylformamid und N,N-Dimethylacetamid.

Die Lösungsmittelmenge beträgt abhängig von der Löslichkeit des bromierten Rylenfarbstoffs I üblicherweise 2 bis 40 g, vorzugsweise 4 bis 25 g, je g bromierter Rylenfarbstoff I.

Als Base sind insbesondere nicht oder nur schwach nukleophile Verbindungen geeignet. Beispiele für solche Basen sind Alkalimetallhydroxide, wie Kalium- und Natriumhydroxid, Alkalimetallcarbonate, wie Kalium- und Natriumcarbonat, sowie Alkalimetallalkoholate tertiärer Alkohole, wie Lithium-, Natrium- und Kalium-tert.-butanolat, die in wasserfreier Form zum Einsatz kommen.

In der Regel werden 0,8 bis 1,5, bevorzugt 1 bis 1,2, Moläquivalente Base je mol zu substituierendes Bromatom eingesetzt.

Das Molverhältnis bromierter Rylenfarbstoff I zu Alkohol bzw. Thioalkohol IV hängt ebenfalls von der Anzahl der zu substituierenden Bromatome ab. Im allgemeinen verwendet man 1 bis 2 mol, vorzugsweise 1 bis 1,3 mol, IV je mol auszutauschendes Bromatom.

Die Reaktionstemperatur liegt üblicherweise im Bereich von 50 bis 200°C, bevorzugt bei 60 bis 140°C.

Es empfiehlt sich, die Umsetzung unter Schutzgas durchzuführen.

Die Reaktionszeit beträgt in Abhängigkeit von der Reaktivität des bromierten Rylenfarbstoffs I etwa 2 bis 48 h.

Durch Auswahl der Reaktionsbedingungen - Menge an Alkohol oder Thioalkohol IV und Base sowie Reaktionstemperatur - kann der Bromaustausch vorteilhaft gesteuert werden, so daß sowohl Rylenfarbstoffe I, in denen alle Bromatome ausgetauscht sind, als auch Rylenfarbstoffe I, die noch Brom enthalten, problemlos hergestellt werden können. Gewünschtenfalls kann das Brom anschließend noch aus dem Rylenfarbstoff I entfernt werden.

Verfahrenstechnisch geht man in Schritt d1) zweckmäßigerweise so vor, daß man das Lösungsmittel vorlegt, bromierten Rylenfarbstoff I, Alkohol oder Thioalkohol IV und Base zugibt und die erhaltene Lösung bzw. Suspension unter Rühren unter Schutzgas 2 bis 48 h auf die gewünschte Reaktionstemperatur erhitzt.

Die Isolierung des Reaktionsprodukts kann nach Abkühlen auf Raumtemperatur durch direktes Abfiltrieren des ausgefallenen Reaktionsprodukts oder durch Abfiltrieren nach Verdünnen mit dem 3-4fachen Volumen an Wasser, einer verdünnten anorganischen Säure, z.B. 5 bis 10 gew.-%iger Salzsäure, oder eines aliphatischen Alkohols, z.B. Methanol, Waschen zunächst mit wenig Lösungsmittel und anschließend mit Wasser bis zum neutralen Ablauf und Trocknen im Vakuum erfolgen.

In manchen Fällen kann es für die Erzielung einer hohen Produktreinheit von Vorteil sein, die Reaktion zweistufig durchzuführen. Hierbei setzt man den bromierten Rylenfarbstoff I zunächst nur mit einer Teilmenge, zweckmäßigerweise der zum Austausch der labilsten Bromsubstituenten benötigten Menge, an Alkohol oder Thioalkohol IV und Base um, trennt das teilumgesetzte Produkt durch Filtration aus dem Reaktionsgemisch ab und setzt dieses anschließend mit der restlichen Menge IV und Base zum gewünschten Produkt um.

Rylenfarbstoffe I, die im Rylenkern durch Cyano substituiert sind, können gemäß Schritt d2) der erfindungsgemäßen Verfahren durch Umsetzung der bromierten Rylenfarbstoffe I mit Kupfer(I)cyanid in Gegenwart eines dipolar-aprotischen organischen Lösungsmittels hergestellt werden.

Als dipolar-aprotisches Lösungsmittel sind dabei vor allem Sulfoxide, wie Dimethylsulfoxid, Sulfone, wie Sulfolan, N-Methylpyrrolidon, Carbonsäureamide, wie Dimethylformamid und Dimethylacetamid, und Stickstoffheterocyclen, wie Pyridin, Pyrimidin, Chinolin, Isochinolin und Chinaldin, geeignet.

Die Menge Lösungsmittel ist an sich nicht kritisch, üblicherweise kommen 20 bis 100 g, vorzugsweise 40 bis 60 g, Lösungsmittel je g bromierter Rylenfarbstoff I zum Einsatz.

Das Molverhältnis bromierter Rylenfarbstoff I zu Kupfer(I)cyanid hängt von der Anzahl der zu substituierenden Bromatome ab. Im allgemeinen verwendet man 1 bis 3 mol, bevorzugt 1 bis 1,3 mol, Kupfer(I)cyanid je mol auszutauschendes Bromatom.

Die Reaktionstemperatur beträgt üblicherweise 50 bis 280°C, vor allem 100 bis 180°C.

Zweckmäßigerweise führt man die Umsetzung unter Schutzgas durch.

Die Reaktionszeit liegt in der Regel bei etwa 1 bis 48 h.

Verfahrenstechnisch geht man in Schritt d2) zweckmäßigerweise so vor, daß man das Lösungsmittel vorlegt, bromierten Rylenfarbstoff I und Kupfer(I)cyanid zugibt und die erhaltene Lösung bzw. Suspension unter Rühren unter Schutzgas 1 bis 48 h auf die gewünschte Reaktionstemperatur erhitzt.

Die Isolierung des Reaktionsprodukts kann wie bei Schritt d1) erfolgen.

Rylenfarbstoffe I, die im Rylenkern durch gegebenenfalls substituiertes C₃-C₁₈-1-Alkinyl substituiert sind, sind gemäß Schritt d3) der erfindungsgemäßen Verfahren durch Umsetzung der bromierten Rylenfarbstoffe I mit einem Alkin V in Gegenwart eines aprotischen Lösungsmittels, eines Palladiumkomplexes als Katalysator, eines Kupfersalzes als Cokatalysator und einer Base erhältlich.

Als aprotisches Lösungsmittel eignen sich insbesondere lineare und cyclische aliphatische Ether mit bis zu 10 C-Atomen, wie Diethylether, Di-n-propylether, Di-n-butylether, 1,2-Dimethoxyethan, 1,2-Diethoxyethan, Dioxan und vor allem Tetrahydrofuran.

Im allgemeinen werden 20 bis 100 g, bevorzugt 40 bis 60 g, Lösungsmittel je g bromierter Rylenfarbstoff I eingesetzt.

Die zugesetzte Base dient gleichzeitig als Cosolvens. Geeignet sind hierfür vor allem mit den Ethern mischbare organische Stickstoffbasen mit einem Schmelzpunkt unterhalb Raumtemperatur und einem Siedepunkt oberhalb der Reaktionstemperatur. Bevorzugte Basen sind aliphatische Amine mit bis zu 15 C-Atomen, insbesondere tertiäre Amine, wie Triethylamin, Tri-n-propylamin und Tri-n-butylamin, und cycloaliphatische Amine, vor allem Piperidin.

Üblicherweise kommen 0,2 bis 1,5 g, vorzugsweise 0,8 bis 1,2 g, Base je g Lösungsmittel zum Einsatz.

Beispiele für als Katalysator geeignete Palladiumkomplexe sind Tetrakis(tris-o-tolylphosphin)palladium(0), [1,2-Bis(diphenylphosphino)ethan]palladium(II)chlorid, [1,1'-Bis(diphylphosphino)ferrocen]palladium(II)chlorid, Bis(triethylphosphin)palladium(II)chlorid, Bis(tricyclohexylphosphin)palladium(II)chlorid, Bis(triphenylphosphin)palladium(II)acetat, (2,2'-Bipyridyl)palladium(II)chlorid und insbesondere Tetrakis(triphenylphosphin) palladium(0), Bis(triphenylphosphin)palladium(II)chlorid, Bis(acetonitril)palladium(II)chlorid und Bis(benzonitril)palladium(II)chlorid.

Beispiel für ein als Cokatalysator besonders geeignetes Kupfer(I)salz ist Kupfer(I)iodid.

In der Regel werden 2 bis 15 mol-%, vorzugsweise 5 bis 10 mol-%, Palladiumkomplex und im allgemeinen 2 bis 20 mol-%, bevorzugt 7 bis 12 mol-%, Kupfersalz, jeweils bezogen auf bromierten Rylenfarbstoff I, eingesetzt.

Das Molverhältnis bromierter Rylenfarbstoff I zu Alkin hängt wiederum von der Anzahl der zu substituierenden Bromatome ab. Im allgemeinen verwendet man 1 bis 2 mol, vorzugsweise 1 bis 1,5 mol, Alkin V je mol auszutauschendes Bromatom.

Die Reaktionstemperatur beträgt üblicherweise 20 bis 140°C, vor allem 40 bis 90°C.

Je nach dem eingesetzten Alkin kann die Umsetzung bei Normaldruck oder bei einem Überdruck von üblicherweise bis zu 50 bar durchgeführt werden. Die Arbeitsweise unter Druck ist erforderlich beim Einsatz flüchtiger Alkine.

Die Reaktionszeit liegt im allgemeinen bei 3 bis 12 h.

Verfahrenstechnisch geht man in Schritt d3) zweckmäßigerweise so vor, daß man das möglichst wasserfreie Lösungsmittel und die möglichst wasserfreie Base vorlegt, bromierten Rylenfarbstoff I zugibt, nach mehrfachem Entgasen und Belüften mit trockenem Stickstoff der erhaltenen Lösung bzw. Suspension unter Rühren unter Stickstoff Kupfersalz, Palladiumkomplex und Alkin zugibt (flüchtige Alkine werden abgewogen in die geschlossene Apparatur eingegast) und 3 bis 12 h auf die gewünschte Reaktionstemperatur erhitzt.

Die Isolierung des Reaktionsprodukts kann wie bei Schritt d1) erfolgen.

Rylenfarbstoffe I, die im Rylenkern durch -NR³₂ substituiert sind, können gemäß Schritt d4) der erfindungsgemäßen Verfahren durch Umsetzung der bromierten Rylenfarbstoffe I mit Ammoniak oder einem Amin VI in Gegenwart eines dipolar-aprotischen organischen Lösungsmittels hergestellt werden.

Als dipolar-aprotische Lösungsmittel sind dabei die bereits für Schritt d2) beispielhaft genannten Lösungsmittel geeignet.

Die Menge Lösungsmittel ist an sich nicht kritisch, üblicherweise kommen 20 bis 100 g, vorzugsweise 40 bis 60 g, Lösungsmittel je g bromierter Rylenfarbstoff I zum Einsatz.

Das Molverhältnis bromierter Rylenfarbstoff I zu Ammoniak oder Amin VI hängt wiederum von der Anzahl der zu substituierenden Bromatome ab. Im allgemeinen verwendet man 1 bis 4 mol, bevorzugt 1 bis 1,5 mol, Ammoniak oder Amin VI je mol auszutauschendes Bromatom.

Die Reaktionstemperatur beträgt üblicherweise 50 bis 280°C, vor allem 80 bis 160°C.

Je nach dem eingesetzten Amin VI kann die Umsetzung bei Normaldruck oder bei einem Überdruck von in der Regel bis zu 50 bar durchgeführt werden. Die Arbeitsweise unter Druck ist erforderlich bei Einsatz von Ammoniak oder flüchtigen Aminen VI.

In der Regel haben die erfindungsgemäß erhaltenen substituierten Rylenfarbstoffe I bereits einen so hohen Wertgehalt (> 95%), daß auf eine weitere Reinigung verzichtet werden kann. Analysenreine Produkte können durch Umkristallisation aus aromatischen Lösungsmitteln, wie Toluol und Xylol, oder halogenierten aliphatischen oder aromatischen Kohlenwasserstoffen, wie Methylenchlorid und Chloroform bzw. Chlorbenzol und 1,2-Dichlorbenzol, oder durch Filtration einer Lösung der Produkte in diesen Lösungsmitteln über Kieselgel und anschließendes Einengen hergestellt werden.

Die erfindungsgemäßen Rylenfarbstoffe I eignen sich hervorragend zur homogenen Einfärbung von hochmolekularen organischen und anorganischen Materialien, insbesondere z.B. von Kunststoffen, vor allem von thermoplastischen Kunststoffen, Lacken und Druckfarben sowie oxidischen Schichtsystemen.

Außerdem eignen sie sich als Dispergierhilfsmittel, Pigmentadditive für organische Pigmente und Zwischenprodukte für die Herstellung von Pigmentadditiven, zur Herstellung farbiger oder im nahinfraroten Bereich des elektromagnetischen Spektrums absorbierender wäßriger Polymerisatdispersionen und als Photoleiter in der Elektrophotographie.

### Beispiele

Herstellung von erfindungsgemäßen Rylenfarbstoffen der Formeln I' I'' und I'''

### a1) Herstellung von Rylenanthraminen III'

### Beispiele 1 bis 5

Eine Mischung aus x₁ g (9,0 mmol) peri-Bromrylen-3,4-dicarbonsäureimid II', 1,8 g (8,0 mmol) 1-Aminoanthrachinon, 60 mg (0,27 mmol) Palladium(II)acetat, 0,39 g (0,71 mmol) Bis(2-diphenylphosphinophenyl)ether und a₁ l wasserfreiem Toluol wurde unter Stickstoff mit 0,96 g (10,0 mmol) Natrium-tert.-butanolat versetzt und dann auf 80°C erhitzt. Nach t₂ h wurde das Reaktionsgemisch auf Raumtemperatur abgekühlt.

Das Reaktionsprodukt wurde abfiltriert, zunächst mit 250 ml Toluol, dann mit 500 ml Ethanol und abschließend mit heißem Wasser gewaschen und bei 80°C im Vakuum getrocknet.

Weitere Einzelheiten zu den Versuchen sowie deren Ergebnisse sind in Tabelle 1 zusammengestellt.

**Tabelle 1**

| Bsp. | x₁ [g] | peri-Bromrylen-3,4-dicarbon-säureimid II' | a₁ [1] | t₁ [h] | Ausbeute [g]/[%] | Aussehen | Smp. [°C] |
|---|---|---|---|---|---|---|---|
| 1 | 5,0 | 9-Brom-N-(2,6-diisopropylphenyl)-perylen-3,4-dicarbonsäureimid | 0,7 | 14 | 5,7/90 | gold-schwarz, amorph | >350 |
| 2 | 6,2 | 11-Brom-N-dodecylterrylen-3,4-dicarbonsäureimid | 1,0 | 24 | 6,4/85 | schwarzviolett, amorph | >350 |
| 3 | 5,7 | 11-Brom-N-(4-methoxyphenyl)-terrylen-3,4-dicarbonsäureimid | 1,0 | 24 | 6,3/90 | schwarzviolett, amorph | >350 |
| 4 | 6,2 | 11-Brom-N-(2,6-diisopropylphenyl)-terry-len-3,4-dicarbonsäureimid | 1,0 | 24 | 6,8/91 | schwarzvio- lett, mikro-kristallin | >350 |
| 5 | 7,3 | 13-Brom-N-(2,6-diisopropylphenyl)-quaterrylen-3,4-dicarbonsäureimid | 1,5 | 40 | 6,8/80 | grünschwarz, kristallin | >350 |

### Analytische Daten zu Beispiel 1:

N-(2,6-Diisopropylphenyl)-9-[N'-1,-(aminoanthrachinonyl)]-perylen-3,4-dicarbonsäureimid:
Elementaranalyse (Gew.-% ber./gef.):
   C: 82,0/81,9; H: 4,9/4,9; N: 4,0/3,9; 0: 9,1/9,0;
   Masse (FD, 8kV): m/z = 702,2 (M⁺, 100%);
   IR (KBr): ν (cm⁻¹) = 1697, 1662, 1629, 1592, 1563;
   UV/VIS (CHCl₃) : λₘₐₓ (ε) = 530 (28400) nm.

### Analytische Daten zu Beispiel 2:

N-Dodecyl-9-[N'-1-(aminoanthrachinonyl)]perylen-3,4-dicarbonsäureimid:
Elementaranalyse (Gew.-% ber./gef.):
   C: 81,1/81,0; H: 6,0/5,9; N: 3,9/4,0; O: 9,0/9,1;
   Masse (FD, 8kV): m/z = 710,3 (M⁺, 100%).

### Analytische Daten zu Beispiel 3:

N-(4-Methoxyphenyl)-9-[N'-1-(aminoanthrachinonyl)]-perylen-3,4-dicarbonsäureimid:
Elementaranalyse (Gew.-% ber./gef.):
   C: 79,6/79,6; H: 3,7/3,6; N: 4,3/4,4; O: 12,3/12,3;
   Masse (FD, 8kV): m/z = 648,2 (M⁺, 100%).

### Analytische Daten zu Beispiel 4:

N-(2,6-Diisopropylphenyl)-11-[N'-1-(aminoanthrachinonyl)]terrylen-3,4-dicarbonsäureimid:
Elementaranalyse (Gew.-% ber./gef.):
   C: 84,2/84,0; H: 4,6/4,8; N: 3,4/3,6; O: 7,7/7,5;
   Masse (FD, 8kV): m/z = 826,3 (M⁺, 100%).

### Analytische Daten zu Beispiel 5:

N-(2,6-Diisopropylphenyl)-13-[N'-1-(aminoanthrachinonyl)]quaterrylen-3,4-dicarbonsäureimid:
Elementaranalyse (Gew.-% ber./gef.): C: 85,9/86,0; H: 4,5/4,3; N: 3,0/3,2; O: 6,7/6,4;
Masse (FD, 8kV): m/z = 950,3 (M⁺, 100%).

### a2) Herstellung von Rylenanthraminen III''

### Beispiele 6 bis 11

Eine Mischung aus x₂ g (9,0 mmol) peri-Bromrylen-3,4-dicarbonsäureimid II', 0,95 g (4,0 mmol) 1,5-Diaminoanthrachinon, 60 mg (0,27 mmol) Palladium(II)acetat, 0,39 g (0,71 mmol) Bis(2-diphenylphosphinophenyl)ether und a₂ 1 wasserfreiem Toluol wurde unter Stickstoff mit 0,96 g (10,0 mmol) Natrium-tert.-butanolat versetzt und dann auf 80°C erhitzt. Nach t₂ h wurde das Reaktionsgemisch auf Raumtemperatur abgekühlt.

Das Reaktionsprodukt wurde abfiltriert, zunächst mit 250 ml Toluol, dann mit 500 ml Ethanol und abschließend mit heißem Wasser gewaschen und bei 80°C im Vakuum getrocknet.

Weitere Einzelheiten zu den Versuchen sowie deren Ergebnisse sind in Tabelle 2 zusammengestellt. Die Ausbeute ist dabei auf II'' bezogen.

**Tabelle 2**

| Bsp. | x₂ [g] | peri-Bromrylen-3,4-dicarbon-säureimid II' | a₂ [l] | t₂ [h] | Ausbeute [g]/[%] | Aussehen | Smp. [°C] |
|---|---|---|---|---|---|---|---|
| 6 | 4,0 | 4-Brom-N-(2,6-diisopropylphenyl)-naphthalin-1,8-dicarbonsäureimid | 0,4 | 24 | 4,0/94 | dunkelbraun, amorph | 245 |
| 7 | 5,0 | 9-Brom-N-(2,6-diisopropyl- , phenyl)-perylen-3,4-dicarbonsäureimid | 0,5 | 18 | 5,0/92 | schwarzviolett, mikrokristallin | 290 |
| 8 | 6,2 | 11-Brom-N-dodecylterrylen-3,4-dicarbonsäureimid | 1,0 | 24 | 5,5/84 | schwarz, amorph | >350 |
| 9 | 5,7 | 11-Brom-N-(4-methoxyphenyl)-terrylen-3,4-dicarbonsäureimid | 1,0 | 24 | 5,2/86 | schwarzviolett, amorph | >350 |
| 10 | 6,2 | 11-Brom-N-(2,6-diisopropylphenyl)-terry-len-3,4-dicarbonsäureimid | 1,0 | 30 | 6,1/93 | schwarzviolett, amorph | >350 |
| 11 | 7,3 | 13-Brom-N-(2,6-diisopropylphenyl)-quaterrylen-3,4-dicarbonsäureimid | 2,0 | 40 | 6,7/88 | schwarz, mikrokristallin | >350 |

### Analytische Daten zu Beispiel 6:

N,N'-Bis[4-(N''-(2,6-diisopropylphenyl)naphthalin-1,8-dicarbonsäureimid)yl]-1,5-diaminoanthrachinon:
Elementaranalyse (Gew.-% ber./gef.):
   C: 78,5/78,7; H: 5,5/5,3; N: 5,9/5,8; O: 10,1/10,0;
   Masse (FD, 8kV): m/z = 948,4 (M⁺, 100%);
   IR (KBr): ν (cm⁻¹) = 1706, 1668, 1629, 1571;
   UV/VIS (CHCl₃) : λₘₐₓ (ε) = 426 (18400), 531 (13200) nm.

### Analytische Daten zu Beispiel 7:

N,N'-Bis[9-(N''-(2,6-diisopropylphenyl)perylen-3,4-dicarbonsäureimid)yl]-1,5-diaminoanthrachinon:
Elementaranalyse (Gew.-% ber./gef.):
   C: 82,3/82,0; H: 5,1/5,3; N: 4,7/4,7; O: 8,0/8,0;
   Masse (FD, 8kV): m/z = 1196,5 (M⁺, 100%);
   IR (KBr): ν (cm⁻¹) = 1702, 1662, 1627, 1594, 1565;
   UV/VIS (CHCl₃) : λₘₐₓ (ε) = 556 (27100) nm.

### Analytische Daten zu Beispiel 8:

N,N'-Bis[9-(N''-dodecylperylen-3,4-dicarbonsäureimid)yl]-1,5-diaminoanthrachinon:
Elementaranalyse (Gew.-% ber./gef.):
   C: 81,2/81,0; H: 6,3/6,3; N: 4,6/4,7; O: 7,9/7,9;
   Masse (FD, 8kV): m/z = 1212,6 (M⁺, 100%).

### Analytische Daten zu Beispiel 9:

N,N'-Bis[9-(N"-(4-methoxyphenyl)perylen-3,4-dicarbonsäureimid)yl]-1,5-diaminoanthrachinon:
Elementaranalyse (Gew.-% ber./gef.):
   C: 79,4/79,5; H: 3,7/3,5; N: 5,1/5,0; O: 11,8/11,9;
   Masse (FD, 8kV): m/z = 1088,3 (M⁺, 100%).

### Analytische Daten zu Beispiel 10:

N,N'-Bis[11-(N''-(2,6-diisopropylphenyl)terrylen-3,4-dicarbonsäureimid)yl]-1,5-diaminoanthrachinon:
Elementaranalyse (Gew.-% ber./gef.):
   C: 84,7/84,5; H: 4,7/4,8; N: 3,9/3,9; 0: 6,6/6,7;
   Masse (FD, 8kV) : m/z = 1444,5 (M⁺, 100%);
   IR (KBr): ν (cm⁻¹) = 1700, 1669, 1635, 1565.

### Analytische Daten zu Beispiel 11:

N,N'-Bis[13-(N''-(2,6-diisopropylphenyl)quaterrylen-3,4-dicarbonsäureimid)yl]-1,5-diaminoanthrachinon:
Elementaranalyse (Gew.-% ber./gef.):
   C: 86,5/86,5; H: 4,5/4,3; N: 3,3/3,4; 0: 5,7/5,7;
   Masse (FD, 8kV): m/z = 1692,6 (M⁺, 100%);
   IR (KBr): ν (cm⁻¹) = 1708, 1666, 1627, 1566.

### a3) Herstellung von Rylenanthraminen III"'

### Beispiel 12

### Teilschritt a'):

Eine Mischung aus 3,3 g (7,5 mmol) N-(2,6-Diisopropylphenyl)-4-bromnaphthalin-1,8-dicarbonsäureimid (II'), 2,4 g (10,0 mmol) 1,5-Diaminoanthrachinon, 60 mg (0,27 mmol) Palladium(II)acetat, 0,39 g (0,71 mmol) Bis(2-diphenylphosphinophenyl)ether und 500 ml wasserfreiem Toluol wurde unter Stickstoff mit 0,77 g (8,0 mmol) Natrium-tert.-butanolat versetzt und dann auf 80°C erhitzt. Nach 20 h wurde das Reaktionsgemisch auf Raumtemperatur abgekühlt.

Das Rohprodukt wurde abfiltriert, zunächst mit 100 ml Toluol, dann mit 300 ml Ethanol und abschließend mit heißem Wasser gewaschen und bei 80°C im Vakuum getrocknet. Durch Säulenchromatographie an Kieselgel mit Chloroform als Eluens wurde reines N-[4-(N'-(2,6-Diisopropylphenyl)naphthalin-1,8-dicarbonsäureimid)yl]-1,5-diaminoanthrachinon erhalten.

### Teilschritt a''):

Eine Mischung aus 5,0 g (9,0 mmol) 9-Brom-N-(2,6-diisopropylphenyl)perylen-3,4-dicarbonsäureimid (II''', 4,5 g (7,5 mmol) N-[4-(N'-(2,6-Diisopropylphenyl)naphthalin-1,8-dicarbonsäureimid)yl]-1,5-diaminoanthrachinon, 60 mg (0,27 mmol) Palladium(II)acetat, 0,39 g (0,71 mmol) Bis(2-diphenylphosphinophenyl)ether und 1 1 wasserfreiem Toluol wurde unter Stickstoff mit 0,96 g (10,0 mmol) Natrium-tert.-butanolat versetzt und dann auf 80°C erhitzt. Nach 24 h wurde das Reaktionsgemisch auf Raumtemperatur abgekühlt.

Das Reaktionsprodukt wurde abfiltriert, zunächst mit 150 ml Toluol, dann mit 500 ml Ethanol und abschließend mit heißem Wasser gewaschen und bei 80°C im Vakuum getrocknet.

Es wurden 5,6 g Rylenanthramin III''' erhalten, was einer Ausbeute von 52%, bezogen auf 1,5-Diaminoanthrachinon, entspricht.

### Analytische Daten zu Beispiel 12:

N-[4-(N''(2,6-Diisopropylphenyl)naphthalin-1,8-dicarbonsäureimid)yl-N'-[9-(N'''-(2,6-diisopropylphenyl)perylen-3,4-dicarbonsäureimid)yl]-1,5-diaminoanthrachinon:
Elementaranalyse (Gew.-% ber./gef.):
C: 80,6/80,4; H: 5,3/5,4; N: 5,2/5,4; 0: 8,9/8,7;
Masse (FD, 8kV): m/z = 1073,3 (M⁺, 100%);
IR (KBr): ν (cm⁻¹) = 1704, 1669, 1631, 1568;
UV/VIS (CHCl₃): λₘₐₓ = 433, 561 nm.

### Herstellung von unsubstituierten Rylenfarbstoffen I', I'' und I'''

### Beispiele 13 bis 24

Eine Mischung aus 15,0 g (133 mmol) Kalium-tert.-butanolat, 20,0 g (131 mmol) 1,8-Diazabicyclo[5.4.0]undec-7-en und 200 ml Diethylenglykoldiethylether wurde 1 h unter Stickstoff bei 120°C gerührt. Nach Zugabe von x₃ g (10,0 mmol) Rylenanthramin III', III'' bzw. III''', suspendiert in 100 ml wasserfreiem N-Methylpyrrolidon, wurde die Mischung auf T₃°C erhitzt und t₃ h bei dieser Temperatur gehalten.

Nach Abkühlen auf 50°C und Zugabe von 300 ml Methanol wurde das Reaktionsgemisch auf Raumtemperatur abgekühlt. Dann wurde soviel 50 gew.-%ige Essigsäure zugegeben, daß sich ein pH-Wert von 6 einstellte. Das Rohprodukt wurde abfiltriert, mit heißem Wasser bis zum neutralen Ablauf gewaschen, bei 100°C im Vakuum getrocknet und anschließend durch Soxhlett-Extraktion mit Tetrahydrofuran aufgereinigt.

Weitere Einzelheiten zu diesen Versuchen sowie deren Ergebnisse sind in Tabelle 3 zusammengestellt.

**Tabelle 3**

| Bsp. | x₃ [g] | Rylenanthrachinon-imid III aus Bsp. | T₃ [°C] | t₃ [h] | Ausbeute [g]/[%] | Aussehen | Smp. [°C] |
|---|---|---|---|---|---|---|---|
| 13 | 7,0 | 1 | 130 | 2 | 6,4/92 | blaugrün, amorph | >350 |
| 14 | 8,4 | 2 | 140 | 12 | 6,8/82 | violettschwarz, amorph | >350 |
| 15 | 7,7 | 3 | 140 | 6 | 6,0/78 | schwarz, amorph | >350 |
| 16 | 8,3 | 4 | 140 | 8 | 6,9/84 | blauschwarz, amorph | >350 |
| 17 | 9,5 | 5 | 130 | 6 | 6,1/64 | schwarz, amorph | >350 |
| 18 | 9,5 | 6 | 125 | 12 | 6,8/72 | grün, amorph | >350 |
| 19 | 12,0 | 7 | 130 | 24 | 6,3/53 | violettschwarz, amorph | >350 |
| 20 | 14,6 | 8 | 160 | 40 | 9,2/63 | schwarz, amorph | >350 |
| 21 | 13,3 | 9 | 160 | 12 | 7,6/57 | schwarz, amorph | >350 |
| 22 | 14,5 | 10 | 160 | 12 | 9,8/68 | schwarz, amorph | >350 |
| 23 | 16,9 | 11 | 160 | 48 | 8,8/52 | schwarz, amorph | >350 |
| 24 | 10,7 | 12 | 140 | 36 | 6,4/60 | blauschwarz, amporph | >350 |

### Analytische Daten zu Beispiel 13:

Cyclodehydrierungsprodukt aus N-(2,6-Diisopropylphenyl)-9-[N'-1-(aminoanthrachinonyl)]perylen-3,4-dicarbonsäureimid:
Elementaranalyse (Gew.-% ber./gef.):
   C: 82,3/82,1; H: 4,6/4,8; N: 4,0/4,0; O: 9,1/9,0;
   Masse (FD, 8kV): m/z = 700,2 (M⁺, 100%);
   UV/VIS (1,2,4-Trichlorbenzol): λₘₐₓ (ε) = 601 (23200),
   800 (22000) nm.

### Analytische Daten zu Beispiel 14:

Cyclodehydrierungsprodukt aus N-Dodecyl-9-[N'-1-(aminoanthrachinonyl)]perylen-3,4-dicarbonsäureimid:
Elementaranalyse (Gew.-% ber./gef.):
   C: 81,3/81,3; H: 5,7/5,8; N: 4,0/3,9; O: 9,0/8,9;
   Masse (FD, 8kV): m/z = 708,3 (M⁺, 100%);
   UV/VIS (1,2,4-Trichlorbenzol) λₘₐₓ (ε) = 602 (23100),
   802 (22000) nm.

### Analytische Daten zu Beispiel 15:

Cyclodehydrierungsprodukt aus N-(4-Methoxyphenyl)-9-[N'-1-(aminoanthrachinonyl)]perylen-3,4-dicarbonsäureimid:
Elementaranalyse (Gew.-% ber./gef.):
   C: 79,9/79,8; H: 3,4/3,4; N: 4,3/4,4; O: 12,4/12,3;
   Masse (FD, 8kV): m/z = 646,2 (M⁺, 100%);
   UV/VIS (1,2,4-Trichlorbenzol) : λₘₐₓ (ε) = 602 (23100),
   801 (21900) nm.

### Analytische Daten zu Beispiel 16:

Cyclodehydrierungsprodukt aus N-(2,6-Diisopropylphenyl)-11-[N'-1-(aminoanthrachinonyl)]terrylen-3,4-dicarbonsäureimid:
Elementaranalyse (Gew.-% ber./gef.):
   C: 84,5/84,7; H: 4,4/4,4; N: 3,4/3,2; O: 7,8/7,6;
   Masse (FD, 8kV): m/z = 824,9 (M⁺, 100%).

### Analytische Daten zu Beispiel 17:

Cyclodehydrierungsprodukt aus N-(2,6-Diisopropylphenyl)-13-[N'-1-(aminoanthrachinonyl)]quaterrylen-3,4-dicarbonsäureimid:
Elementaranalyse (Gew.-% ber./gef.):
   C: 86,1/86,0; H: 4,3/4,4; N: 3,0/3,2; O: 6,7/6,4;
   Masse (FD, 8kV): m/z = 948,3 (M⁺,100 %).

### Analytische Daten zu Beispiel 18:

Cyclodehydrierungsprodukt aus N,N'-Bis[4-(N''-(2,6-diisopropylphenyl)naphthalin-1,8-dicarbonsäureimid)yl]-1,5-diaminoanthrachinon:
Elementaranalyse (Gew.-% ber./gef.):
   C: 78,8/78,5; H: 5,1/5,3; N: 5,9/5,9; O: 10,2/10,2;
   Masse (FD, 8kV): m/z = 944,4 (M⁺, 100%);
   IR (KBr): ν (cm⁻¹) = 1697, 1654, 1621;
   UV/VIS (1, 2,4-Trichlorbenzol) : λₘₐₓ (ε) = 440 (15800),
   735 (16000), 778 (15900) nm.

### Analytische Daten zu Beispiel 19:

Cyclodehydrierungsprodukt aus N,N'-Bis[9-(N''-(2,6-diisopropylphenyl)perrylen-3,4-dicarbonsäureimid)yl]-1,5-diaminoanthrachinon:
Elementaranalyse (Gew.-% ber./gef.):
   C: 82,5/82,2; H: 4,7/4,8; N: 4,7/4,7; O: 8,0/7,8;
   Masse (FD, 8kV) : m/z = 1192,4 (M⁺, 100%).

### Analytische Daten zu Beispiel 20:

Cyclodehydrierungsprodukt aus N,N'-Bis[9-(N''-dodecylperylen-3,4-dicarbonsäureimid)yl]-1,5-diaminoanthrachinon:
Elementaranalyse (Gew.-% ber./gef.):
   C: 81,4/81,4; H: 6,0/5,9; N: 4,6/4,5; O: 7,9/8,0;
   Masse (FD, 8kV): m/z = 1208,6 (M⁺, 100%).

### Analytische Daten zu Beispiel 21:

Cyclodehydrierungsprodukt aus N,N'-Bis[9-(N " -(4-methoxyphenyl)perylen-3,4-dicarbonsäureimid)yl]-1,5-diaminoanthrachinon:
Elementaranalyse (Gew.-% ber./gef.):
   C: 79,7/79,6; H: 3,3/3,4; N: 5,2/5,0; O: 11,8/11,9;
   Masse (FD, 8kV): m/z = 1084,3 (M⁺, 100%).

### Analytische Daten zu Beispiel 22:

Cyclodehydrierungsprodukt aus N,N'-Bis[11-(N''-(2,6-diisopropylphenyl)terrylen-3,4-dicarbonsäureimid)yl]-1,5-diaminoanthrachinon:
Elementaranalyse (Gew.-% ber./gef.):
   C: 85,0/85,1; H: 4,5/4,3; N: 3,9/3,9; O: 6,7/6,7;
   Masse (FD, 8kV) : m/z = 1445,7 (M⁺, 100%).

### Analytische Daten zu Beispiel 23:

Cyclodehydrierungsprodukt aus N,N'-Bis[13-(N''-(2,6-diisopropylphenyl)quaterrylen-3,4-dicarbonsäureimid)yl]-1,5-diaminoanthrachinon:
Elementaranalyse (Gew.-% ber./gef.):
   C: 86,7/86,6; H: 4,3/4,3; N: 3,3/3,3; O: 5,7/5,7;
   Masse (FD, 8kV): m/z = 1688,6 (M⁺, 100%).

### Analytische Daten zu Beispiel 24:

Cyclodehydrierungsprodukt aus N-[4-(N " (2,6-diisopropylphenyl)naphthalin-1,8-dicarbonsäureimid)yl]-N'-[9-(N''',-(2,6-diisopropylphenyl)perylen-3,4-dicarbonsäureimid)yl]-1,5-diaminoanthrachinon:
Elementaranalyse (Gew.-% ber./gef.):
   C: 80,9/80,8; H: 4,9/5,0; N: 5,2/5,3; O: 9,0/8,8;
   Masse (FD, 8kV): m/z = 1068,4 (M⁺, 100%).

### c) Herstellung von bromierten Rylenfarbstoffen I' und I"

### Beispiele 25 und 26

x₄ g (10 mmol) des unsubstituierten Rylenfarbstoffs I' bzw. I'' wurden 30 min in 0,5 1 Chlorbenzol suspendiert. Nach Zugabe von 0,1 g (0,4 mmol) Iod und y₄ g (b₄ mol) Brom wurde die Mischung unter Lichtausschluß 16 h bei 50°C gerührt.

Nach Beendigung der Reaktion wurde überschüssiges Brom durch Hindurchleiten eines kräftigen Stickstoffstroms aus dem Reaktionsansatz entfernt. Nach Verdünnen der Mischung mit 1 l Methanol wurde über Nacht bei Raumtemperatur gerührt. Das ausgefallene Produkt wurde abfiltriert, zunächst mit 0,5 l Methanol und dann mit Wasser bis zum neutralen Ablauf gewaschen und bei 120°C im Vakuum getrocknet. Das Rohprodukt wurde durch eine Säulenfiltration an Kieselgel mit Chloroform als Eluens gereinigt.

Weitere Einzelheiten zu diesen Versuchen sowie deren Ergebnisse sind in Tabelle 4 zusammengestellt. Der Bromierungsgrad wird dabei durch die Zahl m der Bromatome je Molekül Rylenfarbstoff angegeben.

**Tabelle 4**

| Bsp. | x₄ [g] | Rylenfarbstoff I aus Bsp. | y₄ [g] | b₄ [mol] | m | Ausbeute [g]/[%] | Aussehen | Smp. [°C] |
|---|---|---|---|---|---|---|---|---|
| 25 | 7,0 | 13 | 10,0 | 0,10 | 2 | 7,6/89 | blaugrün, amorph | >350 |
| 26 | 11,9 | 19 | 16,0 | 0,10 | 4 | 9,7/64 | violettschwarz, amorph | >350 |

### Analytische Daten zu Beispiel 25:

Elementaranalyse (Gew.-% ber./gef.):
   C: 67,2/67,1; H: 3,5/3,6; N: 3,3/3,1; O: 7,5/7,3;
   Br: 18,6/18,9;
   Masse (FD, 8kV): m/z = 856,1 (M⁺, 100%).

### Analytische Daten zu Beispiel 26:

Elementaranalyse (Gew.-% ber./gef.):
   C: 65,3/65,1; H: 3,5/3,5; N: 3,7/3,5; O: 6,4/6,5;
   Br: 21,2/21,5;
   Masse (FD, 8kV): m/z = 1504,1 (M⁺, 100%).

### d1) Herstellung eines dicyanosubstituierten Rylenfarbstoffs I'

### Beispiel 27

8,58 g (10 mmol) des zweifach bromierten Rylenfarbstoffs I' aus Beispiel 25 und 3,00 g (36 mmol) Kupfer(I)cyanid wurden 30 min unter Stickstoff in 0,2 l Sulfolan suspendiert. Die Mischung wurde dann 2 h auf 285°C erhitzt.

Nach Beendigung der Reaktion und Zugabe von 0,5 l Methanol wurde der Niederschlag abgetrennt. Der Rückstand wurde mit 15 g Eisen(III)chlorid-Hexahydrat, 150 ml Wasser und 36 ml konz. Salzsäure 1 h auf 70°C erhitzt. Nach dem Abkühlen wurde der Niederschlag abgetrennt, mit Wasser gewaschen und im Vakuum bei 120°C getrocknet.

Es wurden 7,23 g des Rylenfarbstoffs I' als violettes Pulver erhalten. Das Rohprodukt wurde zur Abtrennung von unlöslichen Bestandteilen durch eine Säulenfiltration an Kieselgel mit Chloroform als Eluens gereinigt.

### Analytische Daten zu Beispiel 27:

Elementaranalyse (Gew.-% ber./gef.):
   C: 78,0/77,9; H: 4,0/4,1; N: 7,5/7,4; O: 8,5/8,5;
   Masse (FD, 8kV): m/z = 750,2 (M⁺, 100%).

### d2) Herstellung eines dihexinylsubstituierten Rylenfarbstoffs I'

### Beispiel 28

4,29 g (5 mmol) des zweifach bromierten Rylenfarbstoffs I' aus Beispiel 25 wurden im Stickstoffgegenstrom unter Rühren in eine Mischung aus 200 ml frisch destilliertem Piperidin und 200 ml Tetrahydrofuran eingetragen. Nach aufeinanderfolgender Zugabe von 90 mg (0,46 mmol) Kupfer(I)iodid, 450 mg (0,38 mmol) Tetrakis(triphenylphosphin)palladium(0) und 1,016 g (12 mmol) 1-Hexin wurde die Mischung 10 h unter Stickstoff auf 80°C erhitzt.

Die erhaltene schwarz gefärbte Reaktionsmischung wurde nach Abkühlen auf Raumtemperatur unter Rühren in 1,2 l halbkonzentrierte Salzsäure eingetragen. Das ausgefallene Reaktionsprodukt wurde zunächst mit 0,5 l halbkonzentrierter Salzsäure gewaschen, dann mit Wasser neutral gewaschen und bei 100°C im Vakuum getrocknet. Das Rohprodukt wurde chromatographisch über Kieselgel mit Chloroform als Eluens gereinigt.

Es wurden 2,19 g des Rylenfarbstoffs I' in Form eines schwarz-violetten Pulvers erhalten, was einer Ausbeute von 51% entspricht.

### Analytische Daten zu Beispiel 28:

Elementaranalyse (Gew.-% ber./gef.):
   C: 83,7/83,4; H: 5,62/5,75; N: 3,25/3,33; O: 7,43/7,52;
   Masse (FD, 8kV): m/z = 860,4 (M⁺, 100%).

### d3) Herstellung von phenoxysubstituierten Rylenfarbstoffen I', I'' und I'''

### Beispiele 29 und 30

Eine Mischung aus x₅ g (10 mmol) des bromierten Rylenfarbstoffs I, y₅ g (b₅ mmol) tert.-Octylphenol, z₅ g (c₅ mmol) Kaliumcarbonat und 300 ml N-Methylpyrrolidon wurde unter Rühren unter Stickstoff t₅ h auf 85°C erhitzt.

Nach Abkühlen auf Raumtemperatur und Zugabe von 500 ml Methanol wurde das Reaktionsprodukt abfiltriert, mit Wasser bis zum neutralen Ablauf gewaschen und anschließend bei 80°C im Vakuum getrocknet. Zur Abtrennung von unlöslichen Bestandteilen wurde eine Säulenfiltration an Kieselgel mit Dichlormethan als Eluens durchgeführt.

Weitere Einzelheiten zu diesen Versuchen sowie deren Ergebnisse sind in Tabelle 5 zusammengestellt. m gibt dabei die Anzahl der Phenoxysusbstituenten je Molekül Rylenfarbstoff an.

**Tabelle 5**

| Bsp. | x₅ [g] | bromierter Rylenfarbstoff I aus Bsp. | y₅ [g] b₅ [mmol] | z₅ [g] c₅ [mmol] | t₅ [h] | m | Ausbeute [g]/[%] | Aussehen | Smp. [°C] |
|---|---|---|---|---|---|---|---|---|---|
| 29 | 8,6 | 25 | 4,5 | 3,3 | 8 | 2 | 9,1/82 | violettschwarz, amorph | >350 |
| | | | 22 | 24 | | | | | |
| 30 | 15,1 | 26 | 9,1 | 6,6 | 16 | 4 | 14,1/70 | schwarz, amorph | >350 |
| | | | 44 | 48 | | | | | |

### Analytische Daten zu Beispiel 30:

Elementaranalyse (Gew.-% ber./gef.):
   C: 67,2/67,1; H: 3,5/3,6; N: 3,3/3,1; O: 7,5/7,3;
   Br: 18,6/18,9;
   Masse (FD, 8kV): m/z = 856,1 (M⁺, 100%).

### Analytische Daten zu Beispiel 31:

Elementaranalyse (Gew.-% ber./gef.):
   C: 65,3/65,1; H: 3,5/3,5; N: 3,7/3,5; O: 6,4/6,5;
   Br: 21,2/21,5;
   Masse (FD, 8kV): m/z = 1504,1 (M⁺, 100%).

## Patentansprüche

1. Rylenfarbstoffe der allgemeinen Formel I 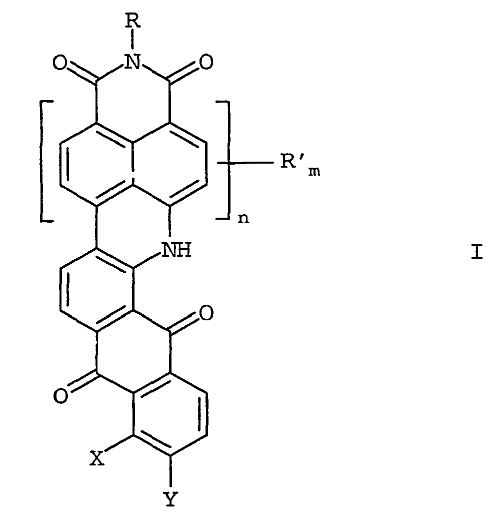 in der die Variablen folgende Bedeutung haben:
R Wasserstoff;
C₁-C₃₀-Alkyl, dessen Kohlenstoffkette durch eine oder mehrere Gruppierungen -O-, -S-, -NR¹-, -CO- und/oder -SO₂- unterbrochen sein kann und das durch Carboxy, Sulfo, Hydroxy, Cyano, C₁-C₆-Alkoxy und/oder einen über ein Stickstoffatom gebundenen, 5- bis 7-gliedrigen heterocyclischen Rest, der weitere Heteroatome enthalten und aromatisch sein kann, ein- oder mehrfach substituiert sein kann;
C₅-C₈-Cycloalkyl, dessen Kohlenstoffgerüst durch eine oder mehrere Gruppierungen -O-, -S- und/oder -NR¹- unterbrochen sein kann und das durch C₁-C₆-Alkyl ein- oder mehrfach substituiert sein kann;
Aryl oder Hetaryl, das jeweils durch C₁-C₁₈-Alkyl, C₁-C₆-Alkoxy, Halogen, Hydroxy, Cyano, Carboxy, -CONHR², -NHCOR² und/oder Aryl- oder Hetarylazo, das jeweils durch C₁-C₁₀-Alkyl, C₁-C₆-Alkoxy, Halogen, Hydroxy, Cyano und/oder Carboxy substituiert sein kann, ein- oder mehrfach substituiert sein kann;
R' Brom; Cyano; -NR³₂;
Aryloxy, Arylthio, Hetaryloxy oder Hetarylthio, das jeweils ein- oder mehrfach durch C₁-C₁₂-Alkyl, C₁-C₁₂-Alkoxy, Cyano, -CONHR² und/oder -NHCOR² substituiert sein kann;
C₃-C₁₈-Alk-1-inyl, dessen Kohlenstoffkette durch eine oder mehrere Gruppierungen -O-, -S-, -NR¹-, -CO- und/oder -SO₂- unterbrochen sein kann und das durch -COOR¹, -SO₃R¹, Hydroxy, Cyano, C₁-C₆-Alkoxy, C₅-C₈-Cycloalkyl, Aryl und/oder einen über ein Stickstoffatom gebundenen, 5- bis 7-gliedrigen heterocyclischen Rest, der weitere Heteroatome enthalten und aromatisch sein kann, ein- oder mehrfach substituiert sein kann;
R¹ Wasserstoff oder C₁-C₆-Alkyl;
R² Wasserstoff; C₁-C₁₈-Alkyl; Aryl oder Hetaryl, das jeweils durch C₁-C₈-Alkyl, C₁-C₆-Alkoxy, Halogen, Hydroxy und/oder Cyano substituiert sein kann;
R³ Wasserstoff; C₁-C₁₈-Alkyl; Aryl oder Hetaryl, das jeweils durch C₁-C₈-Alkyl, C₁-C₆-Alkoxy, Halogen, Hydroxy und/oder Cyano substituiert sein kann; beide Reste R³ zu einem das Stickstoffatom enthaltenden und über dieses gebundenen 5-bis 7-gliedrigen, heterocyclischen Rest verbunden;
X, Ybeide Wasserstoff oder unter Ausbildung eines Sechsrings miteinander verbunden zu einem Rest der Formel Ia 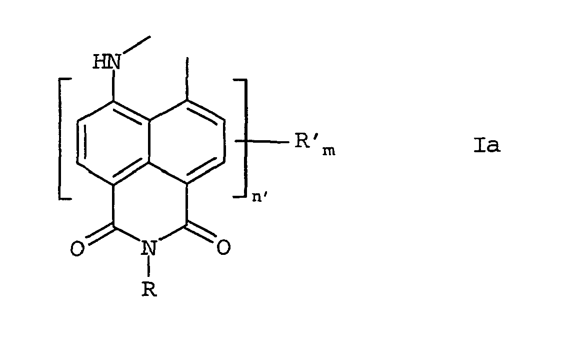 wobei X der Gruppe -NH- und Y der weiteren freien chemischen Bindung entspricht;
n 2, 3, 4 oder zusätzlich 1, wenn X und Y einen Rest der Formel Ia bedeuten;
n' 1 bis 4;
m 0 bis 6.

2. Rylenfarbstoffe der Formel I nach Anspruch 1, in der die Variablen die folgende Beteudung haben:
R C₁-C₃₀-Alkyl, dessen Kohlenstoffkette durch eine oder mehrere Gruppierungen -O-, -S-, -NR¹-, -CO- und/oder -SO₂- unterbrochen sein kann und das durch Hydroxy, Cyano, C₁-C₆-Alkoxy und/oder einen über ein Stickstoffatom gebundenen, 5- bis 7-gliedrigen heterocyclischen Rest, der weitere Heteroatome enthalten und aromatisch sein kann, ein- oder mehrfach substituiert sein kann;
Aryl oder Hetaryl, das jeweils durch C₁-C₁₈-Alkyl, C₁-C₆-Alkoxy, Hydroxy, Cyano, -CONHR² und/oder -NHCOR² ein- oder mehrfach substituiert sein kann;
R' Brom oder Aryloxy, das ein- oder mehrfach durch C₁-C₁₂-Alkyl, C₁-C₆-Alkoxy und/oder Cyano substituiert sein kann;
R¹ Wasserstoff oder C₁-C₆-Alkyl;
R² Wasserstoff; C₁-C₁₈-Alkyl; Aryl oder Hetaryl, das jeweils durch C₁-C₈-Alkyl, C₁-C₆-Alkoxy und/oder Cyano substituiert sein kann;
X, Ybeide Wasserstoff oder unter Ausbildung eines Sechsrings miteinander verbunden zu einem Rest der Formel Ia 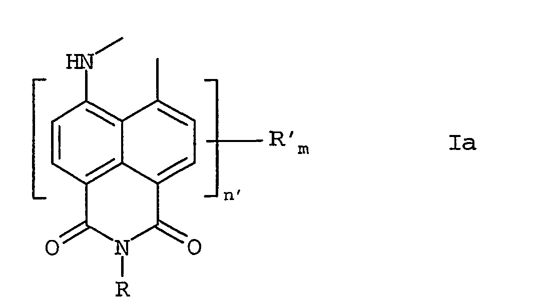 wobei X der Gruppe -NH- und Y der weiteren freien chemischen Bindung entspricht;
n 2, 3, 4 oder zusätzlich 1, wenn X und Y einen Rest der Formel Ia bedeuten;
n' 1 bis 4;
m 0 bis 6.

3. Verfahren zur Herstellung von Rylenfarbstoffen der allgemeinen Formel 1' 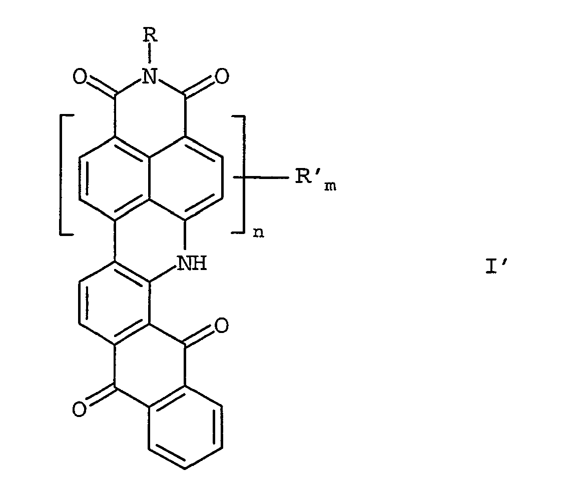 in der die Variablen die folgende Bedeutung haben:
R Wasserstoff;
C₁-C₃₀-Alkyl, dessen Kohlenstoffkette durch eine oder mehrere Gruppierungen -O-, -S-, -NR¹-, -CO- und/oder -SO₂- unterbrochen sein kann und das durch Carboxy, Sulfo, Hydroxy, Cyano, C₁-C₆-Alkoxy und/oder einen über ein Stickstoffatom gebundenen, 5- bis 7-gliedrigen heterocyclischen Rest, der weitere Heteroatome enthalten und aromatisch sein kann, ein- oder mehrfach substituiert sein kann;
C₅-C₈-Cycloalkyl, dessen Kohlenstoffgerüst durch eine oder mehrere Gruppierungen -O-, -S- und/oder -NR¹- unterbrochen sein kann und das durch C₁-C₆-Alkyl ein- oder mehrfach substituiert sein kann;
Aryl oder Hetaryl, das jeweils durch C₁-C₁₈-Alkyl, C₁-C₆-Alkoxy, Halogen, Hydroxy, Cyano, Carboxy, -CONHR², -NHCOR² und/oder Aryl- oder Hetarylazo, das jeweils durch C₁-C₁₀-Alkyl, C₁-C₆-Alkoxy, Halogen, Hydroxy, Cyano oder Carboxy substituiert sein kann, ein- oder mehrfach substituiert sein kann;
R' Brom; Cyano; -NR³₂;
Aryloxy, Arylthio, Hetaryloxy oder Hetarylthio, das jeweils ein- oder mehrfach durch C₁-C₁₂-Alkyl, C₁-C₁₂-Alkoxy, Cyano, -CONHR² und/oder -NHCOR² substituiert sein kann;
C₃-C₁₈-Alk-1-inyl, dessen Kohlenstoffkette durch eine oder mehrere Gruppierungen -O-, -S-, -NR¹-, -CO- und/oder -SO₂- unterbrochen sein kann und das durch -COOR¹, -SO₃R¹, Hydroxy, Cyano, C₁-C₆-Alkoxy, C₅-C₈-Cycloalkyl, Aryl und/oder einen über ein Stickstoffatom gebundenen, 5- bis 7-gliedrigen heterocyclischen Rest, der weitere Heteroatome enthalten und aromatisch sein kann, ein- oder mehrfach substituiert sein kann;
R¹ Wasserstoff oder C₁-C₆-Alkyl;
R² Wasserstoff; C₁-C₁₈-Alkyl; Aryl oder Hetaryl, das jeweils durch C₁-C₈-Alkyl, C₁-C₆-Alkoxy, Halogen, Hydroxy oder Cyano substituiert sein kann;
R³ Wasserstoff; C₁-C₁₈-Alkyl; Aryl oder Hetaryl, das jeweils durch C₁-C₈-Alkyl, C₁-C₆-Alkoxy, Halogen, Hydroxy und/oder Cyano substituiert sein kann; beide Reste R³ zu einem das Stickstoffatom enthaltenden und über dieses gebundenen 5-bis 7-gliedrigen, heterocyclischen Rest verbunden;
n 2, 3 oder 4;
m 0 bis 6,
**dadurch gekennzeichnet, daß** man
a) ein in peri-Position monobromiertes Rylenderivat der allgemeinen Formel II' 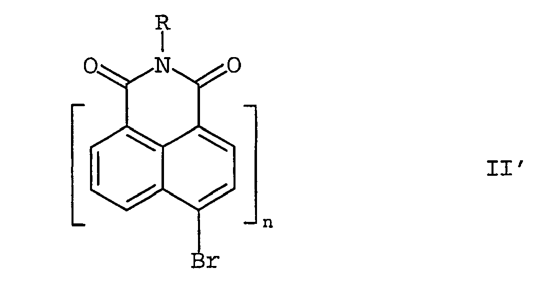 in Gegenwart eines aprotischen organischen Lösungsmittels, eines Übergangsmetallkatalysatorsystems und einer Base in einer Kreuzkupplungsreaktion mit 1-Aminoanthrachinon umsetzt,
b) das in Schritt a) gebildete Rylenanthramin der allgemeinen Formel III' 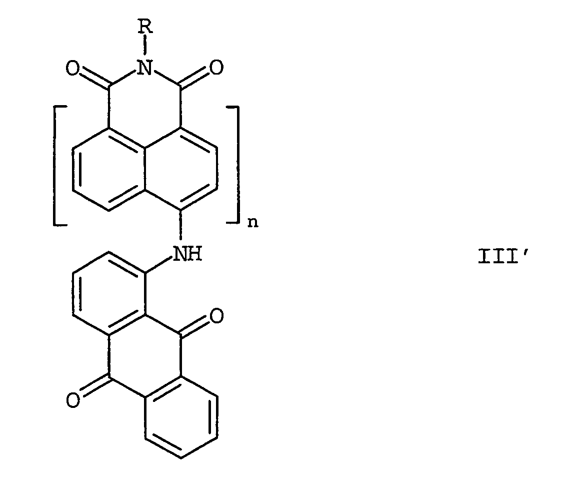 in Gegenwart eines polaren organischen Lösungsmittels und einer Base zum im Rylenkern unsubstituierten Rylenfarbstoff der Formel I', in der m gleich 0 ist, cyclisiert sowie
c) gewünschtenfalls den in Schritt b) erhaltenen im Rylenkern unsubstituierten Rylenfarbstoff I' durch Umsetzung mit elementarem Brom in den im Rylenkern bromierten Rylenfarbstoff der Formel I', in der R' Brom bedeutet und m ungleich 0 ist, überführt und
d) gewünschtenfalls den in Schritt c) erhaltenen im Rylenkern bromierten Rylenfarbstoff I'
d1) durch Umsetzung mit einer Verbindung der allgemeinen Formel IV 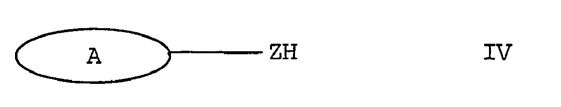 in der Z Sauerstoff oder Schwefel und der Ring A einen Aryl- oder Hetarylrest, der jeweils ein- oder mehrfach durch C₁-C₁₂-Alkyl, C₁-C₁₂-Alkoxy, Cyano, -CONHR² und/oder -NHCOR² substituiert sein kann, bedeuten,
in Gegenwart eines inerten stickstoffbasischen organischen Lösungsmittels und einer Base in den im Rylenkern substituierten Rylenfarbstoff der Formel I', in der R' Aryloxy, Arylthio, Hetaryloxy oder Hetarylthio, das jeweils ein- oder mehrfach durch C₁-C₁₂-Alkyl, C₁-C₁₂-Alkoxy, Cyano, -CONHR² und/oder -NHCOR² substituiert sein kann, bedeutet und m ungleich 0 ist,
d2) durch Umsetzung mit Kupfer(I)cyanid in Gegenwart eines dipolar-aprotischen organischen Lösungsmittels in den im Rylenkern substituierten Rylenfarbstoff der Formel I', in der R' Cyano bedeutet und m ungleich 0 ist,
d3) durch Umsetzung mit einem Alkin der allgemeinen Formel V 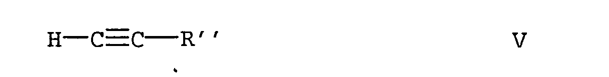 in der R'' einen C₁-C₁₆-Alkylrest, der durch eine oder mehrere Gruppierungen -O-, -S-, -NR¹-, -CO- und/oder -SO₂- unterbrochen sein kann und durch -COOR¹, -SO₃R¹, Hydroxy, Cyano, C₁-C₆-Alkoxy, C₅-C₈-Cycloalkyl, Aryl und/oder einen über ein Stickstoffatom gebundenen, 5- bis 7-gliedrigen heterocyclischen Rest, der weitere Heteroatome enthalten und aromatisch sein kann, ein- oder mehrfach substituiert sein kann, bedeutet,
in Gegenwart eines aprotischen organischen Lösungsmittels, eines Palladiumkomplexes als Katalysator, eines Kupfersalzes als Cokatalysator und einer Base in den im Rylenkern substitutierten Rylenfarbstoff der Formel I', in der R' -C≡C-R'' bedeutet und m ungleich 0 ist, oder
d4) durch Umsetzung mit Ammoniak oder einem Amin der allgemeinen Formel VI 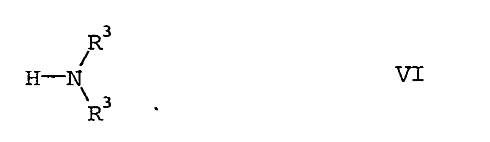 in Gegenwart eines dipolar-aprotischen organischen Lösungsmittels in den im Rylenkern substituierten Rylenfarbstoff der Formel I', in der R' -NR³₂ bedeutet und m ungleich 0 ist, überführt.

4. Verfahren zur Herstellung von symmetrischen Rylenfarbstoffen der allgemeinen Formel I'' 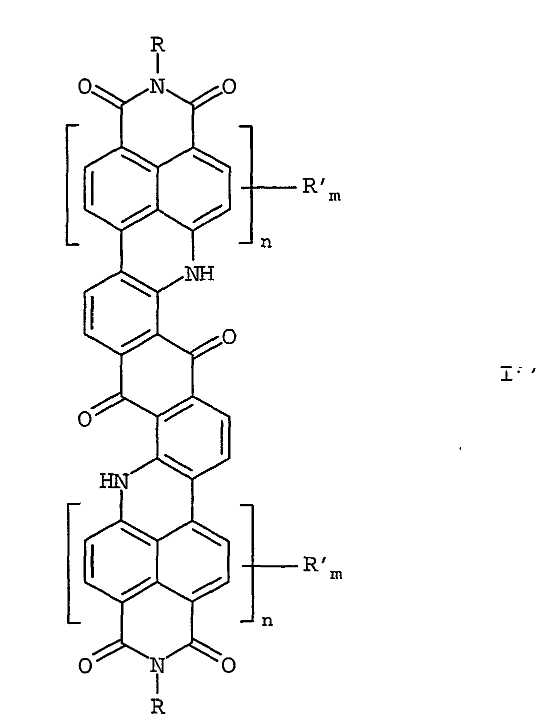 in der die Variablen die folgende Bedeutung haben:
R Wasserstoff;
C₁-C₃₀-Alkyl, dessen Kohlenstoffkette durch eine oder mehrere Gruppierungen -O-, -S-, -NR¹-, -CO- und/oder -SO₂- unterbrochen sein kann und das durch Carboxy, Sulfo, Hydroxy, Cyano, C₁-C₆-Alkoxy und/oder einen über ein Stickstoffatom gebundenen, 5- bis 7-gliedrigen heterocyclischen Rest, der weitere Heteroatome enthalten und aromatisch sein kann, ein- oder mehrfach substituiert sein kann;
C₅-C₈-Cycloalkyl, dessen Kohlenstoffgerüst durch eine oder mehrere Gruppierungen -O-, -S- und/oder -NR¹- unterbrochen sein kann und das durch C₁-C₆-Alkyl ein- oder mehrfach substituiert sein kann;
Aryl oder Hetaryl, das jeweils durch C₁-C₁₈-Alkyl, C₁-C₆-Alkoxy, Halogen, Hydroxy, Cyano, Carboxy, -CONHR², -NHCOR² und/oder Aryl- oder Hetarylazo, das jeweils durch C₁-C₁₀-Alkyl, C₁-C₆-Alkoxy, Halogen, Hydroxy, Cyano und/oder Carboxy substituiert sein kann, ein- oder mehrfach substituiert sein kann;
R' Brom; Cyano; -NR³₂;
Aryloxy, Arylthio, Hetaryloxy oder Hetarylthio, das jeweils ein- oder mehrfach durch C₁-C₁₂-Alkyl, C₁-C₁₂-Alkoxy, Cyano, -CONHR² und/oder -NHCOR² substituiert sein kann;
C₃-C₁₈-Alk-1-inyl, dessen Kohlenstoffkette durch eine oder mehrere Gruppierungen -O-, -S-, -NR¹-, -CO- und/oder -SO₂- unterbrochen sein kann und das durch -COOR¹, -SO₃R¹, Hydroxy, Cyano, C₁-C₆-Alkoxy, C₅-C₈-Cycloalkyl, Aryl und/oder einen über ein Stickstoffatom gebundenen, 5- bis 7-gliedrigen heterocyclischen Rest, der weitere Heteroatome enthalten und aromatisch sein kann, ein- oder mehrfach substituiert sein kann;
R¹ Wasserstoff oder C₁-C₆-Alkyl;
R² Wasserstoff; C₁-C₁₈-Alkyl; Aryl oder Hetaryl, das jeweils durch C₁-C₈-Alkyl, C₁-C₆-Alkoxy, Halogen, Hydroxy und/oder Cyano substituiert sein kann;
R³ Wasserstoff; C₁-C₁₈-Alkyl; Aryl oder Hetaryl, das jeweils durch C₁-C₈-Alkyl, C₁-C₆-Alkoxy, Halogen, Hydroxy und/oder Cyano substituiert sein kann; beide Reste R³ zu einem das Stickstoffatom enthaltenden und über dieses gebundenen 5-bis 7-gliedrigen, heterocyclischen Rest verbunden;
n 1, 2, 3 oder 4;
m 0 bis 6,
**dadurch gekennzeichnet, daß** man
a) ein in peri-Position monobromiertes Rylenderivat der allgemeinen Formel II' 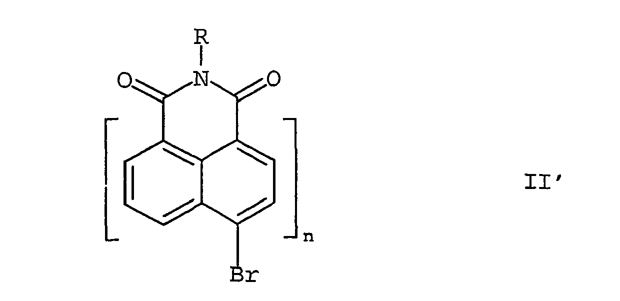 in Gegenwart eines aprotischen organischen Lösungsmittels, eines Übergangsmetallkatalysatorsystems und einer Base in einer zweifachen Kreuzkupplungsreaktion mit 1,5-Diaminoanthrachinon umsetzt,
b) das in Schritt a) gebildete Rylenanthramin der allgemeinen Formel III" 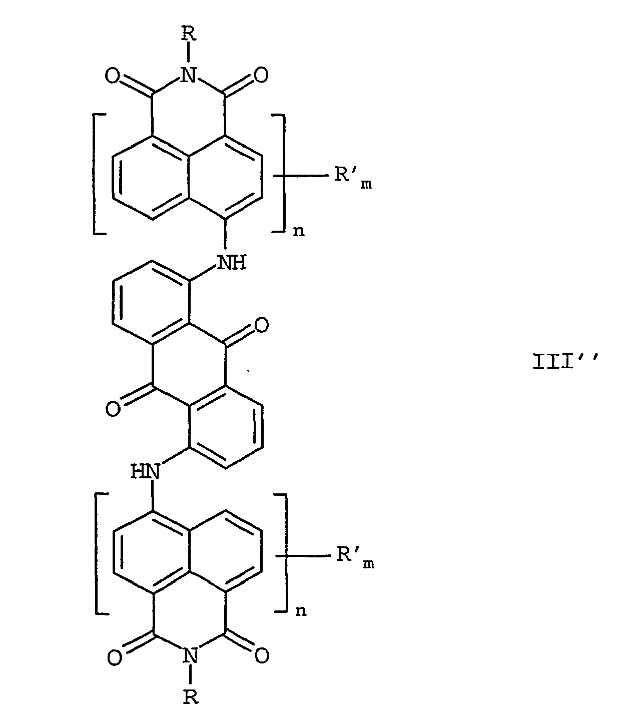 in Gegenwart eines polaren organischen Lösungsmittels und einer Base zu dem Rylenfarbstoff der Formel I'', in der m gleich 0 ist, cyclisiert sowie
c) gewünschtenfalls den in Schritt b) erhaltenen im Rylenkern unsubstituierten Rylenfarbstoff I' durch Umsetzung mit elementarem Brom in den im Rylenkern bromierten Rylenfarbstoff der Formel I'', in der R' Brom bedeutet und m ungleich 0 ist, überführt und
d) gewünschtenfalls den in Schritt c) erhaltenen im Rylenkern bromierten Rylenfarbstoff I''
d1) durch Umsetzung mit einer Verbindung der allgemeinen Formel IV 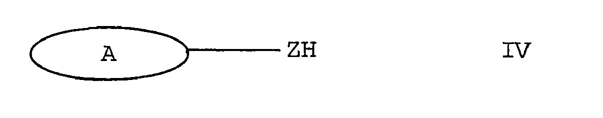 in der Z Sauerstoff oder Schwefel und der Ring A einen Aryl- oder Hetarylrest, der jeweils ein- oder mehrfach durch C₁-C₁₂-Alkyl, C₁-C₁₂-Alkoxy, Cyano, -CONHR² und/oder -NHCOR² substituiert sein kann, bedeuten,
in Gegenwart eines inerten stickstoffbasischen organischen Lösungsmittels und einer Base in den im Rylenkern substituierten Rylenfarbstoff der Formel I'', in der R' Aryloxy, Arylthio, Hetaryloxy oder Hetarylthio, das jeweils ein- oder mehrfach durch C₁-C₁₂-Alkyl, C₁-C₁₂-Alkoxy, Cyano, -CONHR² und/oder -NHCOR² substituiert sein kann, bedeutet und m ungleich 0 ist,
d2) durch Umsetzung mit Kupfer(I)cyanid in Gegenwart eines dipolar-aprotischen organischen Lösungsmittels in den im Rylenkern substituierten Rylenfarbstoff der Formel I'', in der R' Cyano bedeutet und m ungleich 0 ist,
d3) durch Umsetzung mit einem Alkin der allgemeinen Formel V 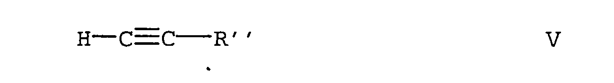 in der R'' einen C₁-C₁₆-Alkylrest, der durch eine oder mehrere Gruppierungen -O-, -S-, -NR¹-, -CO- und/oder -SO₂- unterbrochen sein kann und durch -COOR¹, -SO₃R¹, Hydroxy, Cyano, C₁-C₆-Alkoxy, C₅-C₈-Cycloalkyl, Aryl und/oder einen über ein Stickstoffatom gebundenen, 5- bis 7-gliedrigen heterocyclischen Rest, der weitere Heteroatome enthalten und aromatisch sein kann, ein- oder mehrfach substituiert sein kann, bedeutet,
in Gegenwart eines aprotischen organischen Lösungsmittels, eines Palladiumkomplexes als Katalysator, eines Kupfersalzes als Cokatalysator und einer Base in den im Rylenkern substitutierten Rylenfarbstoff der Formel I'', in der R' -C≡C-R'' bedeutet und m ungleich 0 ist, oder
d4) durch Umsetzung mit Ammoniak oder einem Amin der allgemeinen Formel VI 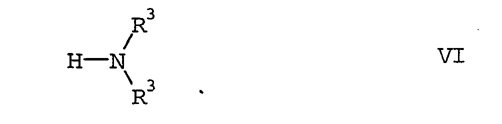 in Gegenwart eines dipolar-aprotischen organischen Lösungsmittels in den im Rylenkern substituierten Rylenfarbstoff der Formel I'', in der R' -NR³₂ bedeutet und m ungleich 0 ist, überführt.

5. Verfahren zur Herstellung von asymmetrischen Rylenfarbstoffen der allgemeinen Formel I''' 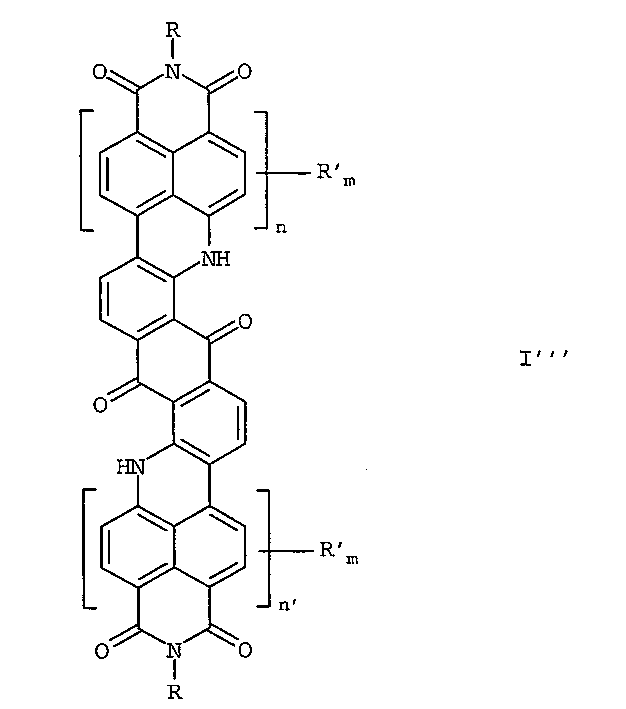 in der die Variablen die folgende Bedeutung haben:
R Wasserstoff; C₁-C₃₀-Alkyl, dessen Kohlenstoffkette durch eine oder mehrere Gruppierungen -O-, -S-, -NR¹-, -CO- und/oder -SO₂- unterbrochen sein kann und das durch Carboxy, Sulfo, Hydroxy, Cyano, C₁-C₆-Alkoxy und/oder einen über ein Stickstoffatom gebundenen, 5- bis 7-gliedrigen heterocyclischen Rest, der weitere Heteroatome enthalten und aromatisch sein kann, ein- oder mehrfach substituiert sein kann;
C₅-C₈-Cycloalkyl, dessen Kohlenstoffgerüst durch eine oder mehrere Gruppierungen -O-, -S- und/oder -NR¹- unterbrochen sein kann und das durch C₁-C₆-Alkyl ein- oder mehrfach substituiert sein kann;
Aryl oder Hetaryl, das jeweils durch C₁-C₁₈-Alkyl, C₁-C₆-Alkoxy, Halogen, Hydroxy, Cyano, Carboxy, -CONHR², -NHCOR² und/oder Aryl- oder Hetarylazo, das jeweils durch C₁-C₁₀-Alkyl, C₁-C₆-Alkoxy, Halogen, Hydroxy, Cyano und/oder Carboxy substituiert sein kann, ein- oder mehrfach substituiert sein kann;
R' Brom; Cyano; -NR³₂;
Aryloxy, Arylthio, Hetaryloxy oder Hetarylthio, das jeweils ein- oder mehrfach durch C₁-C₁₂-Alkyl, C₁-C₁₂-Alkoxy, Cyano, -CONHR² und/oder -NHCOR² substituiert sein kann;
C₃-C₁₈-Alk-1-inyl, dessen Kohlenstoffkette durch eine oder mehrere Gruppierungen -O-, -S-, -NR¹-, -CO- und/oder -SO₂- unterbrochen sein kann und das durch -COOR¹, -SO₃R¹, Hydroxy, Cyano, C₁-C₆-Alkoxy, C₅-C₈-Cycloalkyl, Aryl und/oder einen über ein Stickstoffatom gebundenen, 5- bis 7-gliedrigen heterocyclischen Rest, der weitere Heteroatome enthalten und aromatisch sein kann, ein- oder mehrfach substituiert sein kann;
R¹ Wasserstoff oder C₁-C₆-Alkyl;
R² Wasserstoff; C₁-C₁₈-Alkyl; Aryl oder Hetaryl, das jeweils durch C₁-C₈-Alkyl, C₁-C₆-Alkoxy, Halogen, Hydroxy und/oder Cyano substituiert sein kann;
R³ Wasserstoff; C₁-C₁₈-Alkyl; Aryl oder Hetaryl, das jeweils durch C₁-C₈-Alkyl, C₁-C₆-Alkoxy, Halogen, Hydroxy und/oder Cyano substituiert sein kann; beide Reste R³ zu einem das Stickstoffatom enthaltenden und über dieses gebundenen 5-bis 7-gliedrigen, heterocyclischen Rest verbunden;
n, n' 1, 2, 3 oder 4, wobei n ≠ n' ist;
m 0 bis 6,
**dadurch gekennzeichnet, daß** man
a1) ein in peri-Position monobromiertes Rylenderivat der allgemeinen Formel II' 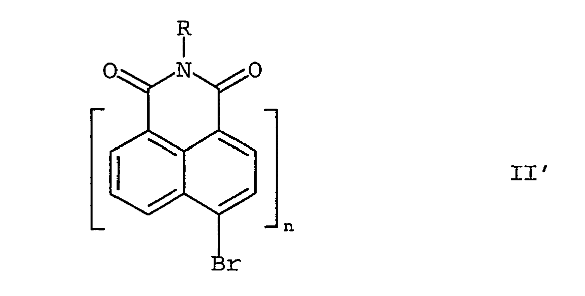 in Gegenwart eines aprotischen organischen Lösungsmittels, eines Übergangsmetallkatalysatorsystems und einer Base in einer ersten Kreuzkupplungsreaktion zunächst mit überschüssigem 1,5-Diaminoanthrachinon umsetzt,
a2) das in Schritt a) gebildete Amino-Rylenanthramin der allgemeinen Formel IIIa 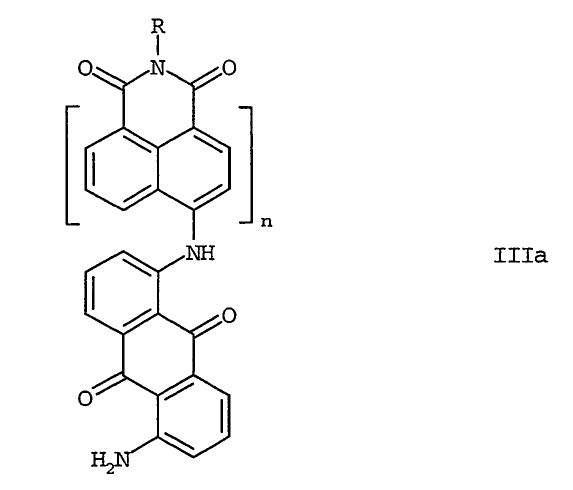 in Gegenwart eines aprotischen organischen Lösungsmittels, eines Übergangsmetallkatalysatorsystems und einer Base in einer zweiten Kreuzkupplungsreaktion mit einem in peri-Position monobromierten Rylenderivat der allgemeinen Formel II'' 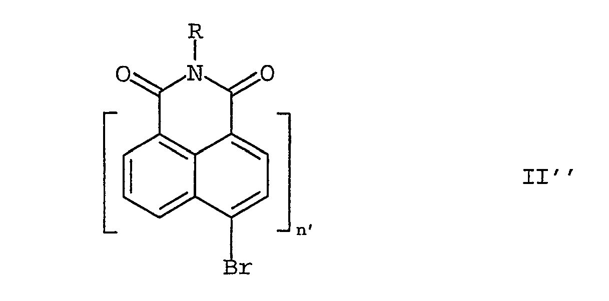 umsetzt,
b) das in Schritt a) gebildete Rylenanthramin der allgemeinen Formel III''' 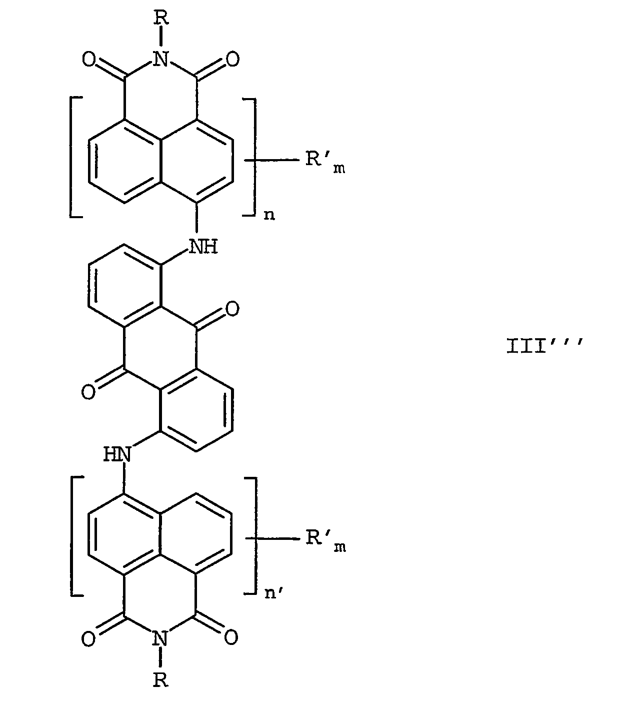 in Gegenwart eines polaren organischen Lösungsmittels und einer Base zum im Rylenkern unsubstituierten Rylenfarbstoff der Formel I''', in der m gleich 0 ist, cyclisiert sowie
c) gewünschtenfalls den in Schritt b) erhaltenen im Rylenkern unsubstituierten Rylenfarbstoff I''' durch Umsetzung mit elementarem Brom in den im Rylenkern bromierten Rylenfarbstoff der Formel I''', in der R' Brom bedeutet und m ungleich 0 ist, überführt und
d) gewünschtenfalls den in Schritt c) erhaltenen im Rylenkern bromierten Rylenfarbstoff I'''
d1) durch Umsetzung mit einer Verbindung der allgemeinen Formel IV 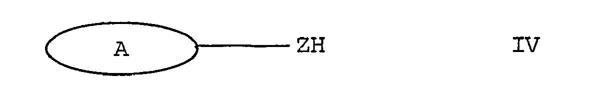 in der Z Sauerstoff oder Schwefel und der Ring A einen Aryl- oder Hetarylrest, der jeweils ein- oder mehrfach durch C₁-C₁₂-Alkyl, C₁-C₁₂-Alkoxy, Cyano, -CONHR² und/oder -NHCOR² substituiert sein kann, bedeuten,
in Gegenwart eines inerten stickstoffbasischen organischen Lösungsmittels und einer Base in den im Rylenkern substituierten Rylenfarbstoff der Formel I''', in der R' Aryloxy, Arylthio, Hetaryloxy oder Hetarylthio, das jeweils ein- oder mehrfach durch C₁-C₁₂-Alkyl, C₁-C₁₂-Alkoxy, Cyano, -CONHR² und/oder -NHCOR² substituiert sein kann, bedeutet und m ungleich 0 ist,
d2) durch Umsetzung mit Kupfer(I)cyanid in Gegenwart eines dipolar-aprotischen organischen Lösungsmittels in den im Rylenkern substituierten Rylenfarbstoff der Formel I''', in der R' Cyano bedeutet und m ungleich 0 ist,
d3) durch Umsetzung mit einem Alkin der allgemeinen Formel V 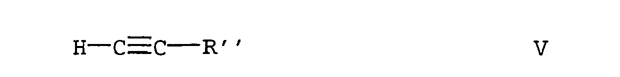 in der R'' einen C₁-C₁₆-Alkylrest, der durch eine oder mehrere Gruppierungen -O-, -S-, -NR¹-, -CO- und/oder -SO₂- unterbrochen sein kann und durch -COOR¹, -SO₃R¹, Hydroxy, Cyano, C₁-C₆-Alkoxy, C₅-C₈-Cycloalkyl, Aryl und/oder einen über ein Stickstoffatom gebundenen, 5-bis 7-gliedrigen heterocyclischen Rest, der weitere Heteroatome enthalten und aromatisch sein kann, ein- oder mehrfach substituiert sein kann, bedeutet,
in Gegenwart eines aprotischen organischen Lösungsmittels, eines Palladiumkomplexes als Katalysator, eines Kupfersalzes als Cokatalysator und einer Base in den im Rylenkern substitutierten Rylenfarbstoff der Formel I''', in der R' -C≡C-R'' bedeutet und m ungleich 0 ist, oder
d4) durch Umsetzung mit Ammoniak oder einem Amin der allgemeinen Formel VI 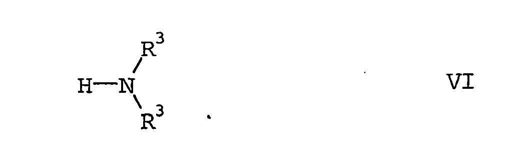 in Gegenwart eines dipolar-aprotischen organischen Lösungsmittels in den im Rylenkern substituierten Rylenfarbstoff der Formel I''', in der R' -NR³₂ bedeutet und m ungleich 0 ist, überführt.

6. Verwendung von Rylenfarbstoffen der allgemeinen Formel I gemäß Anspruch 1 oder 2 zur Einfärbung von hochmolekularen organischen und anorganischen Materialien.

7. Verwendung nach Anspruch 6, **dadurch gekennzeichnet, daß** Kunststoffe, Lacke, Druckfarben und oxidische Schichtsysteme eingefärbt werden.

8. Verwendung von Rylenfarbstoffen der allgemeinen Formel I gemäß Anspruch 1 oder 2 als Dispergierhilfsmittel, Pigmentadditive für organische Pigmente und Zwischenprodukte für die Herstellung von Pigmentadditiven.

9. Verwendung von Rylenfarbstoffen der allgemeinen Formel I gemäß Anspruch 1 oder 2 zur Herstellung farbiger oder im nahinfraroten Bereich des elektromagnetischen Spektrums absorbierender wäßriger Polymerisatdispersionen.

10. Verwendung von Rylenfarbstoffen der allgemeinen Formel I gemäß Anspruch 1 oder 2 als Photoleiter in der Elektrophotographie.

## Claims

1. A rylene dye of the general formula I 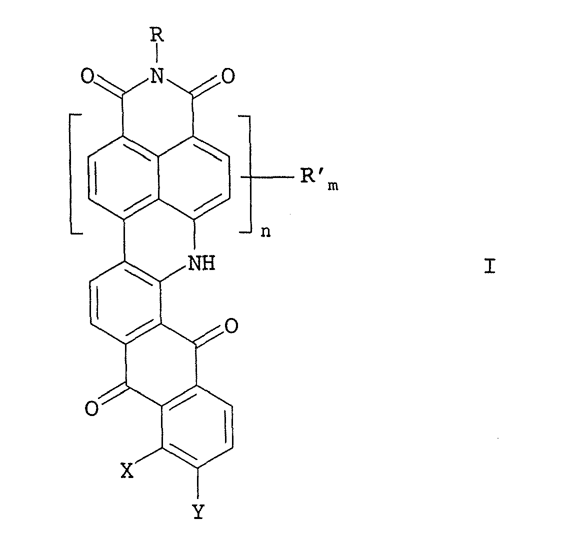 where the variables are defined as follows:
R is hydrogen;
C₁-C₃₀-alkyl whose carbon chain may be interrupted by one or more -O-, -S-, -NR¹-, -CO- and/or -SO₂- moieties and may be mono- or polysubstituted by carboxyl, sulfo, hydroxyl, cyano, C₁-C₆-alkoxy and/or a 5- to 7-membered heterocyclic radical which is bonded via a nitrogen atom and may comprise further heteroatoms and be aromatic; C₅-C₈-cycloalkyl whose carbon framework may be interrupted by one or more -O-, -S- and/or -NR¹- moieties and may be mono- or polysubstituted by C₁-C₆-alkyl;
aryl or hetaryl which may each be mono- or polysubstituted by C₁-C₁₈-alkyl, C₁-C₆-alkoxy, halogen, hydroxyl, cyano, carboxyl, -CONHR², -NHCOR² and/or aryl- or hetarylazo, each of which may be substituted by C₁-C₁₀-alkyl, C₁-C₆-alkoxy, halogen, hydroxyl, cyano and/or carboxyl;
R' is bromine; cyano; -NR³₂;
aryloxy, arylthio, hetaryloxy or hetarylthio, each of which may be mono- or polysubstituted by C₁-C₁₂-alkyl, C₁-C₁₂-alkoxy, cyano, -CONHR² and/or -NHCOR²;
C₃-C₁₈-alk-1-ynyl whose carbon chain may be interrupted by one or more -O-, -S-, -NR¹-, -CO- and/or -SO₂₋moieties and may be mono- or polysubstituted by -COOR¹, -SO₃R¹, hydroxyl, cyano, C₁-C₆-alkoxy, C₅-C₈-cycloalkyl, aryl and/or a 5- to 7-membered heterocyclic radical which is bonded via a nitrogen atom and may comprise further heteroatoms and be aromatic;
R¹ is hydrogen or C₁-C₆-alkyl;
R² is hydrogen; C₁-C₁₈-alkyl; aryl or hetaryl, each of which may be substituted by C₁-C₈-alkyl, C₁-C₆-alkoxy, halogen, hydroxyl and/or cyano;
R³ is hydrogen; C₁-C₁₈-alkyl; aryl or hetaryl, each of which may be substituted by C₁-C₈-alkyl, C₁-C₆-alkoxy, halogen, hydroxyl and/or cyano; both R³ radicals may be joined to give a 5- to 7-membered heterocyclic radical which comprises the nitrogen atom and is bonded via it;
X, Y are both hydrogen or bonded together to form a six-membered ring in a radical of the formula Ia 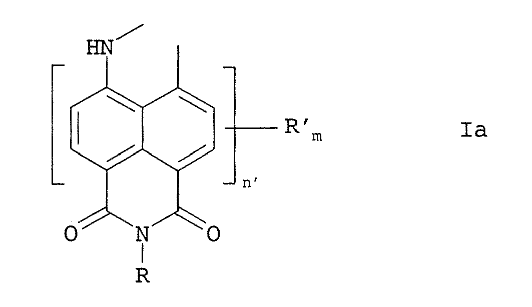 where X is the -NH- group and Y is the other free chemical bond;
n is 2, 3, 4 or additionally 1 when X and Y are a radical of the formula Ia;
n' is from 1 to 4;
m is from 0 to 6.

2. A rylene dye of the formula I as claimed in claim 1, where the variables are defined as follows:
R is C₁-C₃₀-alkyl whose carbon chain may be interrupted by one or more -0-, -S-, -NR¹-, -CO- and/or -SO₂- moieties and may be mono- or polysubstituted by hydroxyl, cyano, C₁-C₆-alkoxy and/or a 5- to 7-membered heterocyclic radical which is bonded via a nitrogen atom and may comprise further heteroatoms and be aromatic;
aryl or hetaryl which may each be mono- or polysubstituted by C₁-C₁₈-alkyl, C₁-C₆-alkoxy, hydroxyl, cyano, -CONHR² and/or -NHCOR²;
R' is bromine or aryloxy which may be mono- or polysubstituted by C₁-C₁₂-alkyl, C₁-C₆-alkoxy and/or cyano;
R¹ is hydrogen or C₁-C₆-alkyl;
R² is hydrogen; C₁-C₁₈-alkyl; aryl or hetaryl, each of which may be substituted by C₁-C₈-alkyl, C₁-C₆-alkoxy and/or cyano;
X, Y are both hydrogen or bonded together to form a six-membered ring in a radical of the formula Ia 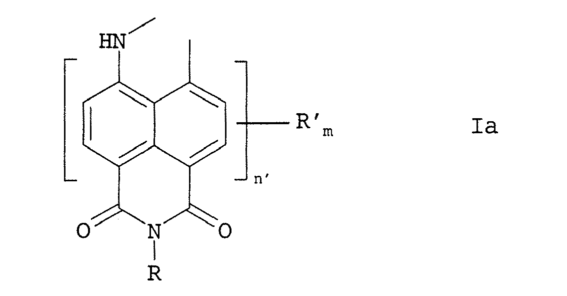 where X is the -NH- group and Y is the other free chemical bond;
n is 2, 3, 4 or additionally 1 when X and Y are a radical of the formula Ia;
n' is from 1 to 4;
m is from 0 to 6.

3. A process for preparing rylene dyes of the general formula I' 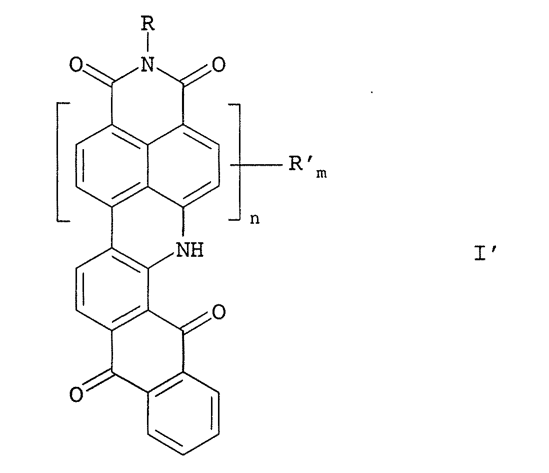 where the variables are defined as follows:
R is hydrogen; C₁-C₃₀-alkyl whose carbon chain may be interrupted by one or more -0-, -S-, -NR¹-, -CO- and/or -SO₂- moieties and may be mono- or polysubstituted by carboxyl, sulfo, hydroxyl, cyano, C₁-C₆-alkoxy and/or a 5- to 7-membered heterocyclic radical which is bonded via a nitrogen atom and may comprise further heteroatoms and be aromatic;
C₅-C₈-cycloalkyl whose carbon framework may be interrupted by one or more -O-, -S- and/or -NR¹- moieties and may be mono- or polysubstituted by C₁-C₆-alkyl;
aryl or hetaryl which may each be mono- or polysubstituted by C₁-C₁₈-alkyl, C₁-C₆-alkoxy, halogen, hydroxyl, cyano, carboxyl, -CONHR², -NHCOR² and/or aryl- or hetarylazo, each of which may be substituted by C₁-C₁₀-alkyl, C₁-C₆-alkoxy, halogen, hydroxyl, cyano or carboxyl;
R' is bromine; cyano; -NR³₂;
aryloxy, arylthio, hetaryloxy or hetarylthio, each of which may be mono- or polysubstituted by C₁-C₁₂-alkyl, C₁-C₁₂-alkoxy, cyano, -CONHR² and/or -NHCOR²;
C₃-C₁₈-alk-1-ynyl whose carbon chain may be interrupted by one or more -O-, -S-, -NR¹-, -CO- and/or -SO₂₋moieties and may be mono- or polysubstituted by -COOR¹, -SO₃R¹, hydroxyl, cyano, C₁-C₆-alkoxy, C₅-C₈-cycloalkyl, aryl and/or a 5- to 7-membered heterocyclic radical which is bonded via a nitrogen atom and may comprise further heteroatoms and be aromatic;
R¹ is hydrogen or C₁-C₆-alkyl;
R² is hydrogen; C₁-C₁₈-alkyl; aryl or hetaryl, each of which may be substituted by C₁-C₈-alkyl, C₁-C₆-alkoxy, halogen, hydroxyl or cyano;
R³ is hydrogen; C₁-C₁₈-alkyl; aryl or hetaryl, each of which may be substituted by C₁-C₈-alkyl, C₁-C₆-alkoxy, halogen, hydroxyl and/or cyano; both R³ radicals may be joined to give a 5- to 7-membered heterocyclic radical which comprises the nitrogen atom and is bonded via it;
n is 2, 3 or 4;
m is from 0 to 6,
which comprises
a) reacting a rylene derivative monobrominated in the peri-position of the general formula II' 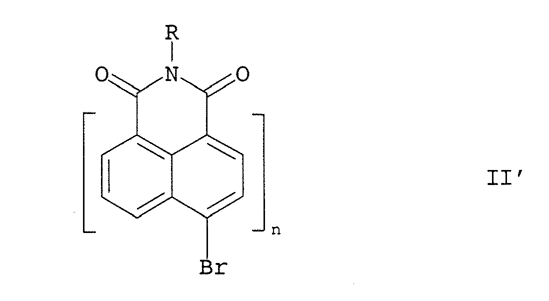 with 1-aminoanthraquinone in a cross-coupling reaction in the presence of an aprotic organic solvent, of a transition metal catalyst system and of a base,
b) cyclizing the rylenanthramine formed in step a) of the general formula III' 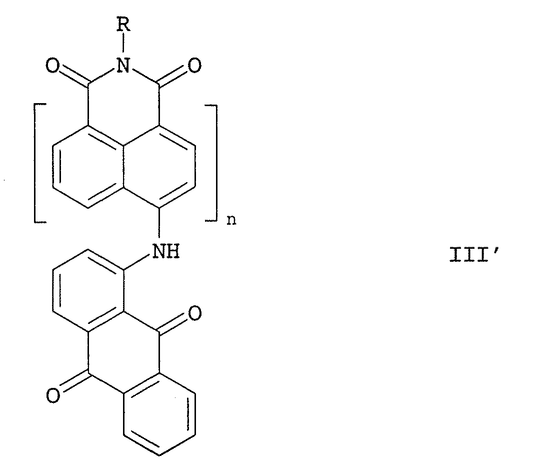 in the presence of a polar organic solvent and of a base to give the rylene dye of the formula I' which is unsubstituted in the rylene core and where m is 0, and
c) if desired, converting the rylene dye I' unsubstituted in the rylene core and obtained in step b) to the rylene dye of the formula I' brominated in the rylene core where R' is bromine and m does not equal 0 by reacting with elemental bromine, and
d) if desired, converting the rylene dye I' brominated in the rylene core and obtained in step c)
d1) by reacting with a compound of the general formula IV 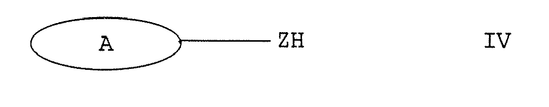 where Z is sulfur or oxygen and the ring A is an aryl or hetaryl radical, each of which may be mono- or polysubstituted by C₁-C₁₂-alkyl, C₁-C₁₂-alkoxy, cyano, -CONHR² and/or -NHCOR²,
in the presence of an inert nitrogen-basic organic solvent and of a base to give the rylene dye of the formula I' which is substituted in the rylene core and where R' is aryloxy, arylthio, hetaryloxy or hetarylthio, each of which may be mono- or polysubstituted by C₁-C₁₂-alkyl, C₁-C₁₂-alkoxy, cyano, -CONHR² and/or -NHCOR², and m does not equal 0,
d2) by reacting with copper(I) cyanide in the presence of a dipolar aprotic organic solvent to give the rylene dye of the formula I' which is substituted in the rylene core and where R' is cyano and m does not equal 0,
d3) by reacting with an alkyne of the general formula V 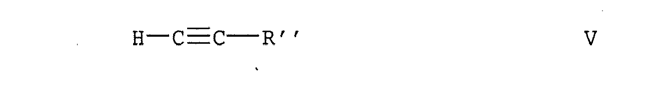 where R'' is a C₁-C₁₆-alkyl radical which may be interrupted by one or more -O-, -S-, -NR¹-, -CO- and/or -SO₂- moieties and may be mono- or polysubstituted by -COOR¹, -SO₃R¹, hydroxyl, cyano, C₁-C₆-alkoxy, C₅-C₈-cycloalkyl, aryl and/or a 5- to 7-membered heterocyclic radical which is bonded via a nitrogen atom and may contain further heteroatoms and be aromatic,
in the presence of an aprotic organic solvent, of a palladium complex as a catalyst, of a copper salt as a cocatalyst and of a base to give the rylene dye of the formula I' which is substituted in the rylene core and where R' is -C≡C-R'' and m does not equal 0, or
d4) by reacting with ammonia or an amine of the general formula VI 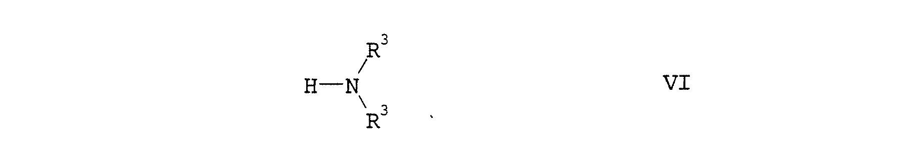 in the presence of a dipolar aprotic organic solvent to give the rylene dye of the formula I' which is substituted in the rylene core and where R' is -NR³₂ and m does not equal 0.

4. A process for preparing symmetrical rylene dyes of the general formula I'' 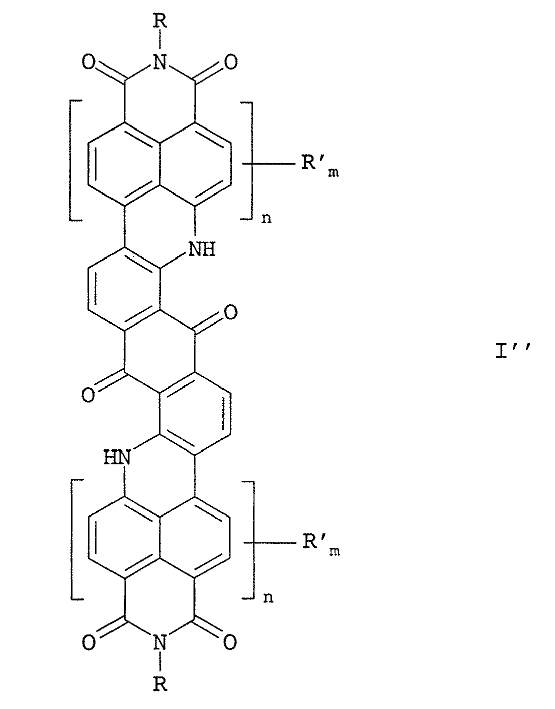 where the variables are defined as follows:
R is hydrogen; C₁-C₃₀-alkyl whose carbon chain may be interrupted by one or more -O-, -S-, -NR¹-, -CO- and/or -SO₂- moieties and may be mono- or polysubstituted by carboxyl, sulfo, hydroxyl, cyano, C₁-C₆-alkoxy and/or a 5- to 7-membered heterocyclic radical which is bonded via a nitrogen atom and may comprise further heteroatoms and be aromatic;
C₅-C₈-cycloalkyl whose carbon framework may be interrupted by one or more -O-, -S- and/or -NR¹- moieties and may be mono- or polysubstituted by C₁-C₆-alkyl;
aryl or hetaryl which may each be mono- or polysubstituted by C₁-C₁₈-alkyl, C₁-C₆-alkoxy, halogen, hydroxyl, cyano, carboxyl, -CONHR², -NHCOR² and/or aryl- or hetarylazo, each of which may be substituted by C₁-C₁₀-alkyl, C₁-C₆-alkoxy, halogen, hydroxyl, cyano and/or carboxyl;
R' is bromine; cyano; -NR³₂;
aryloxy, arylthio, hetaryloxy or hetarylthio, each of which may be mono- or polysubstituted by C₁-C₁₂-alkyl, C₁-C₁₂-alkoxy, cyano, -CONHR² and/or -NHCOR²;
C₃-C₁₈-alk-1-ynyl whose carbon chain may be interrupted by one or more -O-, -S-, -NR¹-, -CO- and/or -SO₂₋moieties and may be mono- or polysubstituted by -COOR¹, -SO₃R¹, hydroxyl, cyano, C₁-C₆-alkoxy, C₅-C₈-cycloalkyl, aryl and/or a 5- to 7-membered heterocyclic radical which is bonded via a nitrogen atom and may comprise further heteroatoms and be aromatic;
R¹ is hydrogen or C₁-C₆-alkyl;
R² is hydrogen; C₁-C₁₈-alkyl; aryl or hetaryl, each of which may be substituted by C₁-C₈-alkyl, C₁-C₆-alkoxy, halogen, hydroxyl and/or cyano;
R³ is hydrogen; C₁-C₁₈-alkyl; aryl or hetaryl, each of which may be substituted by C₁-C₈-alkyl, C₁-C₆-alkoxy, halogen, hydroxyl and/or cyano; both R³ radicals may be joined to give a 5- to 7-membered heterocyclic radical which contains the nitrogen atom and is bonded via it;
n is 1, 2, 3 or 4;
m is from 0 to 6,
which comprises
a) reacting a rylene derivative monobrominated in the peri-position of the general formula II' 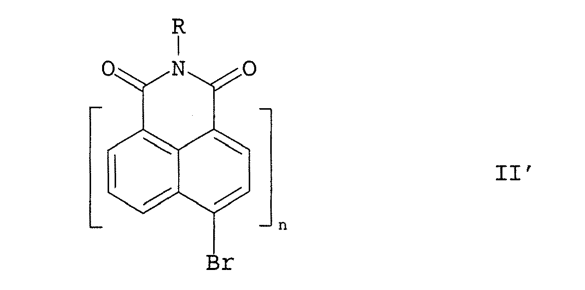 with 1,5-diaminoanthraquinone in a double cross-coupling reaction in the presence of an aprotic organic solvent, of a transition metal catalyst system and of a base,
b) cyclizing the rylenanthramine formed in step a) of the general formula III'' 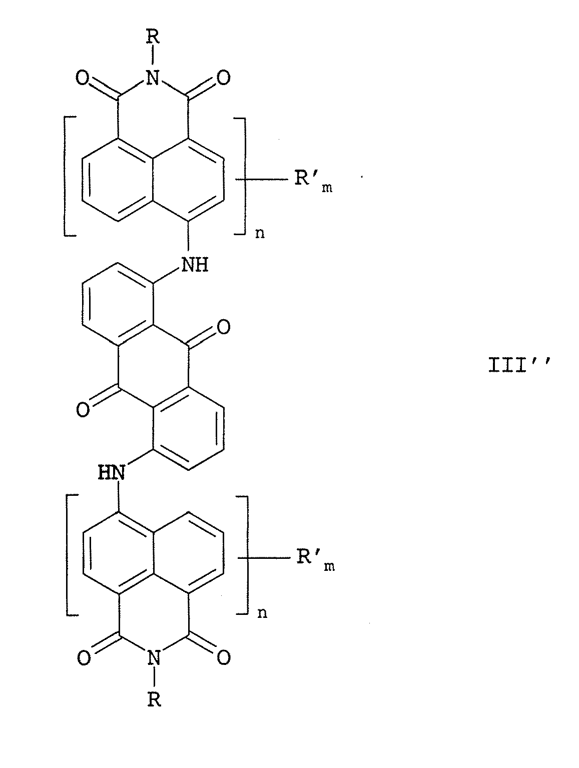 in the presence of a polar organic solvent and of a base to give the rylene dye of the formula I'' where m is 0, and
c) if desired, converting the rylene dye I' unsubstituted in the rylene core and obtained in step b) to the rylene dye of the formula I'' brominated in the rylene core where R' is bromine and m is equal to 0 by reacting with elemental bromine, and
d) if desired, converting the rylene dye I'' brominated in the rylene core and obtained in step c)
d1) by reacting with a compound of the general formula IV 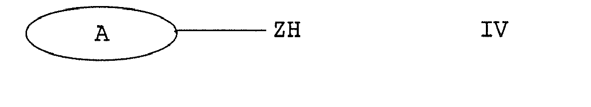 where Z is sulfur or oxygen and the ring A is an aryl or hetaryl radical, each of which may be mono- or polysubstituted by C₁-C₁₂-alkyl, C₁-C₁₂-alkoxy, cyano, -CONHR² and/or -NHCOR²,
in the presence of an inert nitrogen-basic organic solvent and of a base to give the rylene dye of the formula I'' which is substituted in the rylene core and where R' is aryloxy, arylthio, hetaryloxy or hetarylthio, each of which may be mono- or polysubstituted by C₁-C₁₂-alkyl, C₁-C₁₂-alkoxy, cyano, -CONHR² and/or -NHCOR², and m does not equal 0,
d2) by reacting with copper(I) cyanide in the presence of a dipolar aprotic organic solvent to give the rylene dye of the formula I'' which is substituted in the rylene core and where R' is cyano and m does not equal 0,
d3) by reacting with an alkyne of the general formula V 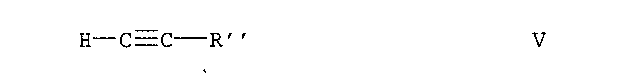 where R'' is a C₁-C₁₆-alkyl radical which may be interrupted by one or more -0-, -S-, -NR¹-, -CO- and/or -SO₂- moieties and may be mono- or polysubtituted by -COOR¹, -SO₃R¹, hydroxyl, cyano, C₁-C₆-alkoxy, C₅-C₈-cycloalkyl, aryl and/or a 5- to 7-membered heterocyclic radical which is bonded via a nitrogen atom and may comprise further heteroatoms and be aromatic,
in the presence of an aprotic organic solvent, of a palladium complex as a catalyst, of a copper salt as a cocatalyst and of a base to give the rylene dye of the formula I'' which is substituted in the rylene core and where R' is -C≡C-R'' and m does not equal 0, or
d4) by reacting with ammonia or an amine of the general formula VI 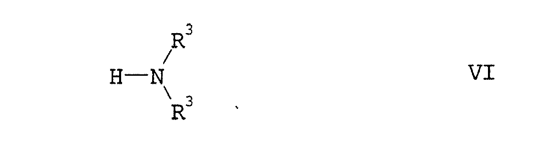 in the presence of a dipolar aprotic organic solvent to give the rylene dye of the formula I'' which is substituted in the rylene core and where R' is -NR³₂ and m does not equal 0.

5. A process for preparing nonsymmetrical rylene dyes of the general formula I''' 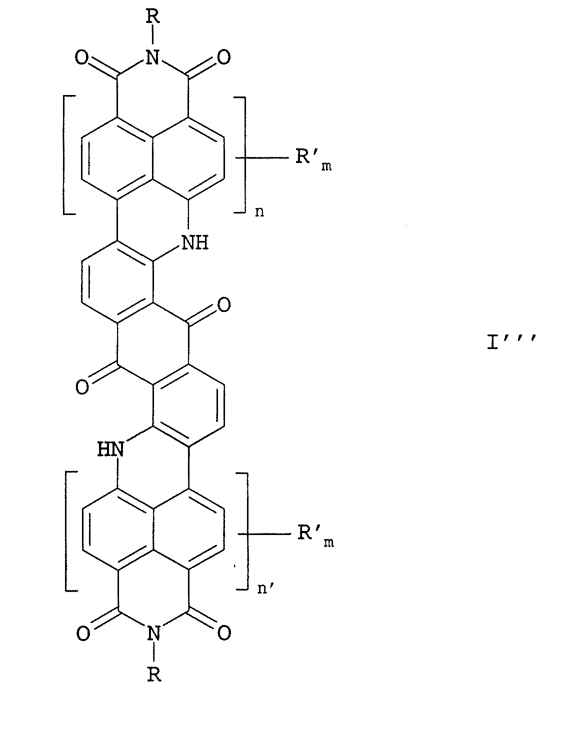 where the variables are defined as follows:
R is hydrogen; C₁-C₃₀-alkyl whose carbon chain may be interrupted by one or more -O-, -S-, -NR¹-, -CO- and/or -SO₂- moieties and may be mono- or polysubstituted by carboxyl, sulfo, hydroxyl, cyano, C₁-C₆-alkoxy and/or a 5- to 7-membered heterocyclic radical which is bonded via a nitrogen atom and may comprise further heteroatoms and be aromatic;
C₅-C₈-cycloalkyl whose carbon framework may be interrupted by one or more -O-, -S- and/or -NR¹- moieties and may be mono- or polysubstituted by C₁-C₆-alkyl;
aryl or hetaryl which may each be mono- or polysubstituted by C₁-C₁₈-alkyl, C₁-C₆-alkoxy, halogen, hydroxyl, cyano, carboxyl, -CONHR², -NHCOR² and/or aryl- or hetarylazo, each of which may be substituted by C₁-C₁₀-alkyl, C₁-C₆-alkoxy, halogen, hydroxyl, cyano and/or carboxyl;
R' is bromine; cyano; -NR³₂;
aryloxy, arylthio, hetaryloxy or hetarylthio, each of which may be mono- or polysubstituted by C₁-C₁₂-alkyl, C₁-C₁₂-alkoxy, cyano, -CONHR² and/or -NHCOR²;
C₃-C₁₈-alk-I-ynyl whose carbon chain may be interrupted by one or more -O-, -S-, -NR¹-, -CO- and/or -SO₂₋moieties and may be mono- or polysubstituted by -COOR¹, -SO₃R¹, hydroxyl, cyano, C₁-C₆-alkoxy, C₅-C₈-cycloalkyl, aryl and/or a 5- to 7-membered heterocyclic radical which is bonded via a nitrogen atom and may comprise further heteroatoms and be aromatic;
R¹ is hydrogen or C₁-C₆-alkyl;
R² is hydrogen; C₁-C₁₈-alkyl; aryl or hetaryl, each of which may be substituted by C₁-C₈-alkyl, C₁-C₆-alkoxy, halogen, hydroxyl and/or cyano;
R³ is hydrogen; C₁-C₁₈-alkyl; aryl or hetaryl, each of which may be substituted by C₁-C₈-alkyl, C₁-C₆-alkoxy, halogen, hydroxyl and/or cyano; both R³ radicals may be joined to give a 5- to 7-membered heterocyclic radical which contains the nitrogen atom and is bonded via it;
n, n' are each 1, 2, 3 or 4, and n ≠ n';
m is from 0 to 6,
which comprises
a1) initially reacting a rylene derivative monobrominated in the peri-position of the general formula II' 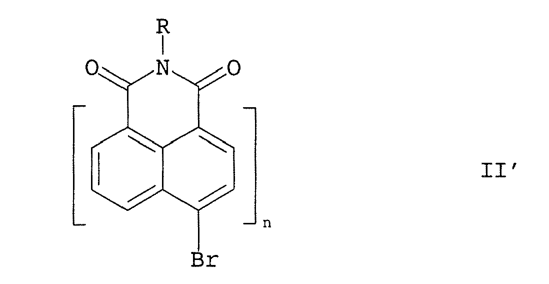 with excess 1,5-diaminoanthraquinone in a first cross-coupling reaction in the presence of an aprotic organic solvent, of a transition metal catalyst system and of a base,
a2) reacting the aminorylenanthramine obtained in step a) of the general formula IIIa 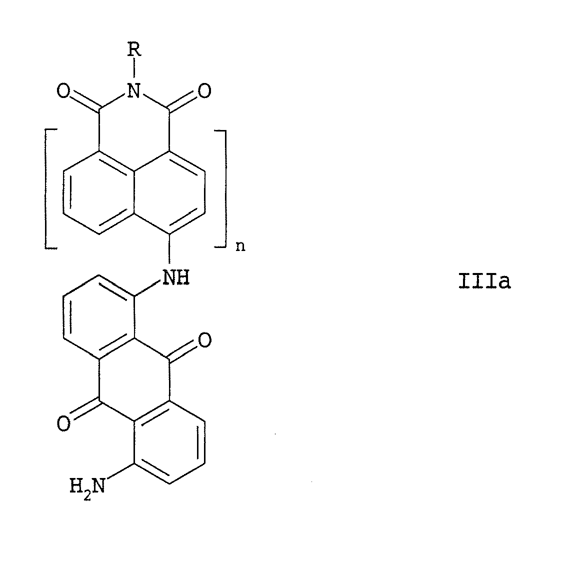 with a rylene derivative monobrominated in the peri-position of the general formula II'' 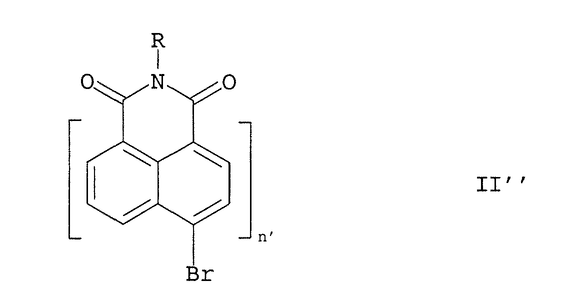 in the presence of an aprotic organic solvent, of a transition metal catalyst and of a base in a second cross-coupling reaction,
b) cyclizing the rylenanthramine formed in step a) of the general formula III''' 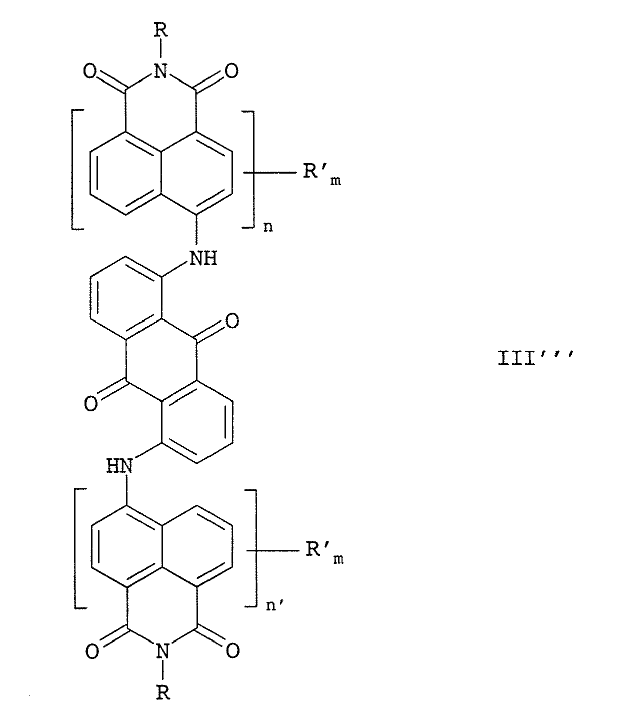 in the presence of a polar organic solvent and of a base to give the rylene dye of the formula I''' which is unsubstituted in the rylene core and where m is 0, and
c) if desired, converting the rylene dye I''' unsubstituted in the rylene core and obtained in step b) to the rylene dye of the formula I''' brominated in the rylene core where R' is bromine and m does not equal 0 by reacting with elemental bromine, and
d) if desired, converting the rylene dye I''' brominated in the rylene core and obtained in step c)
d1) by reacting with a compound of the general formula IV 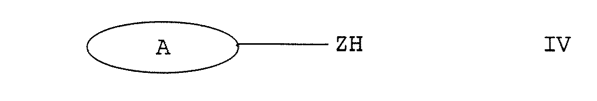 where Z is sulfur or oxygen and the ring A is an aryl or hetaryl radical, each of which may be mono- or polysubstituted by C₁-C₁₂-alkyl, C₁-C₁₂-alkoxy, cyano, -CONHR² and/or -NHCOR²,
in the presence of an inert nitrogen-basic organic solvent and of a base to give the rylene dye of the formula I''' which is substituted in the rylene core and where R' is aryloxy, arylthio, hetaryloxy or hetarylthio, each of which may be mono- or polysubstituted by C₁-C₁₂-alkyl, C₁-C₁₂-alkoxy, cyano, -CONHR² and/or -NHCOR², and m does not equal 0,
d2) by reacting with copper(I) cyanide in the presence of a dipolar aprotic organic solvent to give the rylene dye of the formula I''' which is substituted in the rylene core and where R' is cyano and m does not equal 0,
d3) by reacting with an alkyne of the general formula V 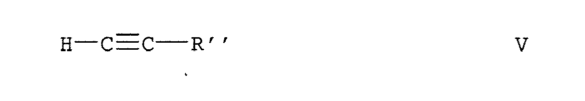 where R'' is a C₁-C₁₆-alkyl radical which may be interrupted by one or more -O-, -S-, -NR¹-, -CO- and/or -SO₂- moieties and may be mono- or polysubtituted by -COOR¹, -SO₃R¹, hydroxyl, cyano, C₁-C₆-alkoxy, C₅-C₈-cycloalkyl, aryl and/or a 5- to 7-membered heterocyclic radical which is bonded via a nitrogen atom and may comprise further heteroatoms and be aromatic, in the presence of an aprotic organic solvent, of a palladium complex as a catalyst, of a copper salt as a cocatalyst and of a base to give the rylene dye of the formula I''' which is substituted in the rylene core and where R' is -C≡C-R'' and m does not equal 0, or
d4) by reacting with ammonia or an amine of the general formula VI 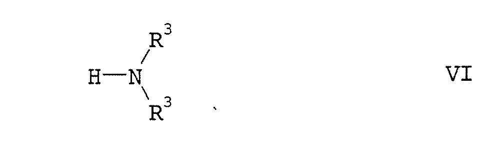 in the presence of a dipolar aprotic organic solvent to give the rylene dye of the formula I''' which is substituted in the rylene core and where R' is -NR³₂ and m does not equal 0.

6. The use of rylene dyes of the general formula I as claimed in claim 1 or 2 for coloring high molecular weight organic and inorganic materials.

7. The use as claimed in claim 6, wherein plastics, paints, printing inks and oxidic layer systems are colored.

8. The use of rylene dyes of the general formula I as claimed in claim 1 or 2 as dispersants, pigment additives for organic pigments and intermediates for the preparation of pigment additives.

9. The use of rylene dyes of the general formula I as claimed in claim 1 or 2 for producing aqueous polymer dispersions which are colored or absorb in the near infrared region of the electromagnetic spectrum.

10. The use of rylene dyes of the general formula I as claimed in claim 1 or 2 as photoconductors in electrophotography.

## Revendications

1. Colorants de rylène de formule générale I : 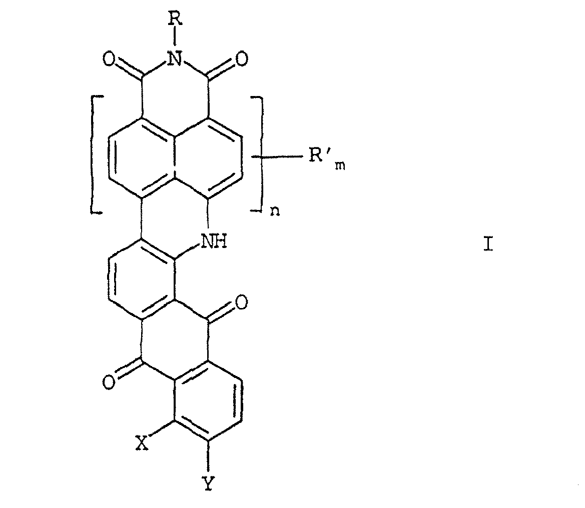 dans laquelle les variables ont la signification suivante :
R est de l'hydrogène;
un alkyle en C₁-C₃₀, dont la chaîne carbonée peut être interrompue par un ou plusieurs groupements -O-, -S-, -NR¹-, -CO- et/ou -SO₂- et qui peut être substitué une ou plusieurs fois par un groupement carboxy, sulfo, hydroxy, cyano, alcoxy en C₁-C₆ et/ou un radical hétérocyclique à 5 à 7 éléments, relié via un atome d'azote, qui peut contenir d'autres hétéroatomes et être aromatique;
un cycloalkyle en C₅-C₈, dont l'ossature carbonée peut être interrompue par un ou plusieurs groupements -O-, -S- et/ou -NR¹- et qui peut être substitué une ou plusieurs fois par un alkyle en C₁-C₆;
un aryle ou un hétaryle, qui peut être substitué, respectivement, une ou plusieurs fois par un groupement alkyle en C₁-C₁₈, alcoxy en C₁-C₆, halogène, hydroxy, cyano, carboxy, -CONHR², -NHCOR² et/ou arylazo ou hétarylazo, qui peut être substitué, respectivement, par un groupement alkyle en C₁-C₁₀, alcoxy en C₁-C₆, halogène, hydroxy, cyano et/ou carboxy;
R' est le brome; un cyano; -NR³₂;
un aryloxy, arylthio, hétaryloxy ou hétarylthio, qui peut être substitué, respectivement, une ou plusieurs fois par un groupement alkyle en C₁-C₁₂, alcoxy en C₁-C₁₂, cyano, -CONHR² et/ou -NHCOR²;
un alc-1-inyle en C₃-C₁₈, dont la chaîne carbonée peut être interrompue par un ou plusieurs groupements -O-, -S-, -NR¹-, -CO- et/ou -SO₂- et qui peut être substitué une ou plusieurs fois par un groupement -COOR¹, -SO₃R¹, hydroxy, cyano, alcoxy en C₁-C₆, cycloalkyle en C₅-C₈, aryle et/ou un radical hétérocyclique à 5 à 7 éléments, lié par un atome d'azote, qui peut contenir d'autres hétéroatomes et être aromatique;
R¹ est de l'hydrogène ou un alkyle en C₁-C₆;
R² est de l'hydrogène; un groupement alkyle en C₁₋C₁₈; aryle ou hétaryle, qui peut être substitué, respectivement, par un groupement alkyle en C₁-C₈, alcoxy en C₁-C₆, halogène, hydroxy et/ou cyano;
R³ est de l'hydrogène; un groupement alkyle en C₁₋C₁₈; aryle ou hétaryle, qui peut être substitué respectivement par un alkyle en C₁-C₈, alcoxy en C₁-C₆, halogène, hydroxy et/ou cyano; les deux radicaux R³ étant reliés à un radical hétérocyclique à 5 à 7 éléments, contenant l'atome d'azote et lié via celui-ci;
X, Y sont tous deux de l'hydrogène ou, en formant un cycle à 6 éléments, sont reliés ensemble pour donner un radical de formule Ia : 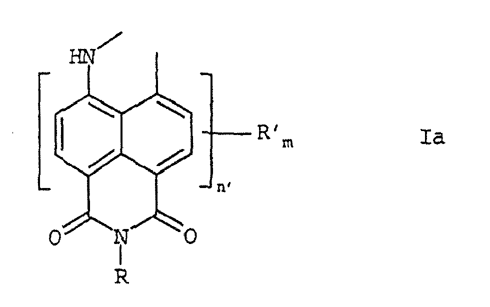 où X correspond au groupement -NH- et Y à l'autre liaison chimique libre;
n est 2, 3, 4 ou également 1, si X et Y désignent un radical de formule Ia;
n' est 1 à 4;
m est 0 à 6.

2. Colorants de rylène de formule I selon la revendication 1, dans laquelle les variables ont la signification suivante :
R est un alkyle en C₁-C₃₀, dont la chaîne carbonée peut être interrompue par un ou plusieurs groupements -O-, -S-, -NR¹-, -CO- et/ou -SO₂- et qui peut être substitué une ou plusieurs fois par un groupement hydroxy, cyano, alcoxy en C₁-C₆ et/ou un radical hétérocyclique à 5 à 7 éléments, lié via un atome d'azote, qui peut contenir d'autres hétéroatomes et être aromatique;
un aryle ou un hétaryle, qui peut être substitué, respectivement, une ou plusieurs fois par un groupement alkyle en C₁-C₁₈, alcoxy en C₁-C₆, hydroxy, cyano, -CONHR² et/ou -NHCOR²;
R' est le brome ou un aryloxy, qui peut être substitué une ou plusieurs fois par un groupement alkyle en C₁-C₁₂, alcoxy en C₁-C₆ et/ou cyano;
R¹ est de l'hydrogène ou un alkyle en C₁-C₆;
R² est de l'hydrogène; un groupement alkyle en C₁₋C₁₈; aryle ou hétaryle, qui peut être substitué, respectivement, par un groupement alkyle en C₁-C₈, alcoxy en C₁-C₆ et/ou cyano;
X, Y sont tous deux de l'hydrogène ou, en formant un cycle à 6 éléments, sont reliés ensemble pour donner un radical de formule Ia : 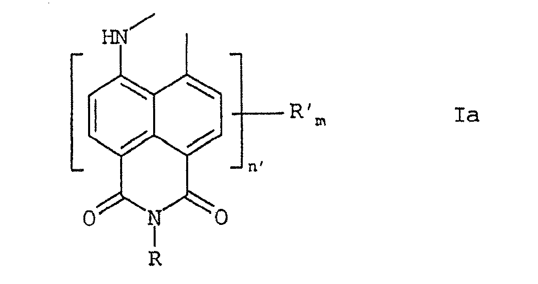 où X correspond au groupement -NH- et Y à l'autre liaison chimique libre;
n est 2, 3, 4 ou également 1, si X et Y désignent un radical de formule Ia;
n' est 1 à 4;
m est 0 à 6.

3. Procédé pour fabriquer des colorants de rylène de formule générale I' : 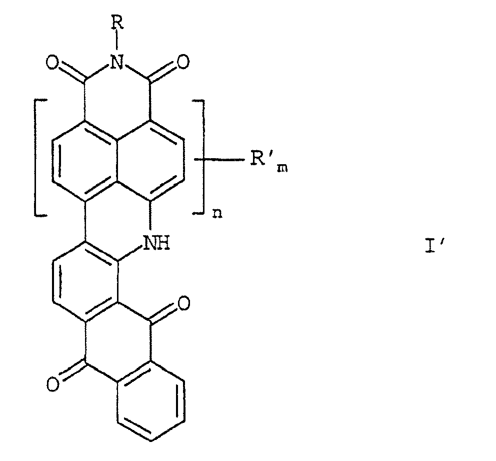 dans laquelle les variables ont la signification suivante :
R est de l'hydrogène;
un alkyle en C₁-C₃₀, dont la chaîne carbonée peut être interrompue par un ou plusieurs groupements -O-, -S-, -NR¹-, -CO- et/ou -SO₂- et qui peut être substitué une ou plusieurs fois par un groupement carboxy, sulfo, hydroxy, cyano, alcoxy en C₁-C₆ et/ou un radical hétérocyclique à 5 à 7 éléments, lié via un atome d'azote, qui peut contenir d'autres hétéroatomes et être aromatique;
un cycloalkyle en C₅-C₈, dont l'ossature carbonée peut être interrompue par un ou plusieurs groupements
-O-, -S- et/ou -NR¹- et qui peut être substitué une ou plusieurs fois par un alkyle en C₁-C₆;
un aryle ou un hétaryle, qui peut être substitué, respectivement, une ou plusieurs fois par un groupement alkyle en C₁-C₁₈, alcoxy en C₁-C₆, halogène, hydroxy, cyano, carboxy, -CONHR², -NHCOR² et/ou arylazo ou hétarylazo, qui peut être substitué, respectivement, par un groupement alkyle en C₁-C₁₀, alcoxy en C₁-C₆, halogène, hydroxy, cyano ou carboxy;
R' est le brome; un cyano; -NR³₂;
un groupement aryloxy, arylthio, hétaryloxy ou hétarylthio, qui peut être substitué, respectivement, une ou plusieurs fois par un groupement alkyle en C₁₋C₁₂, alcoxy en C₁-C₁₂, cyano, -CONHR² et/ou -NHCOR²;
un alc-1-inyle en C₃-C₁₈, dont la chaîne carbonée peut être interrompue par un ou plusieurs groupements -O-, -S-, -NR¹-, -CO- et/ou -SO₂- et qui peut être substitué une ou plusieurs fois par un groupement -COOR¹, -SO₃R¹, hydroxy, cyano, alcoxy en C₁-C₆, cycloalkyle en C₅-C₈, aryle et/ou un radical hétérocyclique à 5 à 7 éléments, lié via un atome d'azote, qui peut contenir d'autres hétéroatomes et être aromatique;
R¹ est de l'hydrogène ou un alkyle en C₁-C₆;
R² est de l'hydrogène; un groupement alkyle en C₁₋C₁₈; aryle ou hétaryle, qui peut être substitué, respectivement, par un groupement alkyle en C₁-C₈, alcoxy en C₁-C₆, halogène, hydroxy ou cyano;
R³ est de l'hydrogène; un groupement alkyle en C₁₋C₁₈; aryle ou hétaryle, qui peut être substitué, respectivement, par un groupement alkyle en C₁-C₈, alcoxy en C₁-C₆, halogène, hydroxy et/ou cyano; les deux radicaux R³ étant reliés à un radical hétérocyclique à 5 à 7 éléments, contenant l'atome d'azote et lié via celui-ci;
n est 2, 3 ou 4;
m est 0 à 6;
**caractérisé en ce que**
a) on fait réagir un dérivé de rylène monobromé en position péri de formule générale II' : 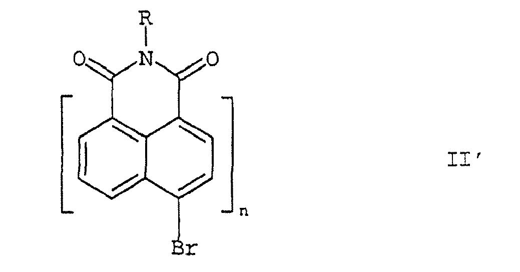 en présence d'un solvant organique aprotique, d'un système catalytique de métal de transition et d'une base dans une réaction de couplage croisé avec une 1-amino-anthraquinone,
b) on cyclise l'anthramine de rylène formée à l'étape a) et de formule générale III' : 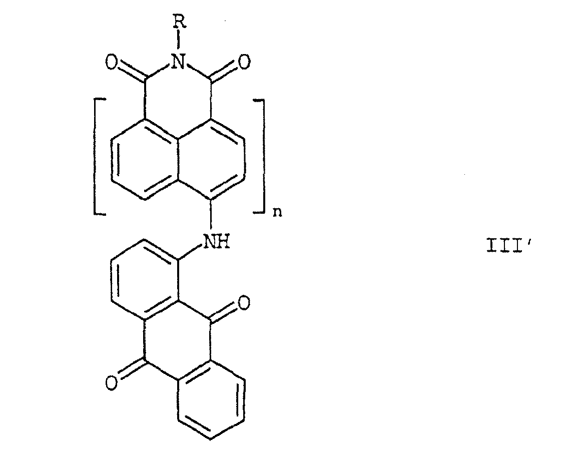 en présence d'un solvant organique polaire et d'une base en colorant de rylène non substitué dans le noyau de rylène de formule I', dans laquelle m est 0, et
c) on transforme éventuellement le colorant de rylène I' non substitué dans le noyau de rylène, obtenu à l'étape b), par réaction avec du brome élémentaire, en colorant de rylène bromé dans le noyau de rylène de formule I', dans laquelle R' est un atome de brome et m est différent de 0, et
d) on transforme éventuellement le colorant de rylène I' bromé dans le noyau de rylène obtenu à l'étape c),
d1) par réaction avec un composé de formule générale IV : 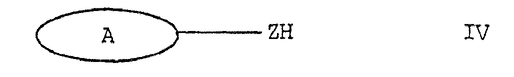 dans laquelle Z représente de l'oxygène ou du soufre et le cycle A un radical aryle ou hétaryle, qui peut être substitué, respectivement, une ou plusieurs fois par un groupement alkyle en C₁-C₁₂, alcoxy en C₁-C₁₂, cyano, -CONHR² et/ou -NHCOR²,
en présence d'un solvant organique inerte à base azotée et d'une base en colorant de rylène substitué dans le noyau de rylène de formule I', dans laquelle R' est un groupement aryloxy, arylthio, hétaryloxy ou hétarylthio, qui peut être substitué, respectivement, une ou plusieurs fois par un groupement alkyle en C₁₋C₁₂, alcoxy en C₁-C₁₂, cyano, -CONHR² et/ou -NHCOR², et m est différent de 0,
d2) par réaction avec du cyanure de cuivre (I) en présence d'un solvant organique aprotique dipolaire en colorant de rylène substitué dans le noyau de rylène de formule I', dans laquelle R' est un groupement cyano et m est différent de 0, d3) par réaction avec un alcyne de formule générale V : 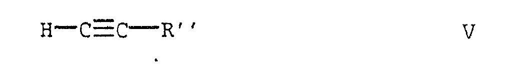 dans laquelle R" est un radical alkyle en C₁-C₁₆, qui peut être interrompu par un ou plusieurs groupements -O-, -S-, -NR¹-, -CO- et/ou -SO₂- et peut être substitué une ou plusieurs fois par un groupement -COOR¹, -SO₃R¹, hydroxy, cyano, alcoxy en C₁-C₆, cycloalkyle en C₅-C₈, aryle et/ou un radical hétérocyclique à 5 à 7 éléments, lié via un atome d'azote, qui peut contenir d'autres hétéroatomes et être aromatique,
en présence d'un solvant organique aprotique, d'un complexe de palladium comme catalyseur, d'un sel de cuivre comme co-catalyseur et d'une base en colorant de rylène substitué dans le noyau de rylène de formule I', dans laquelle R' est un groupement -C≡C-R" et m est différent de 0, ou
d4) par réaction avec de l'ammoniac ou une amine de formule générale VI : 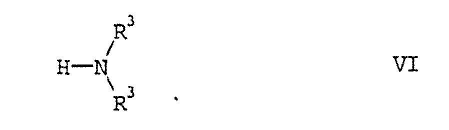 en présence d'un solvant organique dipolaire aprotique en colorant de rylène substitué dans le noyau de rylène de formule I', dans laquelle R' est un groupement -NR³₂ et m est différent de 0.

4. Procédé pour fabriquer des colorants de rylène symétriques de formule générale I" : 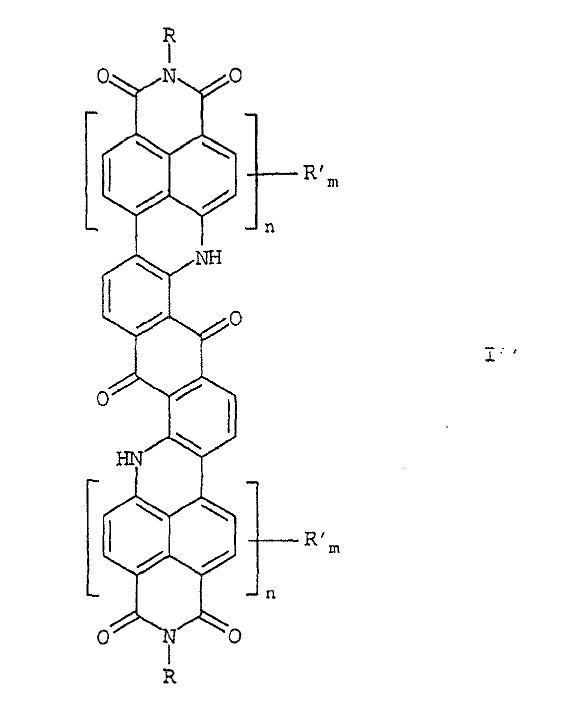 dans laquelle les variables ont la signification suivante :
R est de l'hydrogène;
un alkyle en C₁-C₃₀, dont la chaîne carbonée peut être interrompue par un ou plusieurs groupements -O-, -S-, -NR¹-, -CO- et/ou -SO₂- et qui peut être substitué une ou plusieurs fois par un groupement carboxy, sulfo, hydroxy, cyano, alcoxy en C₁-C₆ et/ou un radical hétérocyclique à 5 à 7 éléments, lié via un atome d'azote, qui peut contenir d'autres hétéroatomes et être aromatique;
un cycloalkyle en C₅-C₈, dont l'ossature carbonée peut être interrompue par un ou plusieurs groupements
-O-, -S- et/ou -NR¹- et peut être substitué une ou plusieurs fois par un alkyle en C₁-C₆;
un aryle ou un hétaryle, qui peut être substitué, respectivement, une ou plusieurs fois par un groupement alkyle en C₁-C₁₈, alcoxy en C₁-C₆, halogène, hydroxy, cyano, carboxy, -CONHR², -NHCOR² et/ou arylazo ou hétarylazo, qui peut être substitué, respectivement, par un groupement alkyle en C₁-C₁₀, alcoxy en C₁-C₆, halogène, hydroxy, cyano et/ou carboxy;
R' est le brome; un cyano; -NR³₂;
un groupement aryloxy, arylthio, hétaryloxy ou hétarylthio, qui peut être substitué, respectivement, une ou plusieurs fois par un groupement alkyle en C₁₋C₁₂, alcoxy en C₁-C₁₂, cyano, -CONHR² et/ou -NHCOR²;
un alc-1-inyle en C₃-C₁₈, dont la chaîne carbonée peut être interrompue par un ou plusieurs groupements -O-, -S-, -NR¹-, -CO- et/ou -SO₂- et peut être substitué une ou plusieurs fois par un groupement -COOR¹, -SO₃R¹, hydroxy, cyano, alcoxy en C₁-C₆, cycloalkyle en C₅-C₈, aryle et/ou un radical hétérocyclique à 5 à 7 éléments, lié via un atome d'azote, qui peut contenir d'autres hétéroatomes et être aromatique;
R¹ est de l'hydrogène ou un alkyle en C₁-C₆;
R² est de l'hydrogène; un groupement alkyle en C₁₋C₁₈; aryle ou hétaryle, qui peut être substitué, respectivement, par un groupement alkyle en C₁-C₈, alcoxy en C₁-C₆, halogène, hydroxy et/ou cyano;
R³ est de l'hydrogène; un groupement alkyle en C₁₋C₁₈; aryle ou hétaryle, qui peut être substitué, respectivement, par un alkyle en C₁-C₈, alcoxy en C₁-C₆, halogène, hydroxy et/ou cyano; les deux radicaux R³ étant reliés à un radical hétérocyclique à 5 à 7 éléments, contenant l'atome d'azote et lié par celui-ci;
n est 1, 2, 3 ou 4;
m est 0 à 6;
**caractérisé en ce que**
a) on fait réagir un dérivé de rylène monobromé en position péri de formule générale II' : 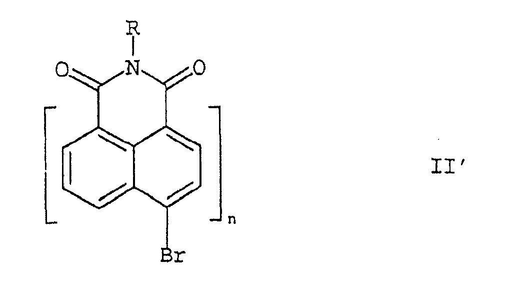 en présence d'un solvant organique aprotique, d'un système catalytique de métal de transition et d'une base dans une réaction de couplage croisé avec une 1,5-diamino-anthraquinone,
b) on cyclise l'anthramine de rylène formée à l'étape a) de formule générale III" : 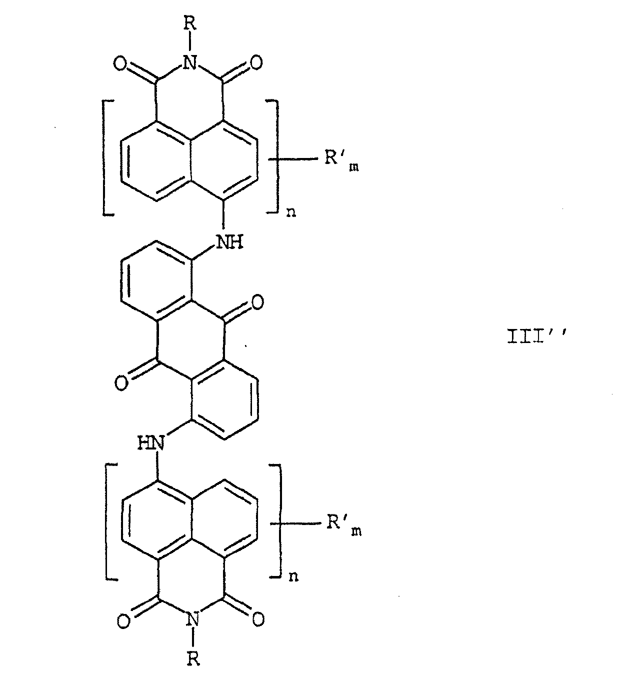 en présence d'un solvant organique polaire et d'une base en colorant de rylène de formule I", dans laquelle m est 0, et
c) on transforme éventuellement le colorant de rylène I' non substitué dans le noyau de rylène, obtenu à l'étape b), par réaction avec du brome élémentaire en colorant de rylène bromé dans le noyau de rylène de formule I", dans laquelle R' est un atome de brome et m est différent de 0, et
d) on transforme éventuellement le colorant de rylène I'' bromé dans le noyau de rylène, obtenu à l'étape c), d1) par réaction avec un composé de formule générale IV : 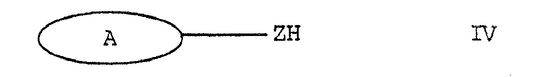 dans laquelle Z représente de l'oxygène ou du soufre et le cycle A un radical aryle ou hétaryle, qui peut être substitué, respectivement, une ou plusieurs fois par un groupement alkyle en C₁-C₁₂, alcoxy en C₁-C₁₂, cyano, -CONHR₂ et/ou -NHCOR₂,
en présence d'un solvant organique inerte à base azotée et d'une base en colorant de rylène substitué dans le noyau de rylène de formule I', dans laquelle R' est un groupement aryloxy, arylthio, hétaryloxy ou hétarylthio, qui peut respectivement être substitué une ou plusieurs fois par un groupement alkyle en C₁-C₁₂, alcoxy en C₁-C₁₂, cyano, -CONHR² et/ou -NHCOR², et m est différent de 0,
d2) par réaction avec du cyanure de cuivre (I) en présence d'un solvant organique dipolaire aprotique en colorant de rylène substitué dans le noyau de rylène de formule I", dans laquelle R' est un groupement cyano et m est différent de 0,
d3) par réaction avec un alcyne de formule générale V : 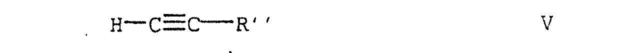 dans laquelle R" est un radical alkyle en C₁-C₁₆, qui peut être interrompu par un ou plusieurs groupements -O-, -S-, -NR¹-, -CO- et/ou -SO₂- et être substitué une ou plusieurs fois par un groupement -COOR¹, -SO₃R¹, hydroxy, cyano, alcoxy en C₁-C₆, cycloalkyle en C₅-C₈, aryle et/ou un radical hétérocyclique à 5 à 7 éléments, lié via un atome d'azote, qui peut contenir d'autres hétéroatomes et être aromatique;
en présence d'un solvant organique aprotique, d'un complexe de palladium comme catalyseur, d'un sel de cuivre comme co-catalyseur et d'une base en colorant de rylène substitué dans le noyau de rylène de formule I", dans laquelle R' est un groupement -C≡C-R" et m est différent de 0, ou
d4) par réaction avec de l'ammoniac ou une amine de formule générale VI : 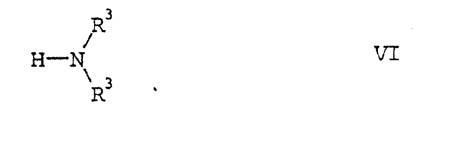 en présence d'un solvant organique dipolaire aprotique en colorant de rylène substitué dans le noyau de rylène de formule I", dans laquelle R' est un groupement -NR³₂ et m est différent de 0.

5. Procédé pour fabriquer des colorants de rylène asymétriques de formule générale I'": 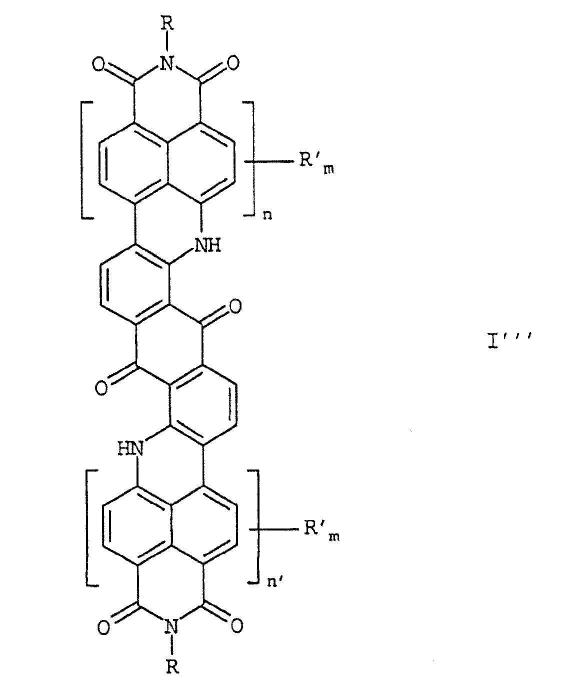 dans laquelle les variables ont la signification suivante :
R est de l'hydrogène;
un alkyle en C₁-C₃₀, dont la chaîne carbonée peut être interrompue par un ou plusieurs groupements -O-, -S-, -NR¹-, -CO- et/ou -SO₂- et peut être substitué une ou plusieurs fois par un groupement carboxy, sulfo, hydroxy, cyano, alcoxy en C₁-C₆ et/ou un radical hétérocyclique à 5 à 7 éléments, lié via un atome d'azote, qui peut contenir d'autres hétéroatomes et être aromatique;
un cycloalkyle en C₅-C₈, dont l'ossature carbonée peut être interrompue par un ou plusieurs groupements -O-, -S- et/ou -NR¹- et peut être substitué une ou plusieurs fois par un alkyle en C₁-C₆;
un aryle ou un hétaryle, qui peut être substitué, respectivement, une ou plusieurs fois par un groupement alkyle en C₁-C₁₈, alcoxy en C₁-C₆, halogène, hydroxy, cyano, carboxy, -CONHR², -NHCOR² et/ou arylazo ou hétarylazo, qui peut être substitué, respectivement, par un groupement alkyle en C₁-C₁₀, alcoxy en C₁-C₆, halogène, hydroxy, cyano et/ou carboxy;
R' est le brome; un cyano; -NR³₂;
un groupement aryloxy, arylthio, hétaryloxy ou hétarylthio, qui peut être substitué, respectivement, une ou plusieurs fois par un groupement alkyle en C₁₋C₁₂, alcoxy en C₁-C₁₂, cyano, -CONHR² et/ou -NHCOR²;
un alc-1-inyle en C₃-C₁₈, dont la chaîne carbonée peut être interrompue par un ou plusieurs groupements
-O-, -S-, -NR¹-, -CO- et/ou -SO₂- et peut être substitué une ou plusieurs fois par un groupement -COOR¹, -SO₃R¹, hydroxy, cyano, alcoxy en C₁-C₆, cycloalkyle en C₅-C₈, aryle et/ou un radical hétérocyclique à 5 à 7 éléments, lié via un atome d'azote, qui peut contenir d'autres hétéroatomes et être aromatique;
R¹ est de l'hydrogène ou un alkyle en C₁-C₆;
R² est de l'hydrogène; un groupement alkyle en C₁₋C₁₈; aryle ou hétaryle, qui peut être substitué, respectivement, par un groupement alkyle en C₁-C₈, alcoxy en C₁-C₆, halogène, hydroxy et/ou cyano;
R³ est de l'hydrogène; un groupement alkyle en C₁₋C₁₈; aryle ou hétaryle, qui peut être substitué, respectivement, par un alkyle en C₁-C₈, alcoxy en C₁-C₆, halogène, hydroxy et/ou cyano; les deux radicaux R³ étant reliés à un radical hétérocyclique à 5 à 7 éléments, contenant l'atome d'azote et lié par celui-ci;
n, n' sont 1, 2, 3 ou 4, où n ≠ n';
m est 0 à 6;
**caractérisé en ce que**
a1) on fait réagir un dérivé de rylène monobromé en position péri de formule générale II' : 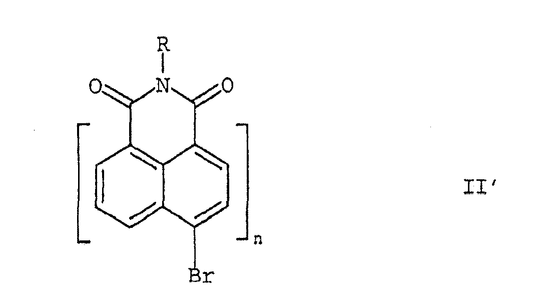 en présence d'un solvant organique aprotique, d'un système catalytique de métal de transition et d'une base dans une réaction de couplage croisé tout d'abord avec un excès de 1,5-diaminoanthraquinone,
a2) on fait réagir l'aminorylènanthramine formée à l'étape a) de formule générale IIIa : 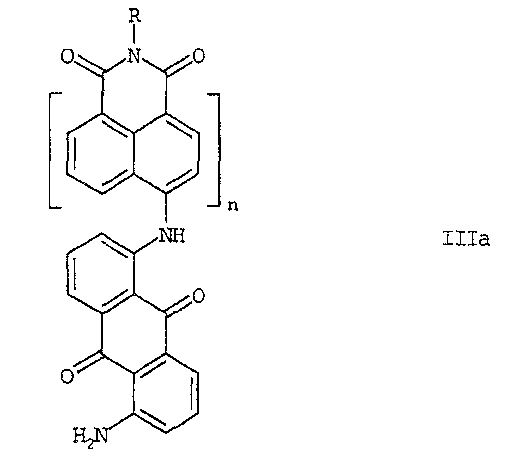 en présence d'un solvant organique aprotique, d'un système catalytique de métal de transition et d'une base dans une deuxième réaction de couplage croisé avec un dérivé de rylène monobromé en position péri de formule générale II" : 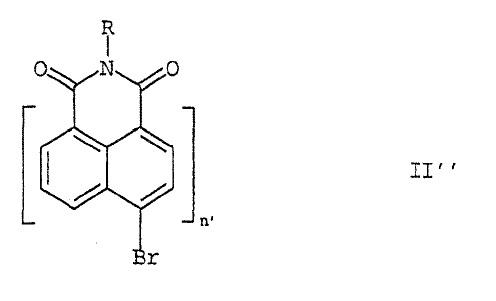
b) on cyclise l'anthramine de rylène formée à l'étape a) de formule générale III''' : 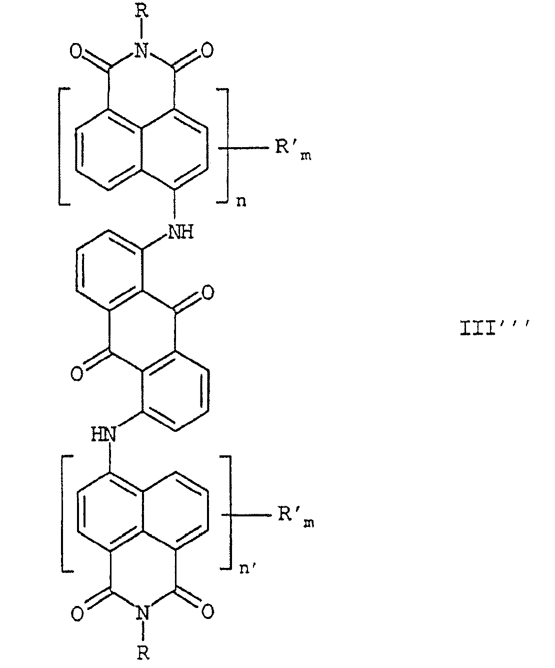 en présence d'un solvant organique polaire et d'une base en colorant de rylène non substitué dans le noyau de rylène de formule I''', dans laquelle m est 0, et
c) on transforme éventuellement le colorant de rylène I''' non substitué dans le noyau de rylène, obtenu à l'étape b), par réaction avec du brome élémentaire en colorant de rylène bromé dans le noyau de rylène de formule I''', dans laquelle R' est un atome de brome et m est différent de 0, et
d) on transforme éventuellement le colorant de rylène I''' bromé dans le noyau de rylène, obtenu à l'étape c),
d1) par réaction avec un composé de formule générale IV : 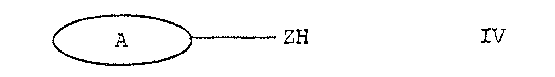 dans laquelle Z représente de l'oxygène ou du soufre et le cycle A est un radical aryle ou hétaryle, qui peut être substitué, respectivement, une ou plusieurs fois par un groupement alkyle en C₁-C₁₂, alcoxy en C₁-C₁₂, cyano, CONHR² et/ou -NHCOR²,
en présence d'un solvant organique inerte à base azotée et d'une base en colorant de rylène substitué dans le noyau de rylène de formule I''', dans laquelle R' est un groupement aryloxy, arylthio, hétaryloxy ou hétarylthio, qui peut être substitué, respectivement, une ou plusieurs fois par un groupement alkyle en C₁-C₁₂, alcoxy en C₁-C₁₂, cyano, -CONHR₂ et/ou -NHCOR², et m est différent de 0,
d2) par réaction avec du cyanure de cuivre (I) en présence d'un solvant organique dipolaire aprotique en colorant de rylène substitué dans le noyau de rylène de formule I''', dans laquelle R' est un groupement cyano et m est différent de 0,
d3) par réaction avec un alcyne de formule générale V : 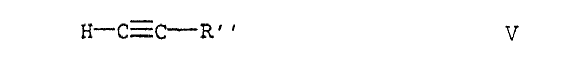 dans laquelle R" est un radical alkyle en C₁-C₁₆, qui peut être interrompu par un ou plusieurs groupements -O-, -S-, -NR¹-, -CO- et/ou -SO₂- et être substitué une ou plusieurs fois par un groupement -COOR¹, -SO₃R¹, hydroxy, cyano, alcoxy en C₁-C₆, cycloalkyle en C₅-C₈, aryle et/ou un radical hétérocyclique à 5 à 7 éléments, lié via un atome d'azote, qui peut contenir d'autres hétéroatomes et être aromatique,
en présence d'un solvant organique aprotique, d'un complexe de palladium comme catalyseur, d'un sel de cuivre comme co-catalyseur et d'une base en colorant de rylène substitué dans le noyau de rylène de formule I'", dans laquelle R' est un groupement -C≡C-R" et m est différent de 0, ou
d4) par réaction avec de l'ammoniac ou une amine de formule générale VI : 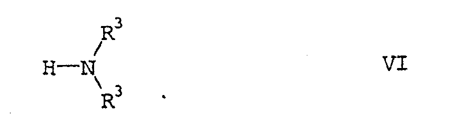 en présence d'un solvant organique dipolaire aprotique en colorant de rylène substitué dans le noyau de rylène de formule I''', dans laquelle R' est un groupement -NR³₂ et m est différent de 0.

6. Utilisation de colorants de rylène de formule générale I selon la revendication 1 ou 2 pour colorer des matériaux organiques et anorganiques de poids moléculaires élevés.

7. Utilisation selon la revendication 6, **caractérisée en ce que** l'on teint des matériaux synthétiques, des vernis, des couleurs d'impression et des systèmes stratifiés oxydés.

8. Utilisation de colorants de rylène de formule générale I selon la revendication 1 ou 2 sous forme d'agents auxiliaires dispersants, d'additifs pour pigments organiques et de produits intermédiaires pour fabriquer des additifs de pigments.

9. Utilisation de colorants de rylène de formule générale I selon la revendication 1 ou 2 pour fabriquer des dispersions polymères aqueuses colorées ou absorbant dans la plage du proche infrarouge du spectre électromagnétique.

10. Utilisation de colorants de rylène de formule générale I selon la revendication 1 ou 2 comme photoconducteurs en électrophotographie.
